(19) Europäisches Patentamt
European Patent Office
Office européen des brevets

(11) **EP 4 664 092 A1**

(12) **EUROPEAN PATENT APPLICATION**

(43) Date of publication:
**17.12.2025  Bulletin 2025/51**

(21) Application number: **25180961.2**

(22) Date of filing: **05.06.2025**

(51) International Patent Classification (IPC):
***G01N 15/1404*** (2024.01)   ***G01N 15/1492*** (2024.01)

(52) Cooperative Patent Classification (CPC):
**G01N 15/1492; G01N 15/1404;** B01L 2200/0652;
G01N 2015/1006

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **11.06.2024  US 202463658746 P**

(71) Applicant: **BECTON, DICKINSON AND COMPANY**
**Franklin Lakes NJ 07417-1880 (US)**

(72) Inventors:
• **Petersen, Timothy W.**
**Washington, 98177 (US)**
• **Welsh, Joshua Aden**
**Walnut Creek, 94597 (US)**
• **Owsley, Keegan**
**Campbell, 95008 (US)**

(74) Representative: **Bals & Vogel Patentanwälte PartGmbB**
**Konrad-Zuse-Str. 4**
**44801 Bochum (DE)**

Remarks:
A request for correction of the description and of the drawings has been filed pursuant to Rule 139 EPC. A decision on the request will be taken during the proceedings before the Examining Division (Guidelines for Examination in the EPO, A-V, 3.).

(54) **FLOW CELLS HAVING OPTIMIZED HIGH VOLTAGE ELECTRODES, FLOW CYTOMETERS INCLUDING THE SAME, AND METHODS OF USE THEREOF**

(57)    Droplet deflectors having optimized deflection plates are provided. Droplet deflectors of interest include droplet deflectors with deflection plates configured for high-angular deflection of a droplet flow stream. Droplet deflectors of interest further include droplet deflectors with deflection plates that comprise a shape that corresponds to a path of the deflected droplet flow stream or deflection plates configured to apply a deflection force to a flow stream at a plurality of different angles. Droplet deflectors of interest still further include droplet deflectors configured to apply a constant deflection force to the deflected droplet flow stream from a plurality of different lateral positions, including, for example, where the deflector plates are segmented deflector plates. Flow cytometers having the subject droplet deflectors and methods of use and configuration or design thereof are also provided.

FIG. 1D

EP 4 664 092 A1

# Description

## CROSS-REFERENCE TO RELATED APPLICATION

Pursuant to 35 U.S.C. § 119 (e), this application claims priority to the filing dates of United States Provisional Patent Application Serial No. 63/658,746 filed June 11, 2024, the disclosure of which application is incorporated herein by reference in their entirety

## INTRODUCTION

The characterization of analytes in biological fluids has become an important part of biological research, medical diagnoses and assessments of overall health and wellness of a patient. Detecting analytes in biological fluids, such as human blood or blood derived products, can provide results that may play a role in determining a treatment protocol of a patient having a variety of disease conditions.

Flow cytometry is a technique used to characterize and often times sort biological material, such as cells of a blood sample or particles of interest in another type of biological or chemical sample. A flow cytometer typically includes a sample reservoir for receiving a fluid sample, such as a blood sample, and a sheath reservoir containing a sheath fluid. The flow cytometer transports the particles (including cells) in the fluid sample as a cell stream to a flow cell, while also directing the sheath fluid to the flow cell. To characterize the components of the flow stream, the flow stream is irradiated with light. Variations in the materials in the flow stream, such as morphologies or the presence of fluorescent labels, may cause variations in the observed light and these variations allow for characterization and separation. To characterize the components in the flow stream, light must impinge on the flow stream and be collected. Light sources in flow cytometers can vary and may include one or more broad spectrum lamps, light emitting diodes as well as single wavelength lasers. The light source is aligned with the flow stream and an optical response from the illuminated particles is collected and quantified.

Isolation of biological particles has been achieved by adding a sorting or collection capability to flow cytometers. Particles in a segregated stream, detected as having one or more desired characteristics, are individually isolated from the sample stream by mechanical or electrical removal. A common flow sorting technique utilizes drop sorting in which a fluid stream containing linearly segregated particles is broken into drops. The drops containing particles of interest are electrically charged and deflected into a collection tube by passage through an electric field. Typically, the linearly segregated particles in the stream are characterized as they pass through an observation point situated just below the nozzle tip. Once a particle is identified as meeting one or more desired criteria, the time at which it will reach the drop break-off point and break from the stream in a drop can be predicted. Ideally, a brief charge is applied to the fluid stream just before the drop containing the selected particle breaks from the stream and then grounded immediately after the drop breaks off. The drop to be sorted maintains an electrical charge as it breaks off from the fluid stream, and all other drops are left un-charged.

Modern high speed cell sorters are capable of measuring a large number or parameters per cell, such as 100 parameters per cell. They are capable of doing so at a high rate, such as at a rate of 10,000-25,000 cells/sec. Panel complexity associated with modern high speed cell sorters may utilize a high number of color panels for characterization of particles, such as cells, such as 50 color panels for characterization. In connection with such aspects of modern cell sorters, there is a need for the ability to sort many different particles, such as cells, during a sort, such as during operation of a high-speed cell sorter, e.g., in the context of collecting empirical data. Sort directions of existing high speed cell sorters are limited by the distance particles, e.g., cells, or droplets can be deflected from the center of a droplet flow stream, i.e., from the longitudinal axis of a droplet flow stream. That is, there is a need for the deflection of droplets be optimized or improved, meaning expanded to deflect droplets at high-angles relative to the longitudinal axis of the droplet flow stream or increased deposition distances from the longitudinal axis of the droplet flow stream, in some cases, while holding the length of a droplet deflector (i.e., the length of deflection plates along the longitudinal axis of the droplet flow stream) constant or substantially constant, e.g., for compatibility with existing cell sorters.

## SUMMARY

The inventors have realized that there is a need for optimized deflection of droplets of a flow stream. In particular, there is a need for droplet deflectors capable of high-angular deflection of a droplet flow stream. Embodiments of the present invention satisfy this need. In particular, embodiments of the present invention offer high-angular deflection of droplets of a flow stream. Such enhancements expand the range of potential sorting categories of particles, e.g., cells, of a sample by offering a wider variation of potential sorting categories, e.g., configured for sorting into a greater number of tubes or wells of a multi-well plate. High speed cell sorters comprising droplet deflectors of the present invention configured for high-angular deflection may offer the additional benefit of requiring less charge to be applied to sorted droplets of the flow stream. Such benefit may improve sort purity and yield.

Aspects of the disclosure include droplet deflectors comprising deflection plates configured for high-angular deflection of a droplet flow stream. Deflection plates of interest comprise a shape that corresponds to a path of the deflected droplet flow stream. In other cases, the deflection plates comprise a shape that minimizes a distance between the deflected droplet flow stream and a deflection plate of the droplet deflector over a length of the deflection plate. In still other cases, the deflection plates comprise a shape that maintains a constant buffer between the deflected droplet flow stream and a deflection plate of the droplet deflector over a length of the deflection plate. In embodiments, the deflection plates are configured to maximize a deflection force applied to the droplet flow stream at a plurality of different downstream positions. In some embodiments, the deflection plates comprise a shape configured to prevent a deflected droplet stream from colliding with the deflection plates. In other embodiments, the droplet deflector is configured such that the distance between the deflection plates minimally-increases at each of a plurality of downstream positions.

Deflection plates of interest comprise nonlinear surfaces or a spline. In some cases, the deflection plates are configured to apply a deflection force to a flow stream at a plurality of different angles. Such embodiments may comprise twisted deflection plates. In such cases, the twist angle may be 5 degrees or more or 30 degrees or more or 60 degrees or more, such as 90 degrees.

In embodiments, the droplet deflector is configured to apply a constant deflection force to the deflected droplet flow stream from a plurality of different lateral positions. In some cases, different lateral positions comprise different distances from a center line of the deflection plates. In other cases, the distance between the deflector plates increases at different downstream positions. In still other cases, the droplet deflector is configured such that different voltage potentials are applied to the deflector plates at different downstream positions. In embodiments, each deflector plate comprises two or more segments. In some cases, the segmented deflector plates comprise aligned, corresponding segments. Each segment may be electrically isolated from other segments. In still other cases, the droplet deflector is configured such that each segment of the segmented deflector plates is configured to receive a different electric potential. In additional cases, each segment is separated from other segments by an electrical insulator. In certain embodiments, the droplet deflector further comprises: a plurality of resistors connected in series. In some cases, each resistor of the plurality of resistors is electrically connected to a segment of a segmented deflector plate. In other cases, each segment is separated from other segments by a resistive dielectric. In still other cases, each segment of the segmented deflector plates is configured to receive an electric potential at a distinct magnitude based on distances between corresponding segments of the electrodes. Some embodiments further comprise: a voltage source operably connected to a deflector plate. Other embodiments further comprise: a voltage divider comprising a plurality of resistors connected in series. In some cases, each resistor of the plurality of resistors is electrically connected to a segment of a segmented deflector plate.

Embodiments of droplet deflectors comprising deflection plates configured for high-angular deflection of a droplet flow stream are configured to apply a deflection force sufficient to deflect a particle by 5 mm or more or 15 mm or more or 30 mm or more or from 5 mm to 100 mm. In some cases, droplet deflectors are configured to deposit droplets of the deflected droplet flow stream into each well within a row of a 96-well plate. Embodiments comprise deflector plates comprising metallic plates. In some cases, deflector plates have a width from 0.5 mm to 10 mm or a length from 1 mm to 25 mm or are spaced apart by 1 mm or more or by 3 mm or more or from 1 mm to 10 mm. In embodiments, the deflector plates are rectangular. Also provided are particle sorting modules comprising droplet deflectors according to embodiments and systems comprising droplet deflectors according to embodiments. Also provided are methods, including methods for sorting particles, using droplet deflectors according to embodiments.

**BRIEF DESCRIPTION OF THE FIGURES**

The disclosure may be best understood from the following detailed description when read in conjunction with the accompanying drawings. Included in the drawings are the following figures:

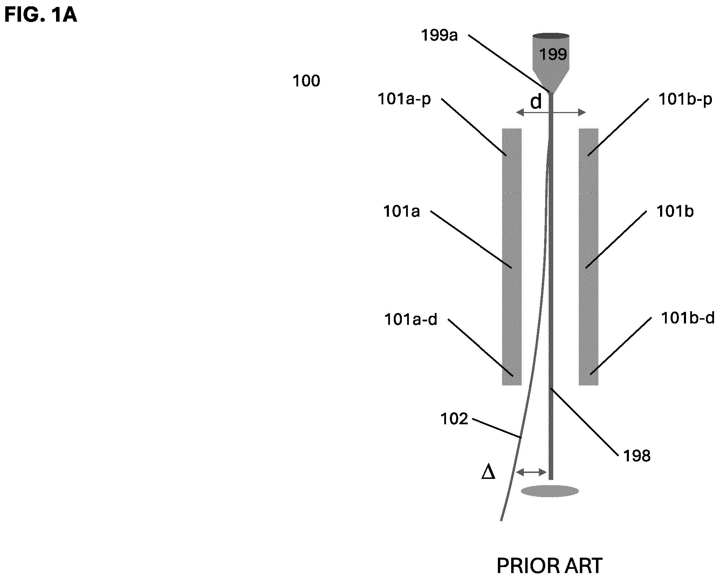

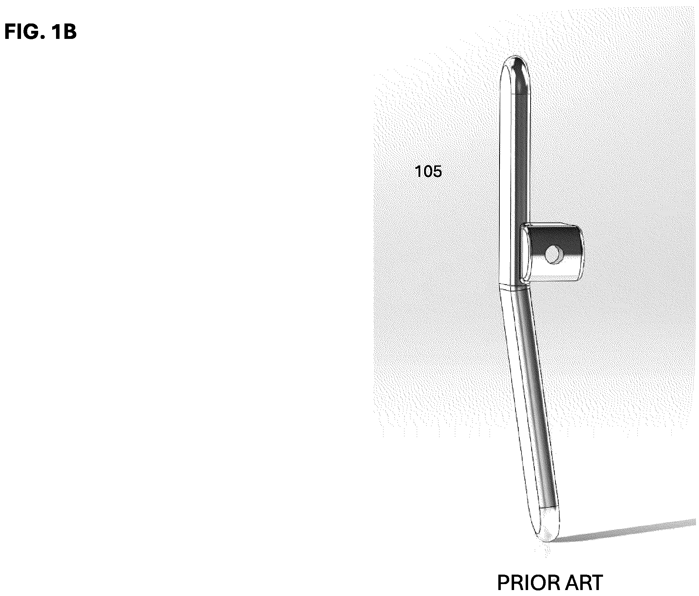

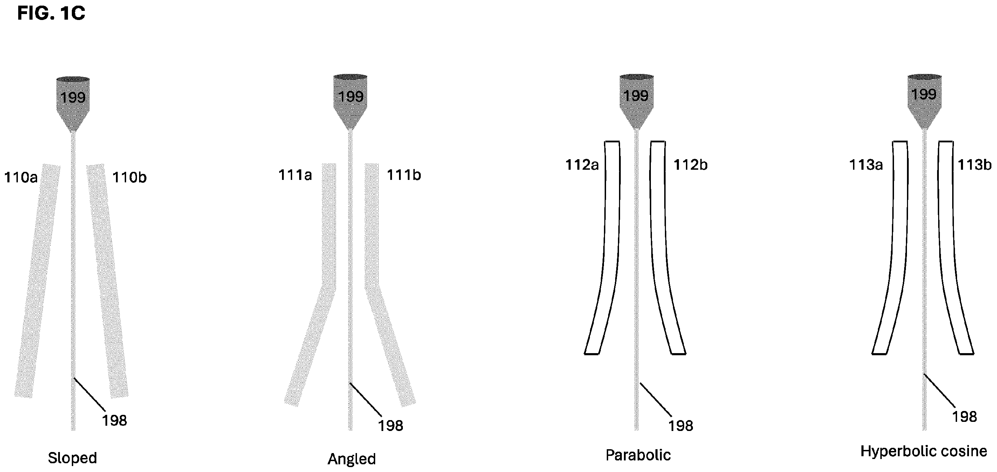

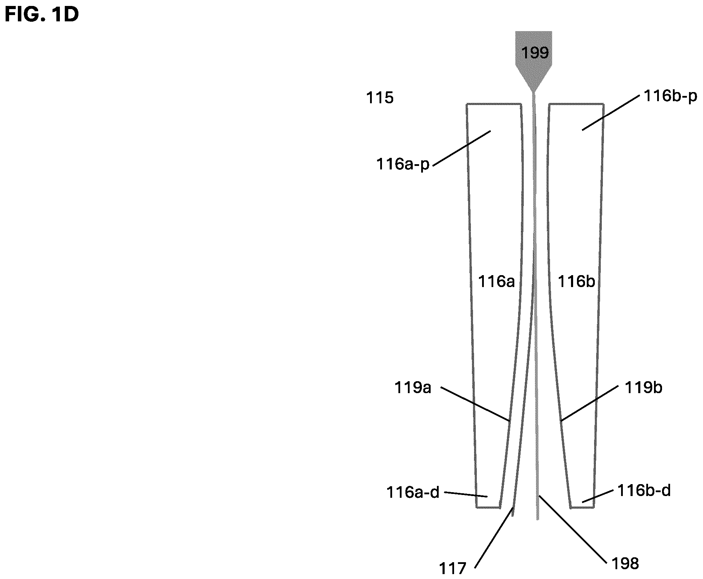

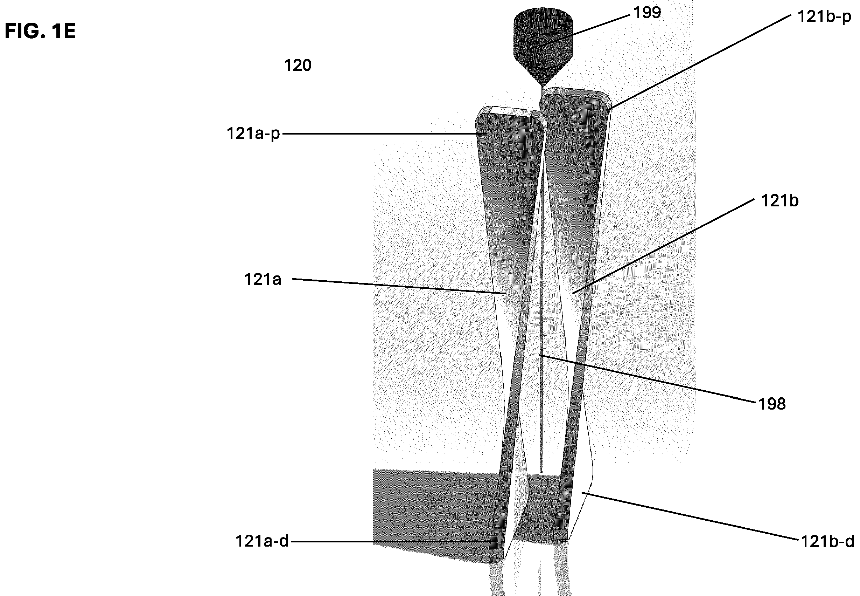

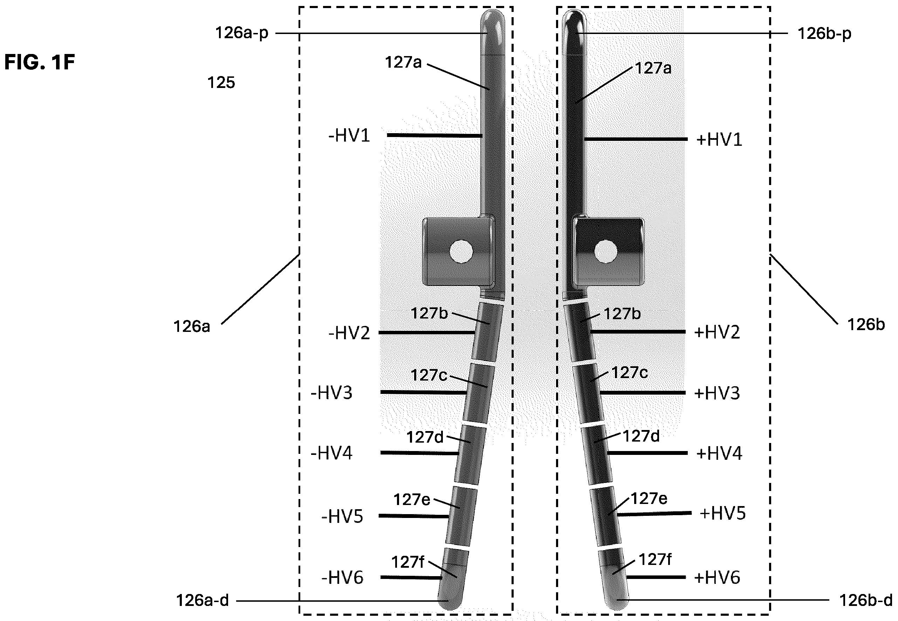

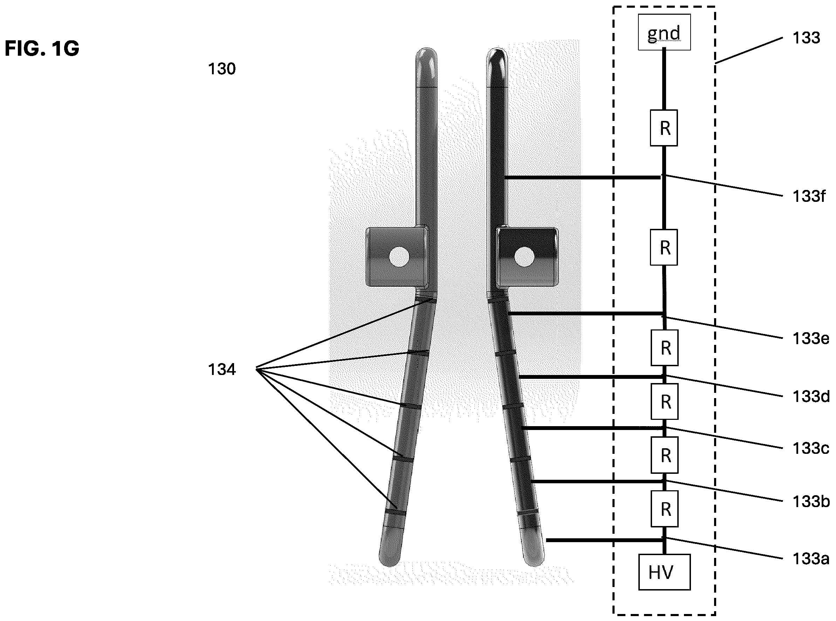

**FIG. 1A** presents a droplet deflector according to prior art; **FIG. 1B** presents a deflection plate of another droplet deflector according to prior art; **FIG. 1C** presents exemplary shapes of deflection plates of droplet deflectors; **FIG. 1D** presents a droplet deflector comprising deflection plates configured for high-angular deflection of a droplet flow stream according to certain embodiments; **FIG. 1E** presents a droplet deflector comprising twisted deflection plates configured for high-angular deflection of a droplet flow stream according to certain embodiments; **FIG. 1F** presents a droplet deflector comprising segmented deflection plates configured for high-angular deflection of a droplet flow stream according to certain embodiments; and **FIG. 1G** presents another droplet deflector comprising segmented deflection plates configured for high-angular deflection of a droplet flow stream according to certain embodiments.

**FIG. 2** presents a flow cytometric system according to certain embodiments.

**FIG. 3** depicts an image-enabled particle sorter according to certain embodiments.

**FIG. 4** depicts a functional block diagram of a particle analysis system according to certain embodiments.

**FIG. 5** depicts a depicts a functional block diagram for one example of a control system according to certain embodiments.

**FIG. 6A-6B** depict schematic drawings of a particle sorter system according to certain embodiments.

**FIG. 7** depicts aspects of a computer-controlled system according to certain embodiments.

**FIGS. 8A-B** depict exemplary techniques for optimizing a shape of deflection plates of droplet deflectors according to certain embodiments.

**FIG. 9** depicts an exemplary flow diagram for optimizing a shape of deflection plates of droplet deflectors according to certain embodiments.

**FIGS. 10A-C** depict results of numerical computation of deflection plate shapes and associated droplet deflection flow path.

**FIG. 11** depicts twisted deflection plates configured for high-angular deflection of a droplet flow stream according to certain embodiments.

**FIGS. 12A-H** depict an experimental set up and performance results of droplet deflectors comprising deflection plates configured for high-angular deflection of a droplet flow stream according to certain embodiments.

In the figures, elements having the same or similar reference numerals have the same or similar features, unless explicitly stated otherwise.

**DETAILED DESCRIPTION**

Droplet deflectors having optimized deflection plates are provided. Droplet deflectors of interest include droplet deflectors with deflection plates configured for high-angular deflection of a droplet flow stream. Droplet deflectors of interest further include droplet deflectors with deflection plates that comprise a shape that corresponds to a path of the deflected droplet flow stream or deflection plates configured to apply a deflection force to a flow stream at a plurality of different angles. Droplet deflectors of interest still further include droplet deflectors configured to apply a constant deflection force to the deflected droplet flow stream from a plurality of different lateral positions, including, for example, where the deflector plates are segmented deflector plates. Flow cytometers having the subject droplet deflectors and methods of use and assembly or configuration thereof are also provided.

Before the present disclosure is described in greater detail, it is to be understood that this disclosure is not limited to particular embodiments described, as such may, of course, vary. It is also to be understood that the terminology used herein is for the purpose of describing particular embodiments only, and is not intended to be limiting, since the scope of the present disclosure will be limited only by the appended claims.

Where a range of values is provided, it is understood that each intervening value, to the tenth of the unit of the lower limit unless the context clearly dictates otherwise, between the upper and lower limit of that range and any other stated or intervening value in that stated range, is encompassed within the disclosure. The upper and lower limits of these smaller ranges may independently be included in the smaller ranges and are also encompassed within the disclosure, subject to any specifically excluded limit in the stated range. Where the stated range includes one or both of the limits, ranges excluding either or both of those included limits are also included in the disclosure.

Certain ranges are presented herein with numerical values being preceded by the term "about." The term "about" is used herein to provide literal support for the exact number that it precedes, as well as a number that is near to or approximately the number that the term precedes. In determining whether a number is near to or approximately a specifically recited number, the near or approximating unrecited number may be a number which, in the context in which it is presented, provides the substantial equivalent of the specifically recited number.

Unless defined otherwise, all technical and scientific terms used herein have the same meaning as commonly understood by one of ordinary skill in the art to which this disclosure belongs. Although any methods and materials similar or equivalent to those described herein can also be used in the practice or testing of the present disclosure, representative illustrative methods and materials are now described.

All publications and patents cited in this specification are herein incorporated by reference as if each individual publication or patent were specifically and individually indicated to be incorporated by reference and are incorporated herein by reference to disclose and describe the methods and/or materials in connection with which the publications are cited. The citation of any publication is for its disclosure prior to the filing date and should not be construed as an admission that the present disclosure is not entitled to antedate such publication by virtue of prior disclosure. Further, the dates of publication provided may be different from the actual publication dates which may need to be independently confirmed.

It is noted that, as used herein and in the appended claims, the singular forms "a", "an", and "the" include plural referents unless the context clearly dictates otherwise. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation.

As will be apparent to those of skill in the art upon reading this disclosure, each of the individual embodiments described and illustrated herein has discrete components and features which may be readily separated from or combined with the features of any of the other several embodiments without departing from the scope or spirit of the present disclosure. Any recited method can be carried out in the order of events recited or in any other order which is logically possible.

While the system and method has or will be described for the sake of grammatical fluidity with functional explanations, it is to be expressly understood that the claims, unless expressly formulated under 35 U.S.C.

§ 112, are not to be construed as necessarily limited in any way by the construction of "means" or "steps" limitations, but are to be accorded the full scope of the meaning and equivalents of the definition provided by the claims under the judicial doctrine of equivalents, and in the case where the claims are expressly formulated under 35 U.S.C. § 112 are to be accorded full statutory equivalents under 35 U.S.C. § 112.

As summarized above, the present disclosure provides a droplet deflector comprising deflection plates configured for high-angular deflection of a droplet flow stream. In further describing embodiments of the disclosure, droplet deflectors configured for configured for high-angular deflection of a droplet flow stream are first described in greater detail. Next, particle sorting modules and systems for separating particles in a sample are described. Methods for sorting droplets in a flow stream are also provided.

## DROPLET DEFLECTORS FOR HIGH-ANGULAR DEFLECTION OF A DROPLET FLOW STREAM

As summarized herein, aspects of the present disclosure include droplet deflectors comprising deflection plates configured for high-angular deflection of a droplet flow stream. Deflection plates may also be referred to as deflector plates or in some cases may be referred to as metallic plates or in some cases may be referred to as electrodes. The term "deflection" is used herein in its conventional sense to refer to applying a force which diverts droplets in a flow stream from flowing along their normal trajectory (i.e., in the absence of the deflection force) to a different trajectory along the longitudinal axis of the flow stream. Further, the term "high-angular deflection" is used herein to refer to applying a force which diverts droplets in a flow stream at an angle relative to the path of the droplets' normal trajectory that is higher or greater than that available employing existing techniques or to applying a deflection force to a droplet stream with deflection plates, the shape of which have been optimized for deflection according to the techniques described herein. In some cases, droplet deflectors of the present invention can be employed to divert droplets in a flow stream at an angle relative to the path of the droplets' normal trajectory that is substantially higher or greater than that available from employing existing techniques. As such, droplet deflectors of the present invention can be employed to divert droplets greater distances from their normal trajectory along the longitudinal axis of the flow stream, as compared with existing techniques. Such techniques offer benefits including enabling the segregation of a sample into a greater number of partitions, e.g., tubes or wells, or reducing a charge applied to a droplet in connection with sorting particles of a sample.

Droplets in a flow stream may be diverted from their normal trajectory along the longitudinal axis of the flow stream using droplet deflectors according to embodiments of the present disclosure by a distance by 0.001 mm or more as measured radially across a plane orthogonal to the longitudinal axis of the flow stream, such as 0.005 mm or more, such as 0.01 mm or more, such as 0.05 mm or more, such as 0.1 mm or more, such as 0.5 mm or more, such as 1 mm or more, such as 2 mm or more, such as 5 mm or more, such as 10 mm or more, such as 15 mm or more, such as 20 mm or more, such as 25 mm or more, such as 30 mm or more, such as 35 mm or more and including 50 mm or more. For example, the droplets in the flow stream may be diverted by a distance of from 0.001 mm to 100 mm, such as from 0.005 mm to 95 mm, such as from 0.001 mm to 90 mm, such as from 0.05 mm to 85 mm, such as from 0.01 mm to 80 mm, such as from 0.05 mm to 75 mm, such as from 0.1 mm to 70 mm, such as from 0.5 mm to 65 mm, such as from 1 mm 60 mm, such as from 5 mm to 55 mm and including from 10 mm to 50 mm. As such, droplets in the flow stream may be deflected by the force of deflection from the longitudinal axis of the flow stream by an angle that ranges from 0.01° to 90°, such as from 0.05° to 85°, such as from 0.1° to 80°, such as from 0.5° to 75°, such as from 10° to 70°, such as from 15° to 65°, such as from 20° to 60°, such as from 25° to 55° and including from 30° to 50°.

As discussed in greater detail herein, the subject droplet deflectors may be configured for sorting particles in a sample, such as cells in a biological sample. In these embodiments, the droplet deflector is configured to apply a deflection force sufficient to deflect particles flowing in a flow stream into one or more sample collection containers. In embodiments, the droplet deflector is configured for high-angular deflection of a droplet flow stream such that particles in the sample are deflected into sample collection containers spaced relatively further away from each other as compared with those used with existing techniques, such that a greater number of sample collection containers may be employed and particles of the sample may be sorted into a greater number of partitions, as will be appreciated by a person skilled in the art. Accordingly, the droplet deflectors may be configured to apply a deflection force such that particles in the flow stream are deflected into sample collection containers that are 0.001 mm or more from the longitudinal axis of the flow stream, such as by 0.005 mm or more, such as 0.01 mm or more, such as 0.05 mm or more, such as 0.1 mm or more, such as 0.5 mm or more, such as 1 mm or more, such as 2 mm or more, such as 5 mm or more, such as 10 mm or more, such as 15 mm or more, such as 20 mm or more, such as 25 mm or more, such as 30 mm or more, such as 35 mm or more and including 50 mm or more. For example, droplet deflectors may be configured to deflect particles in the flow stream into sample collection containers that are diverted from the longitudinal axis of the flow stream by a distance of from 0.001 mm to 100 mm, such as from 0.005 mm to 95 mm, such as from 0.001 mm to 90 mm, such as from 0.05 mm to 85 mm, such as from 0.01 mm to 80 mm, such as from 0.05 mm to 75 mm, such as from 0.1 mm to 70 mm, such as from 0.5 mm to 65 mm, such as from 1 mm 60 mm, such as from 5 mm to 55 mm and including from 10 mm to 50 mm.

In embodiments of the present disclosure, the droplet deflector includes two or more metallic plates, such as two or more opposing or opposite or parallel metallic plates configured to produce an electric field therebetween. The voltage applied to deflector plates to divert charged particles may be 10 mV or more, such as 25 mV or more, such as 50 mV or more, such as 100 mV or more, such as 250 mV or more, such as 500 mV or more, such as 750 mV or more, such as 1000 mV or more, such as 2500 mV or more, such as 5000 mV or more, such as 10000 V or more, such as 15000 V or more, such as 25000 V or more, such as 50000 V or more and including 100000 V or more. In certain embodiments, the voltage applied to each set of metallic plates is from 0.5 kV to 15 kV, such as from 1 kV to 15 kV, such as from 1.5 kV to 12.5 kV and including from 2 kV to 10 kV. In certain embodiments, the voltage applied to each set of metallic plates is from 0.5 kV to 15 kV, such as from 1 kV to 15 kV, such as from 1.5 kV to 12.5 kV and including from 2 kV to 10 kV. Depending on the voltage applied to the metallic plates, the electric field strength between the metallic plates may vary, ranging from 0.001 V/m to $1x10^7$ V/m, such as from 0.01 V/m to $5x10^6$ V/m, such as from 0.1 V/m to $1x10^6$ V/m, such as from 0.5 V/m to $5x10^5$, such as from 1 V/m to $1x10^5$ V/m, such as from 5 V/m to $5x10^4$ V/m, such as from 10 V/m to $1x10^4$ V/m and including from 50 V/m to $5x10^3$ V/m, for example $1x10^5$ V/m to $2x10^6$ V/m.

In embodiments, droplet deflectors include two metallic plates which are spaced apart from each other by a distance sufficient to generate an electric field therebetween. For example, the metallic plates may be spaced apart by 0.01 mm or more, such as 0.05 mm or more, such as 0.1 mm or more, such as 0.5 mm or more, such, as 1 mm or more, such as 1.5 mm or more, such as 2 mm or more, such as 2.5 mm or more, such as 3 mm or more, such as 3.5 mm or more, such as 4 mm or more, such as 4.5 mm or more, such as 5 mm or more, such as 10 mm or more, such as 15 mm or more, such as 20 mm or more and including 25 mm or more. In some instances, the metallic plates are spaced apart by a distance that ranges from 0.01 mm to 50 mm, such as from 0.05 mm to 45 mm, such as from 0.1 mm to 40 mm, such as from 0.5 mm to 35 mm, such as from 1 mm to 30 mm, such as from 1.5 mm to 25 mm, such as from 2 mm to 20 mm and including from 3 mm to 15 mm.

As described in greater detail herein, the subject droplet deflectors may include metallic plates with 2 or more segments, such as 3 or more, such as 4 or more, such as 5 or more, such as 6 or more, such as 7 or more, such as 8 or more, such as 9 or more and including 10 or more segments, where each segment corresponds to a region on each deflector plate where segments on deflector plates are positioned directly opposite of each other. In some embodiments a deflection force is applied to droplets in the flow stream by applying a voltage to segments of the metallic plates resulting in an electric field that accelerates and diverts the trajectory of target droplets from the longitudinal axis of the flow stream to one or more sample collection containers. The voltage applied to each segment of the metallic plates may be the same or different. In some embodiments, the voltage applied to each segment of the metallic plates may increase as the distance between the metallic plates increases, i.e., as a lateral distance of the plate (i.e., segment of the deflection plates) increases. Where the voltage applied to each segment of metallic plates is different, the difference between the applied voltage may be 0.01 mV or more, such as 0.05 mV or more, such as 0.1 mV or more, such as 0.5 mV or more, such as 1 mV or more, such as 5 mV or more, such as 10 mV or more, such as 25 mV or more, such as 50 mV or more, such as 75 mV or more, such as 100 mV or more, such as 250 mV or more, such as 500 mV or more, such as 750 mV or more, such as 1 V or more, such as 2.5 V or more, such as 5 V or more, such as 10 V or more, such as 25 V or more, such as 50 V or more and including 100 V or more, such as 500 V or more, such as 1000 V or more. In certain embodiments, the difference between the applied voltage may range from 0.5 kV to 15 kV, such as from 1 kV to 15 kV, such as from 1.5 kV to 12.5 kV and including from 2 kV to 10 kV.

Depending on the applied voltage, the electric field strength between each segment of metallic plates may be the same or different. In certain embodiments, the electric field strength between each segment of metallic plates is the same, or substantially the same, and droplets flowing in the flow stream are subjected to a constant electric field through the droplet deflector (notwithstanding that segments of the the deflection plates may be separated by a plurality of different distances from each other). In other embodiments, the electric field strength between each segment of metallic plate is different and the electric field strength differs by 0.001 V/m or more, such as by 0.01 V/m or more, such as by 0.1 V/m or more, such as by 0.5 V/m or more, such as by 1 V/m or more, such as by 2 V/m or more, such as by 5 V/m or more, such as by 10 V/m or more and including by 25 V/m or more, such as by 50 V/m or more, such as by 100 V/m or more, such as by 500 V/m or more and including by $1x10^3$ V/m or more.

The metallic plates of the subject droplet deflectors may be formed from any suitable metal capable of producing an electric field and may include but is not limited to aluminum, brass, chromium, cobalt, copper, gold, indium, iron, lead, nickel, platinum, palladium, tin, steel (e.g., stainless steel), silver, zinc and combinations and alloys thereof, such as for example an aluminum alloy, aluminum-lithium alloy, an aluminum-nickel-copper alloy, an aluminum-copper alloy, an aluminum-magnesium alloy, an aluminum-magnesium oxide alloy, an aluminum-silicon alloy, an aluminum-magnesium-manganese-platinum alloy, a cobalt alloy, a cobalt-chromium alloy, a cobalt-tungsten alloy, a cobalt-molybdenum-carbon alloy, a cobalt-chromium-nickel-molybdenum-iron-tungsten alloy, a copper alloy, a copper-arsenic alloy, a copper-beryllium alloy, a copper-silver alloy, a copper-zine alloy (e.g., brass), a copper-tin alloy (e.g., bronze), a copper-nickel alloy, a copper-tungsten alloy, a copper-gold-silver alloy, a copper-nickel-iron alloy, a copper-manganese-tin alloy, a copper-aluminum-zinc-tin alloy, a copper-gold alloy, a gold alloy, a gold-silver alloy, an indium alloy, an indium-tin alloy, an indium-tin oxide alloy, an iron alloy, an iron-chromium alloy (e.g., steel), an iron-chromium-nickel alloy (e.g., stainless steel), an iron-silicon alloy, an iron-chromium-molybdenum alloy, an iron-carbon alloy, an iron-boron alloy, an iron-magnesium alloy, an iron-manganese alloy, an iron molybdenum alloy, an iron-nickel alloy, an iron-phosphorus alloy, an iron-titanium alloy, an iron-vanadium alloy, a lead alloy, a lead-antimony alloy, a lead-copper alloy, a lead-tin alloy, a lead-tin-antimony alloy, a nickel alloy, a nickel-manganese-aluminum-silicon alloy, a nickel-chromium alloy, a nickel-copper alloy, a nickel, molybdenum-chromium-tungsten alloy, a nickel-copper-iron-manganese alloy, a nickel-carbon alloy, a nickel-chromium-iron alloy, a nickel-silicon alloy, a nickel-titanium alloy, a silver alloy, a silver-copper alloy (e.g., sterling silver) a silver-coper-germanium alloy (e.g., Argentium sterling silver), a silver-gold alloy, a silver-copper-gold alloy, a silver-platinum alloy, a tin alloy, a tin-copper-antimony alloy, a tin-lead-copper alloy, a tin-lead-antimony alloy, a titanium alloy, a titanium-vanadium-chromium alloy, a titanium-aluminum alloy, a titanium-aluminum-vanadium alloy, a zinc alloy, a zinc-copper alloy, a zinc-aluminum-magnesium-copper alloy, a zirconium alloy, a zirconium-tin alloy or a combination thereof.

The metallic plates of the subject droplet deflectors may comprise a surface (e.g., the surface comprising the greatest surface area of the metallic plate, i.e., as such may be referred to as a "front surface" of the metallic plates, oriented towards the droplet flow stream, but where such surface or shape is contrasted with the shape of the metallic plates along the longitudinal axis of the flow stream, e.g., a cross-section along such axis, as described herein) in any suitable shape, such as, for example, with respect to such surface of the metallic plates, a circle, oval, half-circle, crescent-shaped, star-shaped, square, triangle, rhomboid, pentagon, hexagon, heptagon, octagon, rectangle or other suitable polygon. In certain embodiments, such surface of the metallic plates are rectangular or rounded rectangle. As described in greater detail herein, in certain instances the metallic plates are twisted, such as twisted rectangles having a twist angle that 5° or more, such as 10° or more, such as 15° or more, such as 20° or more, such as 25° or more, such as 30° or more, such as 35° or more, such as 40° or more, such as 45° or more, such as 50° or more, such as 55° or more, such as 60° or more and including having a twist angle of 90° or more.

Depending on the shape of the "front surface" of the metallic plates, i.e., the surface of the metallic plates with the largest surface area, the dimensions may vary. In some embodiments, each metallic plate has a width that ranges from 0.5 mm to 10 mm, such as from 1 mm to 9.5 mm, such as from 1.5 mm to 9 mm, such as from 2 mm to 8.5 mm, such as from 2.5 mm to 8 mm, such as from 3 mm to 7.5 mm, such as from 3.5 mm to 7 mm, such as from 4 mm to 6.5 mm and including a width than ranges from 4.5 mm to 6 mm. The length also varies ranging from 10 mm to 500 mm, such as from 15 mm to 450 mm, such as from 20 mm to 400 mm, such as from 25 mm to 350 mm, such as from 30 mm to 300 mm, such as from 35 mm to 250 mm, such as from 40 mm to 200 mm, such as from 45 mm to 150 mm and including from 50 mm to 100 mm. In certain embodiments, the metallic plates are an asymmetric polygon where a first end has a width that is smaller than the width of the second end. The width at each end may range from 0.01 mm to 10 mm, such as from 0.05 mm to 9.5 mm, such as from 0.1 mm to 9 mm, such as from 0.5 mm to 8.5 mm, such as from 1 mm to 8 mm, such as from 2 mm to 8 mm, such as from 2.5 mm to 7.5 mm and including from 3 mm to 6 mm. In embodiments, the surface area of the "front surface" of each metallic plate may vary as desired and may range from 0.25 to 15 cm$^2$, such as 0.5 to 14 cm$^2$, such as 0.75 to 13 cm$^2$, such as 1 to 12 cm$^2$, such as 1.5 to 11 cm$^2$, and including 2 to 10 cm$^2$.

As described herein, embodiments of droplet deflectors of the present invention comprise deflection plates configured for high-angular deflection of a droplet flow stream. In some cases, the deflection plates comprise a shape that corresponds to a path of the deflected droplet flow stream. By "shape," it is meant the shape of the deflection plates along the longitudinal axis of the droplet flow stream, and, in some cases, by "shape," it is meant the shape of the deflection plates along the longitudinal axis of the droplet flow stream or relative to the path of the deflected droplet flow stream. In some cases, the shape of the deflection plates refers to a distance between droplets of the droplet flow stream and the deflection plates, in some cases, in one- or two-dimensions (e.g., in deflection plate configurations that involve the distance between the droplet flow stream in a single axis (e.g., x-axis) orthogonal to the longitudinal axis of the flow stream, or in deflection plate configurations that involve the distance between the droplet flow stream in two axes (e.g., x- and y-axis), both orthogonal to the longitudinal axis of the flow stream, such as in a helical configuration). In other words, unless the context indicates otherwise, typically, a reference to a "shape" of a deflection plate refers to a cross-sectional shape of the deflection plate along the path of the deflected droplet flow stream, i.e., along the longitudinal axis of the droplet flow stream; in some cases, this may refer to a cross-sectional shape along the length of a deflection plate (and is in contrast to a shape of the "front face" of a deflection plate, i.e., the surface of the deflection plate with the greatest surface area). For example, in some cases, the deflection plates comprise a shape that minimizes a distance between the deflected droplet flow stream and a deflection plate of the droplet deflector over a length of the deflection plate. In embodiments, the deflection plates comprise a shape that minimizes a distance between the deflected droplet flow stream and a deflection plate of the droplet deflector over 1% or more of the length of the droplet deflector along the longitudinal axis of the droplet flow stream, such as 10% or more, such as 20% or more, such as 30% or more, such as 40% or more, such as 50% or more, such as 60% or more, such as 70% or more, such as 80% or more, such as 90% or more. In embodiments, any convenient distance may be applied as a minimized distance between the deflection plate and the droplet flow stream, such as 0.01 mm or less, 0.1 mm or less, 0.2 mm or less, 0.3 mm or less, 0.4 mm or less, 0.5 mm or less, 0.6 mm or less, 0.7 mm or less, 0.8 mm or less, 0.9 mm or less, 1.0 mm or less, 2.0 mm or less, 3.0 mm or less, 4.0 mm or less, 5.0 mm or less or 10 mm or less.

Similarly, in some cases, the deflection plates comprise a shape that maintains a constant buffer (i.e., a constant minimum distance) between the deflected droplet flow stream and a deflection plate of the droplet deflector over a length of the deflection plate. That is, deflection plates may comprise a shape such that a deflected droplet flow stream is a constant minimum distance from a deflection plate of the droplet deflector over a length of the deflection plate along the longitudinal axis of the droplet flow stream. In embodiments, the deflection plates may comprise a shape such that a deflected droplet flow stream is a constant minimum distance from a deflection plate of the droplet deflector over 1% or more of the length of the droplet deflector along the longitudinal axis of the droplet flow stream, such as 10% or more, such as 20% or more, such as 30% or more, such as 40% or more, such as 50% or more, such as 60% or more, such as 70% or more, such as 80% or more, such as 90% or more. In embodiments, any convenient distance may be applied as a constant minimum distance between the deflection plate and the droplet flow stream, such as 0.01 mm or less, 0.1 mm or less, 0.2 mm or less, 0.3 mm or less, 0.4 mm or less, 0.5 mm or less, 0.6 mm or less, 0.7 mm or less, 0.8 mm or less, 0.9 mm or less, 1.0 mm or less, 2.0 mm or less, 3.0 mm or less, 4.0 mm or less, 5.0 mm or less or 10 mm or less.

As described herein, droplet deflectors are configured to deflect droplets of a droplet flow stream. They do so by applying a deflection force to droplets of a droplet flow stream. In embodiments of the present invention, droplet deflectors comprise deflection plates configured to maximize a deflection force applied to the droplet flow stream at a plurality of different downstream positions. That is, deflection plates are shaped such that, at a plurality of positions along the longitudinal axis of the droplet flow stream or along the longitudinal axis or length of the deflection plates, the deflection force applied to the droplet flow stream by the deflector plates is maximized. In embodiments, such force is maximized by maximizing the electric field between the deflector plates at different positions along the longitudinal axis of the droplet flow stream or along the longitudinal axis or length of the deflection plates. In embodiments, the electric field may be maximized by reducing the distance between the deflector plates and/or increasing the voltage applied to the deflector plates (i.e., increasing the voltage applied to different segments of a segmented deflector plates).

In embodiments, the deflection plates comprise a shape configured to prevent a deflected droplet stream from colliding with the deflection plates. That is, given a charged droplet of the droplet flow stream and voltages applied to deflection plates of the droplet deflector, the deflection plates are shaped such that they are capable of deflecting the charged droplet to the greatest extent, e.g., at the greatest angle possible or the greatest deflection distance possible, without causing the charged droplet to collide with the deflection plate. In some cases, the droplet deflector is configured such that the distance between the deflection plates minimally increases at each of a plurality of downstream positions. By minimally increasing the distance between deflection plates, it is meant that in some cases, the distance between deflection plates increases by the minimal amount required to prevent the charged droplet from colliding with the deflection plate. In embodiments, the deflection plates comprise nonlinear surfaces. For example, in some cases, the shape of the deflection plates comprises a spline.

As described herein, in some cases, the deflection plates are configured to apply a deflection force to a flow stream at a plurality of different angles. In certain embodiments, the metallic plates are twisted. In these embodiments, the metallic plates have identical twist angles and remain spaced apart from each other, in some cases, to a varying degree, the entire length of the metallic plates. In some embodiments, the applied deflection force remains constant across the entire length of the twisted metallic plates (e.g., in segmented, twisted deflection plates). In other embodiments, the applied deflection force varies across the entire length of the twisted metallic plates. Depending on the desired angle of deflection, the twist angle of twisted metallic plates may vary and may be 5° or more, such as 10° or more, such as 15° or more, such as 20° or more, such as 25° or more, such as 30° or more, such as 35° or more, such as 40° or more, such as 45° or more, such as 50° or more, such as 55° or more and including having a twist angle of 60° or more. For example, the twist angle may range from 1° to 90°, such as from 2° to 85°, such as from 3° to 80°, such as from 4° to 75°, such as from 5° to 70°, such as from 10° to 60°, such as from 15° to 45° and including a twist angle from 20° to 40°.

In some embodiments, the twisted metallic plates are twisted by 1 helical twist or less, such as by 0.9 helical twists or less, such as by 0.8 helical twist or less, such as by 0.7 helical twist or less, such as by 0.6 helical twist or less and including by 0.5 helical twist or less. In certain embodiments, the twisted metallic plates have a twist configuration such that the proximal end of the twisted metallic plates are oriented at an angle of from 1° to 90° with respect to the distal end of the twisted metallic plates, such as from 2° to 85°, such as from 3° to 80°, such as from 4° to 75°, such as from 5° to 70°, such as from 10° to 60°, such as from 15° to 45° and including a twist angle from 20° to 40°. In certain embodiments, the proximal end of the twisted metallic plates is orthogonally oriented with respect to the distal end.

As described, in some embodiments, droplet deflectors of interest include segmented metallic plates, comprising a first segment of metallic plates and a second segment of metallic plates positioned downstream (along the flow path of the flow stream) from the first set of metallic plates. In these embodiments, the shape and size of the first segment of metallic plates may be the same or different from the second segment of metallic plates. In some embodiments the shape of the first segment of metallic plates is the same as the second segment of metallic plates (e.g., both rectangular). In other embodiments, the shape of the first segment of parallel metallic plates is different from the second segment of parallel metallic plates (e.g., the first segment of metallic plates are square and the second set of parallel metallic plates are rectangular). In some instances, the dimensions of the first segment of metallic plates are the same as the second segment of metallic plates. In one example, the width of the first segment of metallic plates is the same as the second segment of metallic plates. In other instances, the length of the first segment of metallic plates is the same as the second segment of metallic plates. In still other instances, the width and length of the first segment of metallic plates are the same as the second segment of metallic plates. In some examples, the dimensions of the first segment of metallic plates are different from the second segment of metallic plates. In one example, the width of the first segment of metallic plates is different from the second segment of metallic plates. In another example, the length of the first segment of metallic plates is different from the second segment of metallic plates. In yet another example, both the width and the length of the first segment of metallic plates is different from the second segment of metallic plates. In some cases, the deflection plates comprise angled deflection plates, with a first segment comprising an upper or proximal region with parallel plates, and a second segment comprising a lower or distal region with angled plates.

Where the droplet deflector includes more than one segment of metallic plates, each segment of metallic plates is configured to divert the trajectory of target droplets by a predetermined distance from the longitudinal axis of the flow stream. Each segment of segmented deflection plates may be configured to divert the trajectory of target droplets the same angle. In certain embodiments, the droplet deflector includes two segments of parallel metallic plates, the first segment of parallel metallic plates are configured to divert the target droplets in the flow stream by a distance that ranges from 0.001 mm to 100 mm, such as from 0.005 mm to 95 mm, such as from 0.001 mm to 90 mm, such as from 0.05 mm to 85 mm, such as from 0.01 mm to 80 mm, such as from 0.05 mm to 75 mm, such as from 0.1 mm to 70 mm, such as from 0.5 mm to 65 mm, such as from 1 mm 60 mm, such as from 5 mm to 55 mm and including from 10 mm to 50 mm and the second segment of metallic plates are configured to divert the target droplets in the flow stream by a distance that ranges from 0.001 mm to 100 mm, such as from 0.005 mm to 95 mm, such as from 0.001 mm to 90 mm, such as from 0.05 mm to 85 mm, such as from 0.01 mm to 80 mm, such as from 0.05 mm to 75 mm, such as from 0.1 mm to 70 mm, such as from 0.5 mm to 65 mm, such as from 1 mm 60 mm, such as from 5 mm to 55 mm and including from 10 mm to 50 mm. In this embodiment, the electric field generated between the first segment of metallic plates and the second segment of metallic plates may be the same or different, as desired. In one example, the electric field is the same. In another example, the electric field is different, such as where the electric field strength differs by 0.001 V/m or more, such as 0.01 V/m or more, such as 0.1 V/m or more, such as 0.5 V/m or more, such as 1 V/m or more, such as 2 V/m or more, such as 5 V/m or more, such as 10 V/m or more and including 25 V/m or more. In some instances, the electric field between the first segment of metallic plates is greater than the electric field between the second segment of metallic plates. In other instances, the electric field between the first segment of metallic plates is less than the electric field between the second segment of metallic plates.

Embodiments of droplet deflectors of the present invention are configured to apply a constant deflection force to the deflected droplet flow stream from a plurality of different lateral positions. In some cases, different lateral positions comprise different distances from a center line of the deflection plates. That is, different lateral positions comprise different distances from the longitudinal axis of the droplet flow stream. In certain such embodiments, the distance between the deflector plates increases at different downstream positions. In some cases, in such embodiments, the droplet deflector is configured such that different voltage potentials are applied to the deflector plates at different downstream positions.

For example, in embodiments, each deflector plate of the droplet deflector comprises two or more segments. In some cases, the segmented deflector plates comprise aligned, corresponding segments. In embodiments, each segment is electrically isolated from other segments. In other embodiments, the droplet deflector is configured such that each segment of the segmented deflector plates is configured to receive a different electric potential. For example, each segment may be configured to receive an electric potential selected such that notwithstanding a difference in distances between different segments, the electric field between the different segments (and therefore the deflection force) remains substantially constant. In certain embodiments, each segment is separated from other segments by an electrical insulator, such as a resistive dielectric.

Embodiments of the present invention comprise a droplet deflector that comprises a plurality of resistors connected in series. In such embodiments, each resistor of the plurality of resistors may be electrically connected to a segment of a segmented deflector plate. In some cases, each segment is separated from other segments by a resistive dielectric. Any convenient resistive dielectric may be applied to separate electrode segments, i.e., segments of the deflector plates. In embodiments, electrode segments are typically directly opposed to each other across the longitudinal axis of the droplet flow stream. In such embodiments, resistive dielectrics typically comprise spaces configured to equally space out or separate segments of deflector plates. In embodiments comprising segmented deflector plates, each segment of the segmented deflector plates is configured to receive an electric potential at a distinct magnitude based on distances between corresponding segments of the electrodes, i.e., where different electric field strength is applied corresponding to different lateral positions. Some embodiments further comprise a voltage source operably connected to a deflector plate. In some cases, embodiments still further comprise a voltage divider comprising a plurality of resistors connected in series. In such cases, each resistor of the plurality of resistors is electrically connected to a segment of a segmented deflector

In existing techniques, droplet deflectors comprise parallel deflection plates. **FIG. 1A** depicts such an exemplary droplet deflector. Droplet deflector 100 includes parallel deflection plates 101a, 101b separated by distance d. Deflection plate 101a has proximal end 101a-p and distal end 101a-d downstream along the longitudinal axis of flow stream 198 from proximal end 101a-p. Deflection plate 101b has proximal end 101b-p and distal end 101b-d downstream along the longitudinal axis of flow stream 198 from proximal end 101b-p. Flow stream 102 emanates from flow nozzle 199 at nozzle orifice 199a. Droplet deflector 100 is capable of deflecting droplet flow stream according to trajectory 102, corresponding to a distance, Δ, from longitudinal axis of the droplet flow stream (i.e., the trajectory of the droplet flow stream if no deflection force were applied). Deflected droplets are collected in sample collection containers (not shown) downstream from deflection plates 101a, 101b.

With respect to droplet deflector 100 with parallel deflection plates 101a, 101b, the electric field between deflection plates 101a, 101b may be approximated as E = V/d, where V is the plate voltage, and d the separation between plates 101a, 101b. Based on such characterization of the electric field, the droplet mass, M, and the charge on the droplet, q, the deflection force can be calculated, and, subsequently, the acceleration, velocity and position of deflected droplets of the flow stream as a function of time as follows. First, the electric field and deflection force can be characterized as follows:

$$E = \frac{V}{d} \text{ and } F = qE = \frac{qV}{d}$$

Therefore, the acceleration of the deflected droplets of the flow stream can be characterized as follows:

$$a = \frac{F}{M} = \frac{qV}{Md}$$

Therefore, the horizontal displacement (i.e., displacement orthogonal to the longitudinal axis of the droplet flow stream) is characterized as follows:

$$y(t) = \iint dt^2 a(t) = \iint dt^2 \frac{qV}{Md}$$

$$y(t) = \frac{qV}{2Md}t^2$$

$$\Delta = \frac{qV}{2Mdv^2}l^2$$

As shown in the above characterization of the flow path of droplet deflector 100 with parallel deflection plates 101a, 101b, the trajectory of the deflected droplet flow stream is a parabola.

Other shapes of deflection plates of droplet deflectors may be applied besides parallel plates 101a, 101b of droplet deflector 100. **FIG. 1B** illustrates a shape of a deflection plate 105, comprising a parallel section followed by an angled section, according to existing techniques. The shape of deflection plate 105 comprises a short straight section followed by an angled section (i.e., angled away from the longitudinal axis of the droplet flow stream to avoid the deflected droplets, i.e., angled so as to prevent causing deflected droplets from colliding with deflection plate 105). Other potential shapes of deflection plates are depicted in **FIG. 1C.** Deflection plates 110a, 110b have a sloped shape. Deflection plates 111a, 111b have an angled shape. Deflection plates 112a, 112b have a parabolic shape. Deflection plates 113a, 113b have a hyperbolic cosine shape. Each of the shapes of deflection plates 110a, 110b, 111a, 111b, 112a, 112b, 113a, 113b are not optimized for deflection of droplets because each of these exemplary shapes is capable of "understeering" droplets (i.e., maintaining a position of a deflected droplet relative to the deflection plate that is "too far" from the plate) at some times (i.e., at some positions along the longitudinal axis of the droplet flow stream) and "oversteering" droplets (i.e., causing droplets to intersect or collide with the plate) at other times (i.e., at other positions along the longitudinal axis of the droplet flow stream). "Understeering" droplets, meaning that the shape of the deflection plate is such that the droplet is further away from the deflection plate than it would otherwise be if the plate were shaped differently, reflects a non-optimized design. Such scenario reflects a non-optimized design because if the distance between the deflector plates were closer together, a greater deflection force would have been applied to a charged droplet of the flow stream.

Embodiments of the present invention comprise deflector plates with shapes that maximize the electric field by optimizing the distance between deflection plates by keeping the deflection plates close together, but not so close together that charged droplets intersect or collide with the deflection plates. Embodiments of the present invention comprise deflector plates with shapes that closely mimic a path of a deflected droplet. **FIG. 1D** depicts a droplet deflector configured for high-angular deflection of a droplet flow stream according to an embodiment of the present invention. Droplet deflector 115 comprises deflection plates 116a, 116b configured for high-angular deflection of droplet flow stream 117. Deflection plate 116a has proximal end 116a-p and distal end 116a-d downstream along the longitudinal axis of flow stream 198 from proximal end 116a-p. Deflection plate 116b has proximal end 116b-p and distal end 116b-d downstream along the longitudinal axis of flow stream 198 from proximal end 116b-p. Deflection plates 116a, 116b comprise a shape with inner surfaces 119a, 119b configured to cause high-angular deflection of droplet flow stream 117 relative to the longitudinal axis 198 of the droplet flow stream (i.e., the path of the droplet flow stream in the absence of any deflection force). (As an example of how the term "shape" is typically used herein is the shape of inner surfaces 119a, 119b of deflection plates 116a, 116b.) Deflection plates 116a, 116b comprise a shape of inner surfaces 119a, 119b that produces an electric field that causes flow stream 117 to be deflected along a path that substantially parallels or follows deflection plates 116a, 116b, in particular, parallels inner surfaces 119a, 119b thereof. That is, inner surfaces 119a, 119b are shaped such that deflected droplet flow stream 117 is a constant distance from deflection plate 116a as it is deflected over a length of deflection plates 116a, 116b. Such a shape is configured such that deflection plates 116a, 116b are positioned as close together as practical across the longitudinal axis 198 (thereby maximizing the deflection force applied to deflected droplet flow stream 117) while simultaneously maintaining a distance that insures that deflected droplet flow stream 117 does not collide with deflection plates 116a, 116b.

In droplet deflector 115, deflector plates 116a, 116b remain substantially opposed to each other. That is, the shape of deflector plates 116a, 116b is optimized across a single dimension (distance between flow stream and deflection plate in a single plane) or optimized with respect to plates that do not twist around longitudinal axis 198. **FIG. 1E** depicts another embodiment of a droplet deflector 120 configured for high-angular deflection of a droplet flow stream according to the present invention. Droplet deflector 120 comprises deflector plates 121a, 121b that twist around longitudinal axis 198. Deflection plate 121a has proximal end 121a-p and distal end 121a-d downstream along the longitudinal axis of flow stream 198 from proximal end 121a-p. Deflection plate 121b has proximal end 121b-p and distal end 121b-d downstream along the longitudinal axis of flow stream 198 from proximal end 121b-p. As deflection plates 121a, 121b extend along longitudinal axis 198 (i.e., moving in a relatively distal direction along axis 198) the distances between deflection plates 121a, 121b extend further from each other in two dimensions, such that, like deflector 115, deflection plates 121a, 121b remain as close together in two dimensions as possible but still far enough away that deflected droplets of a deflected droplet flow stream (not shown in **FIG. 1E**) do not intersect or collide with deflector plates 121a, 121b.

**FIG. 1F** depicts another embodiment of a droplet deflector 125 configured for high-angular deflection of a droplet flow stream according to the present invention. Droplet deflector 125 comprises deflection plates 126a, 126b configured to apply a constant deflection force to the deflected droplet flow stream from a plurality of different lateral positions. In particular, deflection plates 126a, 126b are segmented deflection plates. Deflection plate 126a has proximal end 126a-p and distal end 126a-d downstream along the longitudinal axis of flow stream 198 from proximal end 126a-p. Deflection plate 126b has proximal end 126b-p and distal end 126b-d downstream along the longitudinal axis of flow stream 198 from proximal end 126b-p. Segmented deflection plates 126a, 126b comprise six corresponding segments 127a, 127b, 127c, 127d, 127e, 127f. Each segment 127a, 127b, 127c, 127d, 127e, 127f is electrically isolated from each other segment such that a different voltage can be applied to each segment. That is, segment 127a is separated from segment 127b by an air gap; segment 127b is separated from segment 127c by an air gap; segment 127c is separated from segment 127d by an air gap; segment 127d is separated from segment 127e by an air gap; and segment 127e is separated from segment 127f by an air gap.

Deflector plates 126a, 126b are angled deflector plates, i.e., comprising a region where deflector plates 126a, 126b are parallel with each other and a region where deflector plates are sloped away from each other. However, embodiments of segmented deflector plates are not limited to angled deflector plates and segmented deflector plates may comprise any convenient shape, including for example, the optimized shape of deflector plates 116a, 116b of droplet deflector 115 or twisted or helical deflector plates 121a, 121b of droplet deflector 120 or any other desired shape. Segmented electrodes 126a, 126b are segmented such that different voltages may be applied to different segments of segmented electrodes 126a, 126b. Segmented electrodes may be configured such that the voltage applied to different segments changes at different lateral positions. By lateral positions, it is meant, for example, a distance between segments, such as, for example, an average distance between segments. Typically, such distances are measured orthogonal to the longitudinal axis of the droplet flow stream. That is, distances may be measured from a center line between deflection plates. Voltages applied to different segments of deflection plates may be selected to compensate for the increased distance between deflection plates (as a particle moves along the longitudinal axis of the flow stream). By increasing voltages applied to different segments, the electric field strength between the deflector plates can be substantially maintained, i.e., substantially constant, and therefore the deflection force applied to deflected droplets can be substantially maintained along the longitudinal axis of the droplet flow stream. Voltages -HV1 and +HV1 are applied to segments 127a; voltages -HV2 and +HV2 are applied to segments 127b; voltages -HV3 and +HV3 are applied to segments 127c; voltages -HV4 and +HV4 are applied to segments 127d; voltages -HV5 and +HV5 are applied to segments 127e; and voltages - HV6 and +HV6 are applied to segments 127f. The voltages applied to the different segments increase along the longitudinal axis of the droplet flow stream: HV6 is greater than HV5 is greater than HV4 is greater than HV3 is greater than HV2 is greater than HV1.

FIG. 1G depicts another embodiment of a droplet deflector 130 configured for high-angular deflection of a droplet flow stream according to the present invention. Droplet deflector 130 comprises deflector plates 131a, 131b that are segmented deflector plates. Droplet deflector 130 further comprises electrical circuit 129. Electrical circuit 133 is a voltage divider. Voltage divider 133 comprises a voltage source, an electrical potential source at voltage HV, connected to resistive elements in series, series resistors labeled R. Voltage divider 133 is configured such that different nodes 133a, 133b, 133c, 133d, 133e, 133f of voltage divider 133 are raised to different electric potentials, with the greatest absolute value of voltage applied to the segment furthest from the source of the droplet flow stream along the longitudinal axis thereof. Voltage divider 133 is configured such that different segments of deflector plates 131a, 131b are electrically connected to different nodes 133a, 133b, 133c, 133d, 133e, 133f of voltage divider 133, where the voltage at node 133a is greater than the voltage at 133b is greater than the voltage at 133c is greater than the voltage at 133d is greater than the voltage at 133e is greater than the voltage at 133f. Resistive elements of voltage divider 133 are each identical resistors, R. However, in other embodiments any convenient resistances may be applied at different stages of the voltage divider, such that any desired voltage can be applied to different segments of the droplet deflector. In some cases, resistances of the voltage divider may increase or decrease along the longitudinal axis of the droplet flow stream. In other cases, resistances of the voltage divider may vary in another manner.

Droplet deflector 130 comprises a plurality of segments interconnected by highly resistive dielectric spacers 134. Any convenient resistive dielectric material may be applied, such as solid dielectric materials, including, for example, plastics, porcelain or glass. Highly resistive dielectric spacers 134 are configured to electrically isolate each segment of the deflector plates of droplet deflector 130. Highly resistive dielectric spacers 134 are further configured to provide structural support for the deflector plates, i.e., such as is not available from a pure air gap design. In other embodiments, the voltage divider may be integrated into spacers between deflector segments by selecting and configuring dielectric material between segments to act as resistors of a voltage ladder. The electrical resistance offered by each spacer present between segments may be configured based on the material selected for use as the space as well as the shape, e.g., the height, length and width, of each spacer segment.

## FLOW CYTOMETERS

Aspects of the disclosure also include flow cytometers. Flow cytometers of interest include a droplet deflector of the disclosure. As described in detail herein, droplet deflectors of interest include a droplet deflector configured for high-angular deflection of a droplet flow stream. In addition, flow cytometers include a light source configured to irradiate the particles in the flow stream at an interrogation point within a flow cell.

Flow cells of interest include a cuvette configured to transport particles in a flow stream. As discussed herein, a "flow cell" is described in its conventional sense to refer to a component containing a flow channel for a liquid flow stream for transporting particles in a sheath fluid. Cuvettes of interest have a passage (i.e., flow channel) running therethrough. The flow stream for which the flow channel is configured may include a liquid sample injected from a sample tube. In certain instances, the flow cell includes a light-accessible flow channel. The cuvette may be comprised of, e.g., quartz, glass, clear plastic, and the like. In some embodiments, cuvettes are formed from silica, such as fused silica. In some cases, the flow cell is configured for irradiation with light from a light source at one or more interrogation points. The "interrogation point" discussed herein refers to a region within the flow cell in which the particle is irradiated by light from the light source, e.g., for analysis. The size of the interrogation point may vary as desired. For example, where 0 $\mu$m represents the optical axis of light emitted by the light source, the interrogation point may range from -50 $\mu$m to 50 $\mu$m, such as - 25 $\mu$m to 40 $\mu$m, and including -15 $\mu$m to 30 $\mu$m. Depending on certain considerations (e.g., the number and arrangement of lasers), multiple irradiation points may exist within the flow cells.

In some embodiments, the flow cell includes, or is configured for use with, a sample injection port configured to provide a sample to the flow cell. In embodiments, the sample injection system is configured to provide suitable flow of sample to the flow cell inner chamber (i.e., flow channel). Depending on the desired characteristics of the flow stream, the rate of sample conveyed to the flow cell chamber by the sample injection port may be 1 μL/min or more, such as 2 μL/min or more, such as 3 μL/min or more, such as 5 μL/min or more, such as 10 μL/min or more, such as 15 μL/min or more, such as 25 μL/min or more, such as 50 μL/min or more and including 100 μL/min or more, where in some instances the rate of sample conveyed to the flow cell chamber by the sample injection port is 1 μL/sec or more, such as 2 μL/sec or more, such as 3 μL/sec or more, such as 5 μL/sec or more, such as 10 μL/sec or more, such as 15 μL/sec or more, such as 25 μL/sec or more, such as 50 μL/sec or more and including 100 μL/sec or more.

The sample injection port may be an orifice positioned in a wall of the inner chamber or may be a conduit positioned at the proximal end of the inner chamber. Where the sample injection port is an orifice positioned in a wall of the inner chamber, the sample injection port orifice may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, etc., as well as irregular shapes, e.g., a parabolic bottom portion coupled to a planar top portion. In certain embodiments, the sample injection port has a circular orifice. The size of the sample injection port orifice may vary depending on shape, in certain instances, having an opening ranging from 0.1 mm to 5.0 mm, e.g., 0.2 to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm.

In certain instances, the sample injection port is a conduit positioned at a proximal end of the flow cell inner chamber. For example, the sample injection port may be a conduit positioned to have the orifice of the sample injection port in line with the flow cell orifice. Where the sample injection port is a conduit positioned in line with the flow cell orifice, the cross-sectional shape of the sample injection tube may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. The orifice of the conduit may vary depending on shape, in certain instances, having an opening ranging from 0.1 mm to 5.0 mm, e.g., 0.2 to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm. The shape of the tip of the sample injection port may be the same or different from the cross-section shape of the sample injection tube. For example, the orifice of the sample injection port may include a beveled tip having a bevel angle ranging from 1° to 10°, such as from 2° to 9°, such as from 3° to 8°, such as from 4° to 7° and including a bevel angle of 5°.

In some embodiments, the flow cell also includes a sheath fluid injection port configured to provide a sheath fluid to the flow cell. In embodiments, the sheath fluid injection system is configured to provide a flow of sheath fluid to the flow cell inner chamber, for example in conjunction with the sample to produce a laminated flow stream of sheath fluid surrounding the sample flow stream. Depending on the desired characteristics of the flow stream, the rate of sheath fluid conveyed to the flow cell chamber by the may be 25 μL/sec or more, such as 50 μL/sec or more, such as 75 μL/sec or more, such as 100 μL/sec or more, such as 250 μL/sec or more, such as 500 μL/sec or more, such as 750 μL/sec or more, such as 1000 μL/sec or more and including 2500 μL/sec or more.

In some embodiments, the sheath fluid injection port is an orifice positioned in a wall of the inner chamber. The sheath fluid injection port orifice may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. The size of the sheath fluid injection port orifice may vary depending on shape, in certain instances, having an opening ranging from 0.1 mm to 5.0 mm, e.g., 0.2 mm to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm.

As described above, flow cytometers include a light source configured to irradiate the particles in the flow stream at an interrogation point within a flow cell. The number of light sources in the flow cytometers may vary. In some embodiments, flow cytometers include a single light source. Alternatively, flow cytometers may in some instances include a plurality of light sources. In some such instances, the number of light sources ranges from 2 to 10, such as 2 to 5, and including 2 to 4. Any convenient light source may be employed as the light source described herein. In some embodiments, the light source is a laser. In embodiments, the laser may be any convenient laser, such as a continuous wave laser. For example, the laser may be a diode laser, such as an ultraviolet diode laser, a visible diode laser and a near-infrared diode laser. In other embodiments, the laser may be a helium-neon (HeNe) laser. In some instances, the laser is a gas laser, such as a helium-neon laser, argon laser, krypton laser, xenon laser, nitrogen laser, $CO_2$ laser, CO laser, argon-fluorine (ArF) excimer laser, krypton-fluorine (KrF) excimer laser, xenon chlorine (XeCl) excimer laser or xenon-fluorine (XeF) excimer laser or a combination thereof. In other instances, the subject flow cytometers include a dye laser, such as a stilbene, coumarin or rhodamine laser. In yet other instances, lasers of interest include a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof. In still other instances, the subject flow cytometers include a solid-state laser, such as a ruby laser, an Nd:YAG laser, NdCrYAG laser, Er:YAG laser, Nd:YLF laser, Nd:YVO$_4$ laser, Nd:YCa$_4$O(BO$_3$)$_3$ laser, Nd:YCOB laser, titanium sapphire laser, thulium YAG laser, ytterbium YAG laser, ytterbium$_2$O$_3$ laser or cerium doped lasers and combinations thereof.

Laser light sources according to certain embodiments may also include one or more optical adjustment components. In certain embodiments, the optical adjustment component is located between the light source and the flow cell, and may include any device that is capable of changing the spatial width of irradiation or some other characteristic of irradiation from the light source, such as for example, irradiation direction, wavelength, beam width, beam intensity and focal spot. Optical adjustment protocols may include any convenient device which adjusts one or more characteristics of the light source, including but not limited to lenses, mirrors, filters, fiber optics, wavelength separators, pinholes, slits, collimating protocols and combinations thereof. In certain embodiments, flow cytometers of interest include one or more focusing lenses. The focusing lens, in one example, may be a de-magnifying lens. In still other embodiments, flow cytometers of interest include fiber optics.

The light source may be positioned any suitable distance from the flow cell, such as where the light source and the flow cell are separated by 0.005 mm or more, such as 0.01 mm or more, such as 0.05 mm or more, such as 0.1 mm or more, such as 0.5 mm or more, such as 1 mm or more, such as 5 mm or more, such as 10 mm or more, such as 25 mm or more and including at a distance of 100 mm or more. In addition, the light source may be positioned at any suitable angle relative to the flow cell, such as at an angle ranging from 10 degrees to 90 degrees, such as from 15 degrees to 85 degrees, such as from 20 degrees to 80 degrees, such as from 25 degrees to 75 degrees and including from 30 degrees to 60 degrees, for example at a 90 degree angle.

In some embodiments, light sources of interest include a plurality of lasers configured to provide laser light for discrete irradiation of the flow stream, such as 2 lasers or more, such as 3 lasers or more, such as 4 lasers or more, such as 5 lasers or more, such as 10 lasers or more, and including 15 lasers or more configured to provide laser light for discrete irradiation of the flow stream. Depending on the desired wavelengths of light for irradiating the flow stream, each laser may have a specific wavelength that varies from 200 nm to 1500 nm, such as from 250 nm to 1250 nm, such as from 300 nm to 1000 nm, such as from 350 nm to 900 nm and including from 400 nm to 800 nm. In certain embodiments, lasers of interest may include one or more of a 405 nm laser, a 488 nm laser, a 561 nm laser and a 635 nm laser.

In certain embodiments, the light source is a light beam generator that is configured to generate two or more beams of frequency shifted light. In some instances, the light beam generator includes a laser, a radiofrequency generator configured to apply radiofrequency drive signals to an acousto-optic device to generate two or more angularly deflected laser beams. In these embodiments, the laser may be a pulsed lasers or continuous wave laser. For example, lasers in light beam generators of interest include those listed above.

The acousto-optic device may be any convenient acousto-optic protocol configured to frequency shift laser light using applied acoustic waves. In certain embodiments, the acousto-optic device is an acousto-optic deflector. The acousto-optic device in the subject system is configured to generate angularly deflected laser beams from the light from the laser and the applied radiofrequency drive signals. The radiofrequency drive signals may be applied to the acousto-optic device with any suitable radiofrequency drive signal source, such as a direct digital synthesizer (DDS), arbitrary waveform generator (AWG), or electrical pulse generator.

In embodiments, a controller is configured to apply radiofrequency drive signals to the acousto-optic device to produce the desired number of angularly deflected laser beams in the output laser beam, such as being configured to apply 3 or more radiofrequency drive signals, such as 4 or more radiofrequency drive signals, such as 5 or more radiofrequency drive signals, such as 6 or more radiofrequency drive signals, such as 7 or more radiofrequency drive signals, such as 8 or more radiofrequency drive signals, such as 9 or more radiofrequency drive signals, such as 10 or more radiofrequency drive signals, such as 15 or more radiofrequency drive signals, such as 25 or more radiofrequency drive signals, such as 50 or more radiofrequency drive signals and including being configured to apply 100 or more radiofrequency drive signals.

In some instances, to produce an intensity profile of the angularly deflected laser beams in the output laser beam, the controller is configured to apply radiofrequency drive signals having an amplitude that varies such as from about 0.001 V to about 500 V, such as from about 0.005 V to about 400 V, such as from about 0.01 V to about 300 V, such as from about 0.05 V to about 200 V, such as from about 0.1 V to about 100 V, such as from about 0.5 V to about 75 V, such as from about 1 V to 50 V, such as from about 2 V to 40 V, such as from 3 V to about 30 V and including from about 5 V to about 25 V. Each applied radiofrequency drive signal has, in some embodiments, a frequency of from about 0.001 MHz to about 500 MHz, such as from about 0.005 MHz to about 400 MHz, such as from about 0.01 MHz to about 300 MHz, such as from about 0.05 MHz to about 200 MHz, such as from about 0.1 MHz to about 100 MHz, such as from about 0.5 MHz to about 90 MHz, such as from about 1 MHz to about 75 MHz, such as from about 2 MHz to about 70 MHz, such as from about 3 MHz to about 65 MHz, such as from about 4 MHz to about 60 MHz and including from about 5 MHz to about 50 MHz.

In certain embodiments, the controller has a processor having memory operably coupled to the processor such that the memory includes instructions stored thereon, which when executed by the processor, cause the processor to produce an output laser beam with angularly deflected laser beams having a desired intensity profile. For example, the memory may include instructions to produce two or more angularly deflected laser beams with the same intensities, such as 3 or more, such as 4 or more, such as 5 or more, such as 10 or more, such as 25 or more, such as 50 or more and including memory may include instructions to produce 100 or more angularly deflected laser beams with the same intensities. In other embodiments, the memory may include instructions to produce two or more angularly deflected laser beams with different intensities, such as 3 or more, such as 4 or more, such as 5 or more, such as 10 or more, such as 25 or more, such as 50 or more and including memory may include instructions to produce 100 or more angularly deflected laser beams with different intensities.

In certain embodiments, the controller has a processor having memory operably coupled to the processor such that the memory includes instructions stored thereon, which when executed by the processor, cause the processor to produce an output laser beam having increasing intensity from the edges to the center of the output laser beam along the horizontal axis. In these instances, the intensity of the angularly deflected laser beam at the center of the output beam may range from 0.1% to about 99% of the intensity of the angularly deflected laser beams at the edge of the output laser beam along the horizontal axis, such as from 0.5% to about 95%, such as from 1% to about 90%, such as from about 2% to about 85%, such as from about 3% to about 80%, such as from about 4% to about 75%, such as from about 5% to about 70%, such as from about 6% to about 65%, such as from about 7% to about 60%, such as from about 8% to about 55% and including from about 10% to about 50% of the intensity of the angularly deflected laser beams at the edge of the output laser beam along the horizontal axis. In other embodiments, the controller has a processor having memory operably coupled to the processor such that the memory includes instructions stored thereon, which when executed by the processor, cause the processor to produce an output laser beam having an increasing intensity from the edges to the center of the output laser beam along the horizontal axis. In these instances, the intensity of the angularly deflected laser beam at the edges of the output beam may range from 0.1% to about 99% of the intensity of the angularly deflected laser beams at the center of the output laser beam along the horizontal axis, such as from 0.5% to about 95%, such as from 1% to about 90%, such as from about 2% to about 85%, such as from about 3% to about 80%, such as from about 4% to about 75%, such as from about 5% to about 70%, such as from about 6% to about 65%, such as from about 7% to about 60%, such as from about 8% to about 55% and including from about 10% to about 50% of the intensity of the angularly deflected laser beams at the center of the output laser beam along the horizontal axis. In yet other embodiments, the controller has a processor having memory operably coupled to the processor such that the memory includes instructions stored thereon, which when executed by the processor, cause the processor to produce an output laser beam having an intensity profile with a Gaussian distribution along the horizontal axis. In still other embodiments, the controller has a processor having memory operably coupled to the processor such that the memory includes instructions stored thereon, which when executed by the processor, cause the processor to produce an output laser beam having a top hat intensity profile along the horizontal axis.

In embodiments, light beam generators of interest may be configured to produce angularly deflected laser beams in the output laser beam that are spatially separated. Depending on the applied radiofrequency drive signals and desired irradiation profile of the output laser beam, the angularly deflected laser beams may be separated by 0.001 $\mu$m or more, such as by 0.005 $\mu$m or more, such as by 0.01 $\mu$m or more, such as by 0.05 $\mu$m or more, such as by 0.1 $\mu$m or more, such as by 0.5 $\mu$m or more, such as by 1 $\mu$m or more, such as by 5 $\mu$m or more, such as by 10 $\mu$m or more, such as by 100 $\mu$m or more, such as by 500 $\mu$m or more, such as by 1000 $\mu$m or more and including by 5000 $\mu$m or more. In some embodiments, systems are configured to produce angularly deflected laser beams in the output laser beam that overlap, such as with an adjacent angularly deflected laser beam along a horizontal axis of the output laser beam. The overlap between adjacent angularly deflected laser beams (such as overlap of beam spots) may be an overlap of 0.001 $\mu$m or more, such as an overlap of 0.005 $\mu$m or more, such as an overlap of 0.01 $\mu$m or more, such as an overlap of 0.05 $\mu$m or more, such as an overlap of 0.1 $\mu$m or more, such as an overlap of 0.5 $\mu$m or more, such as an overlap of 1 $\mu$m or more, such as an overlap of 5 $\mu$m or more, such as an overlap of 10 $\mu$m or more and including an overlap of 100 $\mu$m or more.

In certain instances, light beam generators configured to generate two or more beams of frequency shifted light include laser excitation modules as described in U.S. Patent Nos. 9,423,353; 9,784,661; 9,983,132; 10,006,852; 10,036,699; 10,078,045; 10,222,316; 10,288,546; 10,324,019; 10,408,758; 10,451,538; 10,620,111; 10,684,211; 10,845,295; 10,935,482; 10,935,485; 11,105,728; 11,280,718; 11,327,016; 11,366,052; 11,371,937; 11,692,926; 11,630,053; 11,774,343; 11,940,369; and 11,946,851; the disclosures of which are herein incorporated by reference.

In addition, flow cytometers include a detector configured to collect light emitted by the irradiated particles. The light detectors are configured to detect particle-modulated light conveyed by the fiber optic light collection elements and generate signals based on a characteristic of that light (e.g., intensity). For example, the one or more particle-modulated light detector(s) may include one or more side-scattered light detectors for detecting side-scatter wavelengths of light (i.e., light refracted and reflected from the surfaces and internal structures of the particle). In some embodiments, flow cytometers include a single side-scattered light detector. In other embodiments, flow cytometers include multiple side-scattered light detectors, such as 2 or more, such as 3 or more, such as 4 or more, and including 5 or more.

Any convenient detector for detecting collected light may be used in the side-scattered light detector described herein. Detectors of interest may include, but are not limited to, optical sensors or detectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In certain embodiments, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In certain embodiments, the detector is a photomultiplier tube, such as a photomultiplier tube having an active detecting surface area of each region that ranges from 0.01 $cm^2$ to 10 $cm^2$, such as from 0.05 $cm^2$ to 9 $cm^2$, such as from 0.1 $cm^2$ to 8 $cm^2$, such as from 0.5 $cm^2$ to 7 $cm^2$ and including from 1 $cm^2$ to 5 $cm^2$.

In embodiments, the subject flow cytometers also include a fluorescent light detector configured to detect one or more fluorescent wavelengths of light. In other embodiments, flow cytometers include multiple fluorescent light detectors such as 2 or more, such as 3 or more, such as 4 or more, 5 or more, 10 or more, 15 or more, and including 20 or more.

Any convenient detector for detecting collected light may be used in the fluorescent light detector described herein. Detectors of interest may include, but are not limited to, optical sensors or detectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In certain embodiments, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In certain embodiments, the detector is a photomultiplier tube, such as a photomultiplier tube having an active detecting surface area of each region that ranges from 0.01 $cm^2$ to 10 $cm^2$, such as from 0.05 $cm^2$ to 9 $cm^2$, such as from, such as from 0.1 $cm^2$ to 8 $cm^2$, such as from 0.5 $cm^2$ to 7 $cm^2$ and including from 1 $cm^2$ to 5 $cm^2$.

Where the subject flow cytometers include multiple fluorescent light detectors, each fluorescent light detector may be the same, or the collection of fluorescent light detectors may be a combination of different types of detectors. For example, where the subject flow cytometers include two fluorescent light detectors, in some embodiments the first fluorescent light detector is a CCD-type device and the second fluorescent light detector (or imaging sensor) is a CMOS-type device. In other embodiments, both the first and second fluorescent light detectors are CCD-type devices. In yet other embodiments, both the first and second fluorescent light detectors are CMOS-type devices. In still other embodiments, the first fluorescent light detector is a CCD-type device and the second fluorescent light detector is a photomultiplier tube (PMT). In still other embodiments, the first fluorescent light detector is a CMOS-type device and the second fluorescent light detector is a photomultiplier tube. In yet other embodiments, both the first and second fluorescent light detectors are photomultiplier tubes.

In embodiments of the present disclosure, fluorescent light detectors of interest are configured to measure collected light at one or more wavelengths, such as at 2 or more wavelengths, such as at 5 or more different wavelengths, such as at 10 or more different wavelengths, such as at 25 or more different wavelengths, such as at 50 or more different wavelengths, such as at 100 or more different wavelengths, such as at 200 or more different wavelengths, such as at 300 or more different wavelengths and including measuring light emitted by a sample in the flow stream at 400 or more different wavelengths. In some embodiments, 2 or more detectors in the modules as described herein are configured to measure the same or overlapping wavelengths of collected light.

In some embodiments, fluorescent light detectors of interest are configured to measure collected light over a range of wavelengths (e.g., 200 nm - 1000 nm). In certain embodiments, detectors of interest are configured to collect spectra of light over a range of wavelengths. For example, flow cytometers may include one or more detectors configured to collect spectra of light over one or more of the wavelength ranges of 200 nm - 1000 nm. In yet other embodiments, detectors of interest are configured to measure light emitted by a sample in the flow stream at one or more specific wavelengths. For example, modules may include one or more detectors configured to measure light at one or more of 450 nm, 518 nm, 519 nm, 561 nm, 578 nm, 605 nm, 607 nm, 625 nm, 650 nm, 660 nm, 667 nm, 670 nm, 668 nm, 695 nm, 710 nm, 723 nm, 780 nm, 785 nm, 647 nm, 617 nm and any combinations thereof. In certain embodiments, one or more detectors may be configured to be paired with specific fluorophores, such as those used with the sample in a fluorescence assay.

Flow cytometers may include any suitable mechanism(s) for providing sheath fluid and sample fluid to the sample fluid input coupler and sheath fluid input coupler. For example, the sample fluid input coupler may be fluidically connected to a sample fluid line (e.g., tubing) fluidically connected to a sample fluid reservoir. Similarly, the sheath fluid input coupler may be fluidically connected to a sheath fluid line fluidically connected to a sheath fluid reservoir. Similarly, flow cytometers may include any suitable mechanism(s) for managing waste from the flow stream. The fluidic output coupler may be fluidically connected to a waste line fluidically connected to a waste reservoir. Fluid management systems that may be adapted for use in the subject flow cytometers are provided in U.S. Patent Application Publication No. 2022/0341838, the disclosure of which is incorporated by reference herein in its entirety.

Suitable flow cytometry systems may include, but are not limited to those described in Ormerod (ed.), Flow Cytometry: A Practical Approach, Oxford Univ. Press (1997); Jaroszeski et al. (eds.), Flow Cytometry Protocols, Methods in Molecular Biology No. 91, Humana Press (1997); Practical Flow Cytometry, 3rd ed., Wiley-Liss (1995); Virgo, et al. (2012) Ann Clin Biochem. Jan;49(pt 1):17-28; Linden, et. al., Semin Throm Hemost. 2004 Oct;30(5):502-11; Alison, et al. J Pathol, 2010 Dec; 222(4):335-344; and Herbig, et al. (2007) Crit Rev Ther Drug Carrier Syst. 24(3):203-255; the disclosures of which are incorporated herein by reference. In certain instances, flow cytometry systems of interest include BD Biosciences FACSCanto™ flow cytometer, BD Biosciences FACSCanto™ II flow cytometer, BD Accuri™ flow cytometer, BD Accuri™ C6 Plus flow cytometer, BD Biosciences FACSCelesta™ flow cytometer, BD Biosciences FACSLyric™ flow cytometer, BD Biosciences FACSVerse™ flow cytometer, BD Biosciences FACSymphony™ flow cytometer, BD Biosciences LSRFortessa™ flow cytometer, BD Biosciences LSRFortessa™ X-20 flow cytometer, BD Biosciences FACSPresto™ flow cytometer, BD Biosciences FACSVia™ flow cytometer and BD Biosciences FACSCalibur™ cell sorter, a BD Biosciences FACSCount™ cell sorter, BD Biosciences FACSLyric™ cell sorter, BD Biosciences Via™ cell sorter, BD Biosciences Influx™ cell sorter, BD Biosciences Jazz™ cell sorter, BD Biosciences Aria™ cell sorter, BD Biosciences FACSAria™ II cell sorter, BD Biosciences FACSAria™ III cell sorter, BD Biosciences FACSAria™ Fusion cell sorter and BD Biosciences FACSMelody™ cell sorter, BD Biosciences FACSymphony™ S6 cell sorter, BD Biosciences FACSDiscover™ cell sorter, or the like.

In some embodiments, the subject systems are flow cytometric systems, such those described in U.S. Patent Nos. 10,663,476; 10,620,111; 10,613,017; 10,605,713; 10,585,031; 10,578,542; 10,578,469; 10,481,074; 10,302,545; 10,145,793; 10,113,967; 10,006,852; 9,952,076; 9,933,341; 9,726,527; 9,453,789; 9,200,334; 9,097,640; 9,095,494; 9,092,034; 8,975,595; 8,753,573; 8,233,146; 8,140,300; 7,544,326; 7,201,875; 7,129,505; 6,821,740; 6,813,017; 6,809,804; 6,372,506; 5,700,692; 5,643,796; 5,627,040; 5,620,842; 5,602,039; 4,987,086; 4,498,766; the disclosures of which are herein incorporated by reference in their entirety.

In some embodiments, the flow cytometer is configured as an imaging flow cytometer. For example, in certain instances, the subject systems are flow cytometry systems configured for imaging particles in a flow stream by fluorescence imaging using radiofrequency tagged emission (FIRE), such as those described in Diebold, et al. Nature Photonics Vol. 7(10); 806-810 (2013) as well as described in U.S. Patent Nos. 9,423,353; 9,784,661; 9,983,132; 10,006,852; 10,036,699; 10,078,045; 10,222,316; 10,288,546; 10,324,019; 10,408,758; 10,451,538; 10,620,111; 10,684,211; 10,845,295; 10,935,482; 10,935,485; 11,105,728; 11,280,718; 11,327,016; 11,366,052; 11,371,937; 11,692,926; 11,630,053; 11,774,343; 11,940,369; and 11,946,851; the disclosures of which are herein incorporated by reference. In some embodiments where the flow cytometer is a particle sorter, the particle sorter is an image enabled particle sorter. Image enabled particle sorters are described in U.S. Patent Nos. 10,324,019; 10,620,111; 11,105,728; and 11,774,343; as well as U.S. Patent Application Nos. 18/537,103; 18/657,618; 18,657,623 and 18/657,633; the disclosures of which are herein incorporated by reference in their entirety.

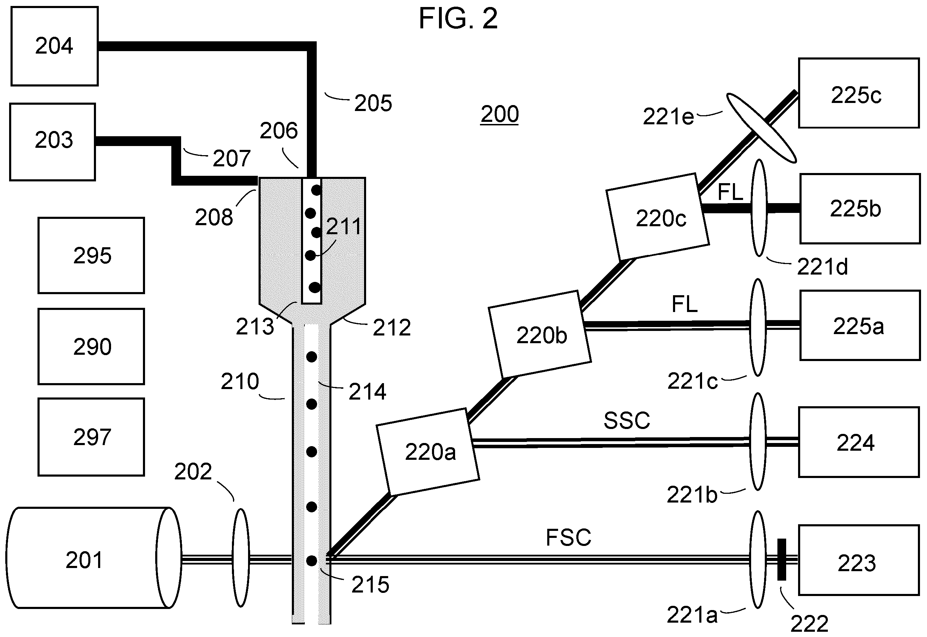

FIG. 2 shows a system 200 for flow cytometry in accordance with an illustrative embodiment of the present disclosure. System 200 includes a laser 201 configured to irradiate particles 211 in flow stream 214 at interrogation point 215 within flow cell 210. While the example of FIG. 2 shows a single laser, it is understood that multiple lasers could also be used. The laser beam from laser 201 is directed to focusing lens 202 which focuses the beam onto the portion of a fluid stream where particles 211 of a sample are located, within the flow cell 210. The flow cell 210 is part of a fluidics system which directs particles, typically one at a time, in a stream to the focused laser beam for interrogation. Alternatively, where the flow cytometer is a stream-in-air cytometer, a nozzle top may be employed.

As shown in FIG. 2, flow cell 210 is fluidically connected to sheath fluid reservoir 203 comprising a sheath fluid and sample fluid reservoir 204 comprising a sample fluid. Sheath fluid from sheath fluid reservoir 203 is provided to at least one sheath fluid injection port 208 via conduit (i.e., sheath fluid line) 207. In addition, sample fluid containing particles 211 from sample fluid reservoir 204 is provided to sample injection port 206 via conduit (i.e., sample fluid line) 205. Sample injection port 206 is fluidically connected to sample injector 213 (e.g., sample injection needle) which is configured to introduce particles 211 into the interior of flow cell 210. Particles 211 are hydrodynamically focused via sheath fluid entering from sheath fluid injection port 208 such that flow stream 214 forms downstream of tapered portion 212 of flow cell 210. Particles emitting at the distal end of flow cell 210 may be disposed of and/or collected via any suitable protocol. For example, depending on the type of flow cytometry being performed, particles may be collected at the distal end of flow cell 210, e.g., via a waste line. Alternatively, particles may be sorted.

The light from the laser beam(s) interacts with the particles 211 in the sample by diffraction, refraction, reflection, scattering, and absorption with re-emission at various different wavelengths depending on the characteristics of the particle such as its size, internal structure, and the presence of one or more fluorescent molecules attached to or naturally present on or in the particle. The fluorescence emissions as well as the diffracted light, refracted light, reflected light, and scattered light may be routed to one or more detectors. In particular, forward scattered light (FSC) is routed to forward-scattered light detector 223. The forward-scattered light detector 223 is positioned slightly off axis from the direct beam through the flow cell 210 and is configured to detect diffracted light, the excitation light that travels through or around the particle in mostly a forward direction. The intensity of the light detected by the forward-scattered light detector 223 is dependent on the overall size of the particle. The forward-scatter detector can include, e.g., a photodiode. Positioned between forward-scattered light detector 223 are optical filter 221a and scatter bar 222. Optical filter 221a may be configured to filter out at least one wavelength of non-FSC light, while scatter bar 222 may be configured to prevent the incident beam from laser 201 (i.e., non-scattered light) from being detected by forward-scattered light detector 223.

In addition, side-scattered light (SSC) is detected by side-scattered light detector 224. In other words, side-scattered light detector 224 is configured to detect refracted and reflected light from the surfaces and internal structures of the particles 211 that tend to increase with increasing particle complexity of structure. In the example of FIG. 2, flow cytometer 200 includes dichroic mirror 220a configured to reflect SSC light to side-scattered light detector 224 while passing non-SSC (e.g., fluorescent) light. Optical filter 221b is configured to prevent at least one wavelength of non-SSC light from being detected by side-scattered light detector 224. Also shown are fluorescent light detectors 225a-225c which are each configured to detect different wavelengths of fluorescent light. For example, dichroic mirror 220b may be configured to reflect fluorescent light (FL) corresponding to a first wavelength (or range of wavelengths) to fluorescent light detector 225a while passing other wavelengths of light. Optical filter 221c may be configured to prevent at least one wavelength of light that does not correspond to the first wavelength (or range of wavelengths) from being detected by fluorescent light detector 225a. Similarly, dichroic mirror 220c is configured to reflect FL light corresponding to a second wavelength (or range of wavelengths) to fluorescent light detector 225b while passing a third wavelength of light (or range of wavelengths) for detection by fluorescent light detector 225c. Optical filter 221d is configured to prevent at least one wavelength of light that does not correspond to the second wavelength (or range of wavelengths) from being detected by fluorescent light detector 225b. In addition, Optical filter 221e is configured to prevent at least one wavelength of light that does not correspond to the third wavelength (or range of wavelengths) from being detected by fluorescent light detector 225c.

One of skill in the art will recognize that a flow cytometer in accordance with an embodiment of the present disclosure is not limited to the flow cytometer depicted in FIG. 2, but can include any flow cytometer known in the art. For example, a flow cytometer may have any number of lasers, beam splitters, filters, and detectors at various wavelengths and in various different configurations. For example, while the embodiment of FIG. 2 shows 3 fluorescent light detectors for illustrative purposes, it is understood that any suitable number of fluorescent light detectors may be employed.

In operation, cytometer operation is controlled by a controller/processor 290, and the measurement data from the detectors can be stored in the memory 295 and processed by the controller/processor 290. Although not shown explicitly, the controller/processor 290 is coupled to the detectors to receive the output signals therefrom, and may also be coupled to electrical and electromechanical components of the flow cytometer to control the laser 201, fluid flow parameters, and the like. Input/output (I/O) capabilities 297 may be provided also in the system. The memory 295, controller/processor 290, and I/O 297 may be entirely provided as an integral part of the flow cytometer. In such an embodiment, a display may also form part of the I/O capabilities 297 for presenting experimental data to users of the cytometer 200. Alternatively, some or all of the memory 295 and controller/processor 290 and I/O capabilities may be part of one or more external devices such as a general purpose computer. In some embodiments, some or all of the memory 295 and controller/processor 290 can be in wireless or wired communication with the cytometer 210. The controller/processor 290 in conjunction with the memory 295 and the I/O 297 can be configured to perform various functions related to the preparation and analysis of a flow cytometer experiment.

Different fluorescent molecules in a fluorochrome panel used for a flow cytometer experiment will emit light in their own characteristic wavelength bands. The particular fluorescent labels used for an experiment and their associated fluorescent emission bands may be selected to generally coincide with the filter windows of the detectors. The I/O 297 can be configured to receive data regarding a flow cytometer experiment having a panel of fluorescent labels and a plurality of cell populations having a plurality of markers, each cell population having a subset of the plurality of markers. The I/O 297 can also be configured to receive biological data assigning one or more markers to one or more cell populations, marker density data, emission spectrum data, data assigning labels to one or more markers, and cytometer configuration data. Flow cytometer experiment data, such as label spectral characteristics and flow cytometer configuration data can also be stored in the memory 295. The controller/processor 290 can be configured to evaluate one or more assignments of labels to markers.

In some embodiments, the subject systems are particle sorting systems that are configured to sort particles with an enclosed particle sorting module, such as those described in U.S. Patent Publication No. 2017/0299493, filed on March 28, 2017, the disclosure of which is incorporated herein by reference. In certain embodiments, particles (e.g., cells) of the sample are sorted using a sort decision module having a plurality of sort decision units, such as those described in U.S. Patent Publication No. 2020/0256781, filed on December 23, 2019, the disclosure of which is incorporated herein by reference. In some embodiments, systems for sorting components of a sample include a particle sorting module having deflection plates, such as described in U.S. Patent Publication No. 2017/0299493, filed on March 28, 2017, the disclosure of which is incorporated herein by reference.

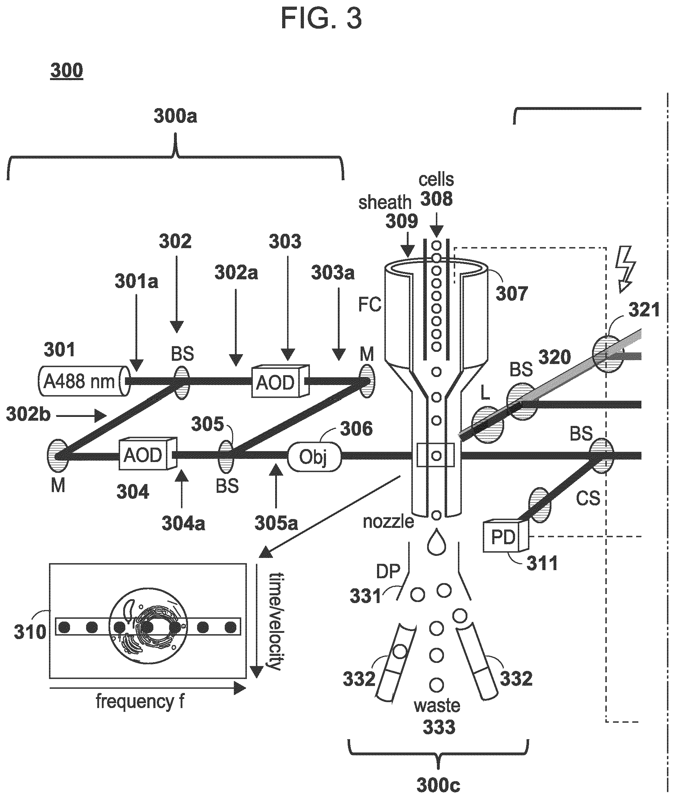

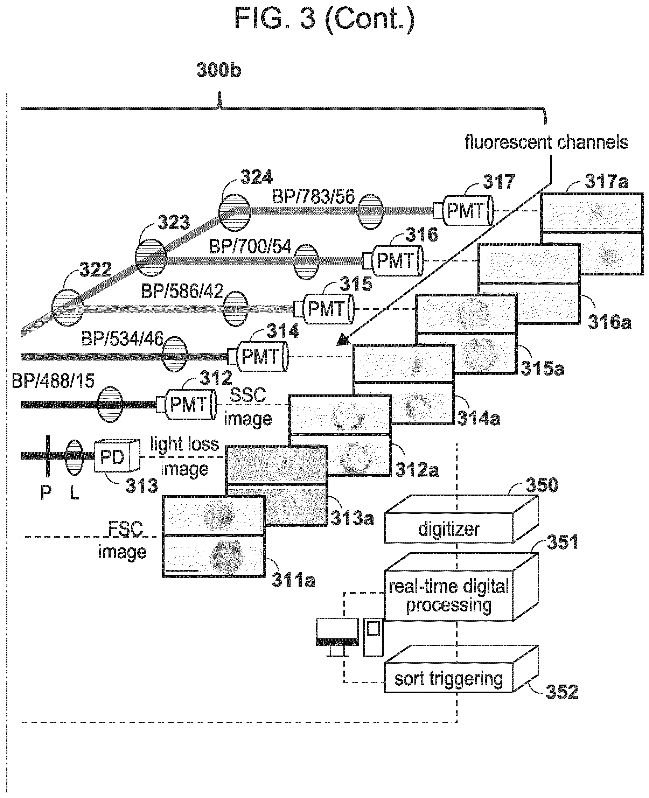

In certain embodiments, systems are a fluorescence imaging using radiofrequency tagged emission image-enabled particle sorter, such as depicted in **FIG.** 3. Particle sorter 300 includes a light irradiation component 300a which includes light source 301 (e.g., 488 nm laser) which generates output beam of light 301a that is split with beamsplitter 302 into beams 302a and 302b. Light beam 302a is propagated through acousto-optic device (e.g., an acousto-optic deflector, AOD) 303 to generate an output beam 303a having one or more angularly deflected beams of light. In some instances, output beam 303a generated from acousto-optic device 303 includes a local oscillator beam and a plurality of radiofrequency comb beams. Light beam 302b is propagated through acousto-optic device (e.g., an acousto-optic deflector, AOD) 304 to generate an output beam 304a having one or more angularly deflected beams of light. In some instances, output beam 304a generated from acousto-optic device 304 includes a local oscillator beam and a plurality of radiofrequency comb beams. Output beams 303a and 304a generated from acousto-optic devices 303 and 304, respectively are combined with beamsplitter 305 to generate output beam 305a which is conveyed through an optical component 306 (e.g., an objective lens) to irradiate particles in flow cell 307. In certain embodiments, acousto-optic device 303 (AOD) splits a single laser beam into an array of beamlets, each having different optical frequency and angle. Second AOD 304 tunes the optical frequency of a reference beam, which is then overlapped with the array of beamlets at beam combiner 305. In certain embodiments, the light irradiation system having a light source and acousto-optic device can also include those described in Schraivogel, et al. ("High-speed fluorescence image-enabled cell sorting" Science (2022), 375 (6578): 315-320) and United States Patent Publication No. 2021/0404943, the disclosure of which is herein incorporated by reference.

Output beam 305a irradiates sample particles 308 propagating through flow cell 307 (e.g., with sheath fluid 309) at irradiation region 310. As shown in irradiation region 310, a plurality of beams (e.g., angularly deflected radiofrequency shifted beams of light depicted as dots across irradiation region 310) overlaps with a reference local oscillator beam (depicted as the shaded line across irradiation region 310). Due to their differing optical frequencies, the overlapping beams exhibit a beating behavior, which causes each beamlet to carry a sinusoidal modulation at a distinct frequency $f_{1-n}$.

Light from the irradiated sample is conveyed to light detection system 300b that includes a plurality of photodetectors. Light detection system 300b includes forward scattered light photodetector 311 for generating forward scatter images 311a and a side scattered light photodetector 312 for generating side scatter images 312a. Light detection system 300b also includes brightfield photodetector 313 for generating light loss images 313a. In some embodiments, forward scatter detector 311 and side scatter detector 312 are photodiodes (e.g., avalanche photodiodes, APDs). In some instances, brightfield photodetector 313 is a photomultiplier tube (PMT). Fluorescence from the irradiated sample is also detected with fluorescence photodetectors 314-317. In some instances, photodetectors 314-317 are photomultiplier tubes. Light from the irradiated sample is directed to the side scatter detection channel 312 and fluorescence detection channels 314-317 through beamsplitter 320. Light detection system 300b includes bandpass optical components 321, 322, 323 and 324 (e.g., dichroic mirrors) for propagating predetermined wavelength of light to photodetectors 314-317. In some instances, optical component 321 is a 534 nm/40 nm bandpass. In some instances, optical component 322 is a 586 nm/42 nm bandpass. In some instances, optical component 323 is a 700 nm/54 nm bandpass. In some instances, optical component 324 is a 783 nm/56 nm bandpass. The first number represents the center of a spectral band. The second number provides a range of the spectral band. Thus, a 510/20 filter extends 10 nm on each side of the center of the spectral band, or from 500 nm to 520 nm.

Data signals generated in response to light detected in scattered light detection channels 311 and 312, brightfield light detection channel 313 and fluorescence detection channels 314-317 are processed by real-time digital processing with processors 350 and 351. Images 311a-317a can be generated in each light detection channel based on the data signals generated in processors 350 and 351. Image-enabled sorting is performed in response to a sort signal generated in sort trigger 352. Sorting component 300c includes deflection plates 331, i.e., deflections plates according to embodiments of the present invention, for deflecting particles into sample containers 332 or to waste stream 333. In some instances, sort component 300c is configured to sort particles with an enclosed particle sorting module, such as those described in U.S. Patent Publication No. 2017/0299493, filed on March 28, 2017, the disclosure of which is incorporated herein by reference. In certain embodiments, sorting component 300c includes a sort decision module having a plurality of sort decision units, such as those described in U.S. Patent Publication No. 2020/0256781, the disclosure of which is incorporated herein by reference.

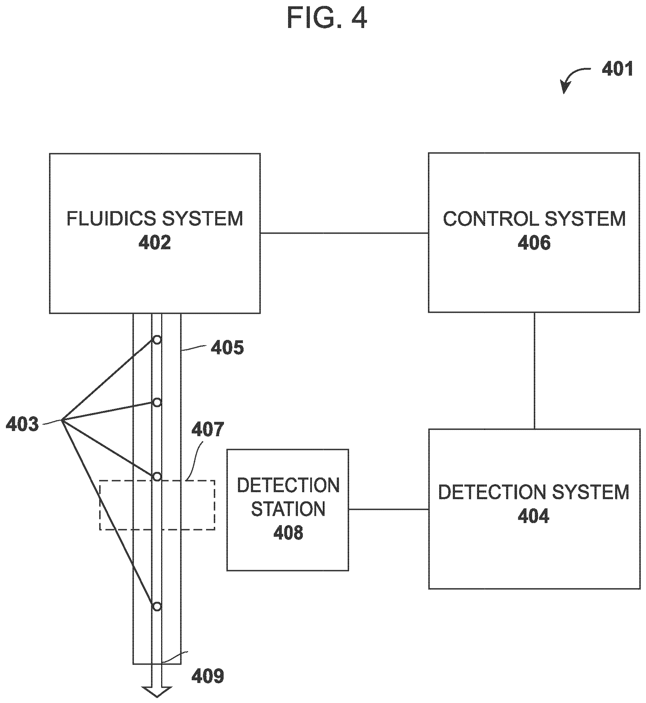

In some embodiments, systems are particle analyzers where the particle analysis system 401 (**FIG. 4**) can be used to analyze and characterize particles, with or without physically sorting the particles into collection vessels. **FIG. 4** shows a functional block diagram of a particle analysis system for computational based sample analysis and particle characterization. In some embodiments, the particle analysis system 401 is a flow system. The particle analysis system 401 includes a fluidics system 402. The fluidics system 402 can include or be coupled with a sample tube 405 and a moving fluid column within the sample tube in which particles 403 (e.g. cells) of a sample move along a common sample path 409.

The particle analysis system 401 includes a detection system 404 configured to collect a signal from each particle as it passes one or more detection stations along the common sample path. A detection station 408 generally refers to a monitored area 407 of the common sample path. Detection can, in some implementations, include detecting light or one or more other properties of the particles 403 as they pass through a monitored area 407. In **FIG. 4,** one detection station 408 with one monitored area 407 is shown. Some implementations of the particle analysis system 401 can include multiple detection stations. Furthermore, some detection stations can monitor more than one area.

Each signal is assigned a signal value to form a data point for each particle. As described above, this data can be referred to as event data. The data point can be a multidimensional data point including values for respective properties measured for a particle. The detection system 404 is configured to collect a succession of such data points in a first-time interval.

The particle analysis system 401 can also include a control system 406. The control system 406 can include one or more processors, an amplitude control circuit and/or a frequency control circuit. The control system shown can be operationally associated with the fluidics system 402. The control system can be configured to generate a calculated signal frequency for at least a portion of the first-time interval based on a Poisson distribution and the number of data points collected by the detection system 404 during the first time interval. The control system 406 can be further configured to generate an experimental signal frequency based on the number of data points in the portion of the first time interval. The control system 406 can additionally compare the experimental signal frequency with that of a calculated signal frequency or a predetermined signal frequency.

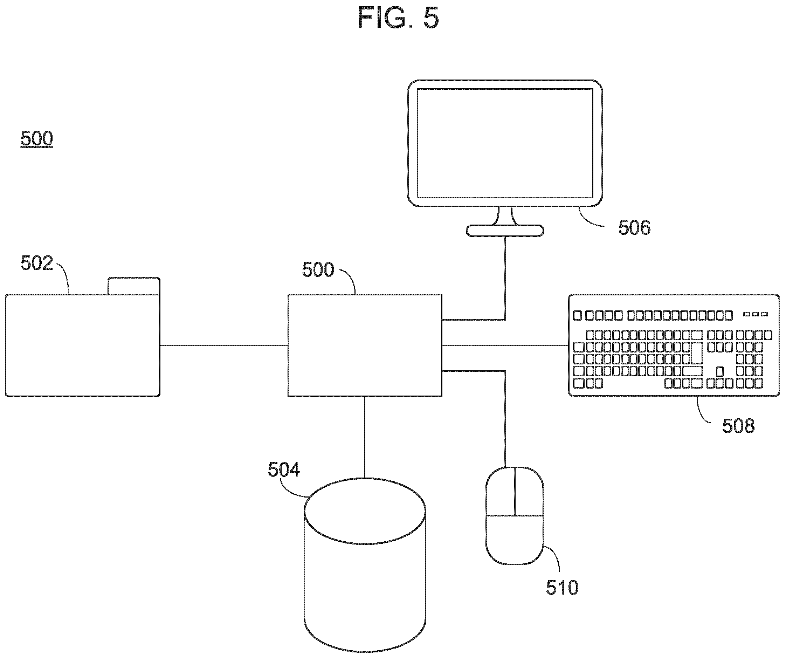

**FIG. 5** shows a functional block diagram for one example of a particle analyzer control system, such as an analytics controller (i.e., processor) 500, for analyzing and displaying biological events. An analytics controller 500 can be configured to implement a variety of processes for controlling graphic display of biological events.

A particle analyzer or sorting system 502 can be configured to acquire biological event data. For example, a flow cytometer can generate flow cytometric event data. The particle analyzer 502 can be configured to provide biological event data to the analytics controller 500. A data communication channel can be included between the particle analyzer or sorting system 502 and the analytics controller 500. The biological event data can be provided to the analytics controller 500 via the data communication channel.

The analytics controller 500 can be configured to receive biological event data from the particle analyzer or sorting system 502. The biological event data received from the particle analyzer or sorting system 502 can include flow cytometric event data. The analytics controller 500 can be configured to provide a graphical display including a first plot of biological event data to a display device 506. The analytics controller 500 can be further configured to render a region of interest as a gate around a population of biological event data shown by the display device 506, overlaid upon the first plot, for example. In some embodiments, the gate can be a logical combination of one or more graphical regions of interest drawn upon a single parameter histogram or bivariate plot. In some embodiments, the display can be used to display particle parameters or saturated detector data.

The analytics controller 500 can be further configured to display the biological event data on the display device 506 within the gate differently from other events in the biological event data outside of the gate. For example, the analytics controller 500 can be configured to render the color of biological event data contained within the gate to be distinct from the color of biological event data outside of the gate. The display device 506 can be implemented as a monitor, a tablet computer, a smartphone, or other electronic device configured to present graphical interfaces.

The analytics controller 500 can be configured to receive a gate selection signal identifying the gate from a first input device. For example, the first input device can be implemented as a mouse 510. The mouse 510 can initiate a gate selection signal to the analytics controller 500 identifying the gate to be displayed on or manipulated via the display device 506 (e.g., by clicking on or in the desired gate when the cursor is positioned there). In some implementations, the first device can be implemented as the keyboard 508 or other means for providing an input signal to the analytics controller 500 such as a touchscreen, a stylus, an optical detector, or a voice recognition system. Some input devices can include multiple inputting functions. In such implementations, the inputting functions can each be considered an input device. For example, as shown in **FIG. 5,** the mouse 510 can include a right mouse button and a left mouse button, each of which can generate a triggering event.

The triggering event can cause the analytics controller 500 to alter the manner in which the data is displayed, which portions of the data is actually displayed on the display device 506, and/or provide input to further processing such as selection of a population of interest for particle sorting.

In some embodiments, the analytics controller 500 can be configured to detect when gate selection is initiated by the mouse 510. The analytics controller 500 can be further configured to automatically modify plot visualization to facilitate the gating process. The modification can be based on the specific distribution of biological event data received by the analytics controller 500.

The analytics controller 500 can be connected to a storage device 504. The storage device 504 can be configured to receive and store biological event data from the analytics controller 500. The storage device 504 can also be configured to receive and store flow cytometric event data from the analytics controller 500. The storage device 504 can be further configured to allow retrieval of biological event data, such as flow cytometric event data, by the analytics controller 500.

A display device 506 can be configured to receive display data from the analytics controller 500. The display data can comprise plots of biological event data and gates outlining sections of the plots. The display device 506 can be further configured to alter the information presented according to input received from the analytics controller 500 in conjunction with input from the particle analyzer 502, the storage device 504, the keyboard 508, and/or the mouse 510.

In some implementations, the analytics controller 500 can generate a user interface to receive example events for sorting. For example, the user interface can include a control for receiving example events or example images. The example events or images or an example gate can be provided prior to collection of event data for a sample, or based on an initial set of events for a portion of the sample.

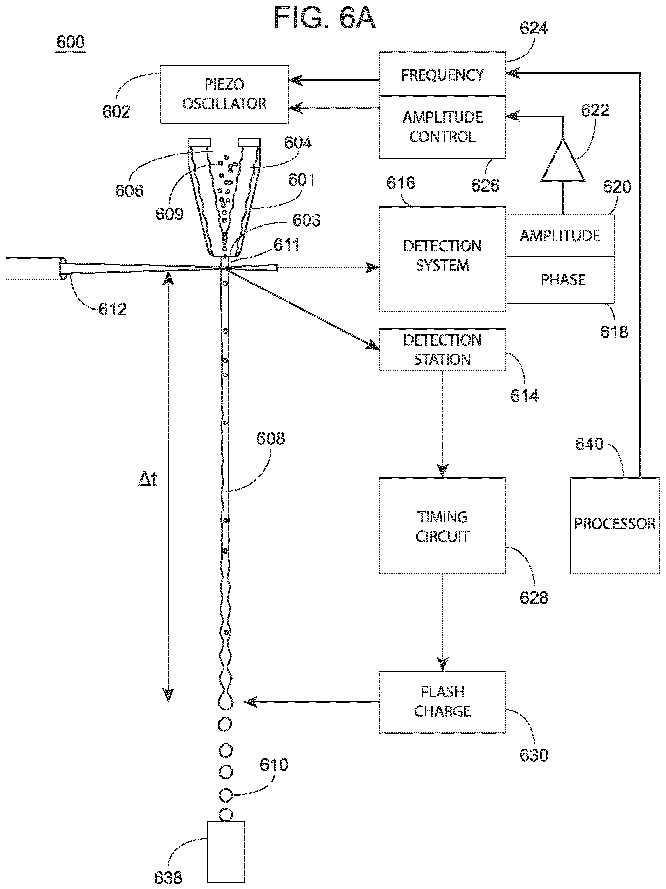

**FIG. 6A** is a schematic drawing of a particle sorter system 600 (e.g., the particle analyzer or sorting system 502) in accordance with one embodiment presented herein. In some embodiments, the particle sorter system 600 is a cell sorter system. As shown in **FIG. 6A,** a drop formation transducer 602 (e.g., piezo-oscillator) is coupled to a fluid conduit 601, which can be coupled to, can include, or can be, a nozzle 603. Within the fluid conduit 601, sheath fluid 604 hydrodynamically focuses a sample fluid 606 comprising particles 609 into a moving fluid column 608 (e.g., a stream). Within the moving fluid column 608, particles 609 (e.g., cells) are lined up in single file to cross a monitored area 611 (e.g., where laser-stream intersect), irradiated by an irradiation source 612 (e.g., a laser). Vibration of the drop formation transducer 602 causes moving fluid column 608 to break into a plurality of drops 610, some of which contain particles 609.

In operation, a detection station 614 (e.g., an event detector) identifies when a particle of interest (or cell of interest) crosses the monitored area 611. Detection station 614 feeds into a timing circuit 628, which in turn feeds into a flash charge circuit 630. At a drop break off point, informed by a timed drop delay ($\Delta t$), a flash charge can be applied to the moving fluid column 608 such that a drop of interest carries a charge. The drop of interest can include one or more particles or cells to be sorted. The charged drop can then be sorted by activating deflection plates (not shown) to deflect the drop into a vessel such as a collection tube or a multi- well or microwell sample plate where a well or microwell can be associated with drops of particular interest. As shown in **FIG. 6A,** the drops can be collected in a drain receptacle 638.

A detection system 616 (e.g., a drop boundary detector) serves to automatically determine the phase of a drop drive signal when a particle of interest passes the monitored area 611. An exemplary drop boundary detector is described in U.S. Pat. No. 7,679,039, which is incorporated herein by reference in its entirety. The detection system 616 allows the instrument to accurately calculate the place of each detected particle in a drop. The detection system 616 can feed into an amplitude signal 620 and/or phase 618 signal, which in turn feeds (via amplifier 622) into an amplitude control circuit 626 and/or frequency control circuit 624. The amplitude control circuit 626 and/or frequency control circuit 624, in turn, controls the drop formation transducer 602. The amplitude control circuit 626 and/or frequency control circuit 624 can be included in a control system.

In some implementations, sort electronics (e.g., the detection system 616, the detection station 614 and a processor 640) can be coupled with a memory configured to store the detected events and a sort decision based thereon. The sort decision can be included in the event data for a particle. In some implementations, the detection system 616 and the detection station 614 can be implemented as a single detection unit or communicatively coupled such that an event measurement can be collected by one of the detection system 616 or the detection station 614 and provided to the non-collecting element.

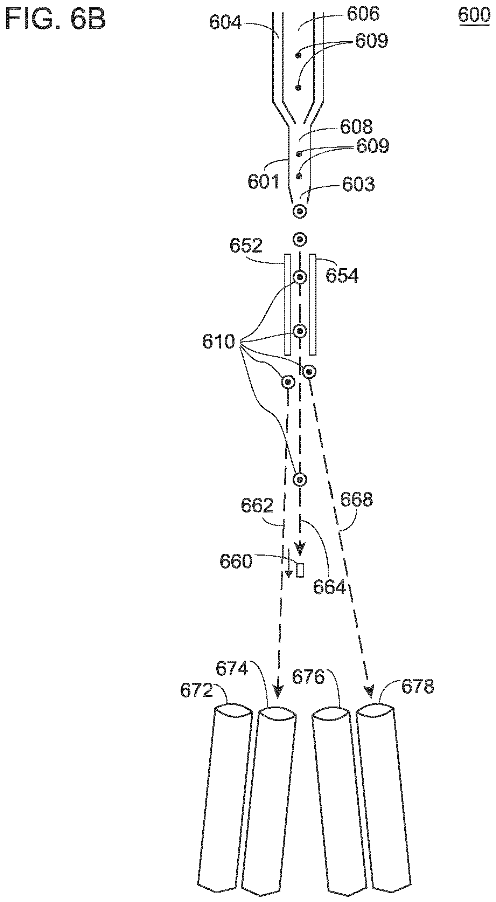

**FIG. 6B** is a schematic drawing of a particle sorter system, in accordance with one embodiment presented herein. The particle sorter system 600 shown in **FIG. 6B,** includes deflection plates 652 and 654, according to embodiments. A charge can be applied via a stream-charging wire in a barb. This creates a stream of droplets 610 containing particles 610 for analysis. The particles can be illuminated with one or more light sources (e.g., lasers) to generate light scatter and fluorescence information. The information for a particle is analyzed such as by sorting electronics or other detection system (not shown in FIG. 6B). The deflection plates 652 and 654 can be independently controlled to attract or repel the charged droplet to guide the droplet toward a destination collection receptacle (e.g., one of 672, 674, 676, or 678). As shown in **FIG. 6B,** the deflection plates 652 and 654 can be controlled to direct a particle along a first path 662 toward the receptacle 674 or along a second path 668 toward the receptacle 678. If the particle is not of interest (e.g., does not exhibit scatter or illumination information within a specified sort range), deflection plates may allow the particle to continue along a flow path 664. Such uncharged droplets may pass into a waste receptacle such as via aspirator 670.

The sorting electronics can be included to initiate collection of measurements, receive fluorescence signals for particles, and determine how to adjust the deflection plates to cause sorting of the particles. Example implementations of the embodiment shown in **FIG. 6B** include the BD FACSAria™ line of flow cytometers commercially provided by Becton, Dickinson and Company (Franklin Lakes, NJ).

## METHODS

Aspects of the disclosure also include methods for sorting particles of a sample, such as cells in a biological sample. Methods according to certain embodiments include irradiating a sample containing particles in a flow stream in an interrogation region of a particle sorting module, detecting light (e.g., fluorescent light) from the sample, and sorting the particles of the sample into two or more sample collection containers. In certain embodiments, the sample is a biological sample and methods include sorting and collecting two or more different types of cells.

In some instances, the sample analyzed in the instant methods is a biological sample. The term "biological sample" is used in its conventional sense to refer to a whole organism, plant, fungi or a subset of animal tissues, cells or component parts which may in certain instances be found in blood, mucus, lymphatic fluid, synovial fluid, cerebrospinal fluid, saliva, bronchoalveolar lavage, amniotic fluid, amniotic cord blood, urine, vaginal fluid and semen. As such, a "biological sample" refers to both the native organism or a subset of its tissues as well as to a homogenate, lysate or extract prepared from the organism or a subset of its tissues, including but not limited to, for example, plasma, serum, spinal fluid, lymph fluid, sections of the skin, respiratory, gastrointestinal, cardiovascular, and genitourinary tracts, tears, saliva, milk, blood cells, tumors, organs. Biological samples may be any type of organismic tissue, including both healthy and diseased tissue (e.g., cancerous, malignant, necrotic, etc.). In certain embodiments, the biological sample is a liquid sample, such as blood or derivative thereof, e.g., plasma, tears, urine, semen, etc., where in some instances the sample is a blood sample, including whole blood, such as blood obtained from venipuncture or fingerstick (where the blood may or may not be combined with any reagents prior to assay, such as preservatives, anticoagulants, etc.).

In certain embodiments the source of the sample is a "mammal" or "mammalian", where these terms are used broadly to describe organisms which are within the class Mammalia, including the orders carnivore (e.g., dogs and cats), Rodentia (e.g., mice, guinea pigs, and rats), and primates (e.g., humans, chimpanzees, and monkeys). In some instances, the subjects are humans. The methods may be applied to samples obtained from human subjects of both genders and at any stage of development (i.e., neonates, infant, juvenile, adolescent, adult), where in certain embodiments the human subject is a juvenile, adolescent or adult. While the present disclosure may be applied to samples from a human subject, it is to be understood that the methods may also be carried-out on samples from other animal subjects (that is, in "non-human subjects") such as, but not limited to, birds, mice, rats, dogs, cats, livestock and horses.

Cells of interest may be targeted for characterized according to a variety of parameters, such as a phenotypic characteristic identified via the attachment of a particular fluorescent label to cells of interest. In some embodiments, the system is configured to deflect analyzed droplets that are determined to include a target cell. A variety of cells may be characterized using the subject methods. Target cells of interest include, but are not limited to, stem cells, T cells, dendritic cells, B Cells, granulocytes, leukemia cells, lymphoma cells, virus cells (e.g., HIV cells), NK cells, macrophages, monocytes, fibroblasts, epithelial cells, endothelial cells, and erythroid cells. Target cells of interest include cells that have a convenient cell surface marker or antigen that may be captured or labelled by a convenient affinity agent or conjugate thereof. For example, the target cell may include a cell surface antigen such as CD11b, CD123, CD14, CD15, CD16, CD19, CD193, CD2, CD25, CD27, CD3, CD335, CD36, CD4, CD43, CD45RO, CD56, CD61, CD7, CD8, CD34, CD1c, CD23, CD304, CD235a, T cell receptor alpha/beta, T cell receptor gamma/delta, CD253, CD95, CD20, CD105, CD117, CD120b, Notch4, Lgr5 (N-Terminal), SSEA-3, TRA-1-60 Antigen, Disialoganglioside GD2 and CD71. In some embodiments, the target cell is selected from HIV containing cell, a Treg cell, an antigen-specific T -cell populations, tumor cells or hematopoietic progenitor cells (CD34+) from whole blood, bone marrow or cord blood.

In practicing the subject methods, an amount of an initial fluidic sample is injected into the flow cytometer. The amount of sample injected into the particle sorting module may vary, for example, ranging from 0.001 mL to 1000 mL, such as from 0.005 mL to 900 mL, such as from 0.01 mL to 800 mL, such as from 0.05 mL to 700 mL, such as from 0.1 mL to 600 mL, such as from 0.5 mL to 500 mL, such as from 1 mL to 400 mL, such as from 2 mL to 300 mL and including from 5 mL to 100 mL of sample.

Methods according to embodiments of the present disclosure include counting and optionally sorting labeled particles (e.g., target cells) in a sample. In practicing the subject methods, the fluidic sample including the particles is first introduced into a flow nozzle of the system. Upon exit from the flow nozzle, the particles are passed substantially one at a time through the sample interrogation region where each of the particles is irradiated to a source of light and measurements of light scatter parameters and, in some instances, fluorescent emissions as desired (e.g., two or more light scatter parameters and measurements of one or more fluorescent emissions) are separately recorded for each particle. Depending on the properties of the flow stream being interrogated, 0.001 mm or more of the flow stream may be irradiated with light, such as 0.005 mm or more, such as 0.01 mm or more, such as 0.05 mm or more, such as 0.1 mm or more, such as 0.5 mm or more and including 1 mm or more of the flow stream may be irradiated with light. In certain embodiments, methods include irradiating a planar cross-section of the flow stream in the sample interrogation region, such as with a laser (as described above). In other embodiments, methods include irradiating a predetermined length of the flow stream in the sample interrogation region, such as corresponding to the irradiation profile of a diffuse laser beam or lamp.

In certain embodiments, methods including irradiating the flow stream at or near the flow cell nozzle orifice. For example, methods may include irradiating the flow stream at a position about 0.001 mm or more from the nozzle orifice, such as 0.005 mm or more, such as 0.01 mm or more, such as 0.05 mm or more, such as 0.1 mm or more, such as 0.5 mm or more and including 1 mm or more from the nozzle orifice. In certain embodiments, methods include irradiating the flow stream immediately adjacent to the flow cell nozzle orifice.

In embodiments of the method, detectors, such as photomultiplier tubes (PMT), are used to record light that passes through each particle (in certain cases referred to as forward light scatter), light that is reflected orthogonal to the direction of the flow of the particles through the sensing region (in some cases referred to as orthogonal or side light scatter) and fluorescent light emitted from the particles, if it is labeled with fluorescent marker(s), as the particle passes through the sensing region and is illuminated by the energy source. Each of forward light scatter (FSC), side-scatter (SSC), and fluorescence emissions include a separate parameter for each particle (or each "event"). Thus, for example, two, three or four parameters can be collected (and recorded) from a particle labeled with two different fluorescence markers. The data recorded for each particle is analyzed in real time or stored in a data storage and analysis means, such as a computer, as desired.

In certain embodiments, the particles are detected and uniquely identified by exposing the particles to excitation light and measuring the fluorescence of each particle in one or more detection channels, as desired. Fluorescence emitted in detection channels used to identify the particles and binding complexes associated therewith may be measured following excitation with a single light source, or may be measured separately following excitation with distinct light sources. If separate excitation light sources are used to excite the particle labels, the labels may be selected such that all the labels are excitable by each of the excitation light sources used.

Methods in certain embodiments also include data acquisition, analysis and recording, such as with a computer, wherein multiple data channels record data from each detector for the light scatter and fluorescence emitted by each particle as it passes through the sample interrogation region of the particle sorting module. In these embodiments, analysis includes classifying and counting particles such that each particle is present as a set of digitized parameter values. The subject systems may be set to trigger on a selected parameter in order to distinguish the particles of interest from background and noise. "Trigger" refers to a preset threshold for detection of a parameter and may be used as a means for detecting passage of a particle through the light source. Detection of an event that exceeds the threshold for the selected parameter triggers acquisition of light scatter and fluorescence data for the particle. Data is not acquired for particles or other components in the medium being assayed which cause a response below the threshold. The trigger parameter may be the detection of forward-scattered light caused by passage of a particle through the light beam. The flow cytometer then detects and collects the light scatter and fluorescence data for the particle.

A particular subpopulation of interest is then further analyzed by "gating" based on the data collected for the entire population. To select an appropriate gate, the data is plotted so as to obtain the best separation of subpopulations possible. This procedure may be performed by plotting forward light scatter (FSC) vs. side (i.e., orthogonal) light scatter (SSC) on a two dimensional dot plot. A subpopulation of particles is then selected (i.e., those cells within the gate) and particles that are not within the gate are excluded. Where desired, the gate may be selected by drawing a line around the desired subpopulation using a cursor on a computer screen. Only those particles within the gate are then further analyzed by plotting the other parameters for these particles, such as fluorescence. Where desired, the above analysis may be configured to yield counts of the particles of interest in the sample.

To sort the target droplets containing particles of interest, the analyzed flow stream is subjected to a deflection force by a droplet deflector, i.e., an embodiment of a droplet deflector comprising deflection plates configured for high-angular deflection of a droplet flow stream, as described herein. A voltage is applied to the metallic plates (deflection plates) thereof, and droplets flowing therethrough are accelerated and deflected (i.e., high angular deflection) based on the charge and polarity of the charge of the droplet. The voltage applied to deflector plates to divert charged particles may be 10 mV or more, such as 25 mV or more, such as 50 mV or more, such as 100 mV or more, such as 250 mV or more, such as 500 mV or more, such as 750 mV or more, such as 1000 mV or more, such as 2500 mV or more, such as 5000 mV or more, such as 10000 V or more, such as 15000 V or more, such as 25000 V or more, such as 50000 V or more and including 100000 V or more. In certain embodiments, the voltage applied to the metallic plates is from 0.5 kV to 15 kV, such as from 1 kV to 15 kV, such as from 1.5 kV to 12.5 kV and including from 2 kV to 10 kV. As such, the electric field strength between the deflection plates ranges from 0.1 V/m to $1 \times 10^7$ V/m, such as from 0.5 V/m to $5 \times 10^6$, such as from 1 V/m to $1 \times 10^6$ V/m, such as from 5 V/m to $5 \times 10^5$ V/m, such as from 10 V/m to $1 \times 10^5$ V/m and including from 50 V/m to $5 \times 10^4$ V/m, for example $1 \times 10^5$ V/m to $2 \times 10^6$ V/m.

Where the droplet deflector includes deflection plates with two or more segments, the voltage applied to each segment of the deflection plates may be different, where the voltage applied to each segment of the deflection plates may differ by 0.01 mV or more, such as 0.05 mV or more, such as 0.1 mV or more, such as 0.5 mV or more, such as 1 mV or more, such as 5 mV or more, such as 10 mV or more, such as 25 mV or more, such as 50 mV or more, such as 75 mV or more, such as 100 mV or more, such as 250 mV or more, such as 500 mV or more, such as 750 mV or more, such as 1 V or more, such as 2.5 V or more, such as 5 V or more, such as 10 V or more, such as 25 V or more, such as 50 V or more and including 100 V or more. As such, the electric field strength between each segment of the deflection plates be substantially the same or may differ by 0.001 V/m or more, such as 0.01 V/m or more, such as 0.1 V/m or more, such as 0.5 V/m or more, such as 1 V/m or more, such as 2 V/m or more, such as 5 V/m or more, such as 10 V/m or more and including 25 V/m or more.

In certain embodiments, the system operates to determine a timeslot during which one or more sample collection containers are aligned with the deflected droplet receiving location. In some instances, the deflection signal includes an initial deflection sub-signal and a final deflection sub-signal; and the system operates to produce the deflection signal by sending an initial deflection sub-signal at the beginning of the timeslot that configures the deflector to deflect an analyzed droplet, when present. In certain cases, methods include sending a final deflection sub-signal at the end of the timeslot that configures the droplet deflector not to deflect an analyzed droplet. In some embodiments, methods include sending a final deflection sub-signal after a single analyzed droplet has been deflected during the timeslot, where the final deflection sub-signal configures the droplet deflector not to deflect an analyzed droplet.

Methods of interest may further include employing particles in research, laboratory testing, or therapy. In some embodiments, the subject methods include obtaining individual cells prepared from a target fluidic or tissue biological sample. For example, the subject methods include obtaining cells from fluidic or tissue samples to be used as a research or diagnostic specimen for diseases such as cancer. Likewise, the subject methods include obtaining cells from fluidic or tissue samples to be used in therapy. A cell therapy protocol is a protocol in which viable cellular material including, e.g., cells and tissues, may be prepared and introduced into a subject as a therapeutic treatment. Conditions that may be treated by the administration of the flow cytometrically sorted sample include, but are not limited to, blood disorders, immune system disorders, organ damage, etc.

A typical cell therapy protocol may include the following steps: sample collection, cell isolation, genetic modification, culture, and expansion in vitro, cell harvesting, sample volume reduction and washing, bio-preservation, storage, and introduction of cells into a subject. The protocol may begin with the collection of viable cells and tissues from source tissues of a subject to produce a sample of cells and/or tissues. The sample may be collected via any suitable procedure that includes, e.g., administering a cell mobilizing agent to a subject, drawing blood from a subject, removing bone marrow from a subject, etc. After collecting the sample, cell enrichment may occur via several methods including, e.g., centrifugation based methods, filter based methods, elutriation, magnetic separation methods, fluorescence-activated cell sorting (FACS), and the like. In some cases, the enriched cells may be genetically modified by any convenient method, e.g., nuclease mediated gene editing. The genetically modified cells can be cultured, activated, and expanded in vitro. In some cases, the cells are preserved, e.g., cryopreserved, and stored for future use where the cells are thawed and then administered to a patient, e.g., the cells may be infused in the patient.

Aspects of the disclosure additionally include methods of determining an optimized shape of a deflection plate configured for high-angular deflection of a droplet flow stream. Methods of the disclosure include applying the numerical techniques described herein for simulating a path of a droplet flow stream under the influence of an electric field applied by deflection plates in order to iteratively revise a shape of the deflection plates in one- or two-dimensions. Such methods may be applied to arrive at deflection plates configured for high-angular deflection that minimize a distance between deflected droplets and the deflection plates under certain constraints.

## COMPUTER-CONTROLLED SYSTEMS

Aspects of the present disclosure further include computer-controlled systems for practicing the subject methods, where the systems further include one or more computers for complete automation or partial automation of a system for practicing methods described herein. In some embodiments, systems include a computer having a computer readable storage medium with a computer program stored thereon, where the computer program when loaded on the computer includes instructions for irradiating a sample in a flow stream in the sample interrogation region; algorithm for detecting light from the sample and measuring the detected light at one or more wavelengths and algorithm for sorting particles in the sample by applying a droplet deflection for high-angular deflection of droplets of the flow stream into two or more sample collection containers.

Systems may include a display and operator input device. Operator input devices may, for example, be a keyboard, mouse, or the like. The processing module includes a processor which has access to a memory having instructions stored thereon for performing the steps of the subject methods. The processing module may include an operating system, a graphical user interface (GUI) controller, a system memory, memory storage devices, and input-output controllers, cache memory, a data backup unit, and many other devices. The processor may be a commercially available processor, or it may be one of other processors that are or will become available. The processor executes the operating system and the operating system interfaces with firmware and hardware in a well-known manner, and facilitates the processor in coordinating and executing the functions of various computer programs that may be written in a variety of programming languages, such as Java, Perl, C++, Python, other high level or low level languages, as well as combinations thereof, as is known in the art. The operating system, typically in cooperation with the processor, coordinates and executes functions of the other components of the computer. The operating system also provides scheduling, input-output control, file and data management, memory management, and communication control and related services, all in accordance with known techniques. In some embodiments, the processor includes analog electronics which provide feedback control, such as for example negative feedback control.

The system memory may be any of a variety of known or future memory storage devices. Examples include any commonly available random access memory (RAM), magnetic medium such as a resident hard disk or tape, an optical medium such as a read and write compact disc, flash memory devices, or other memory storage device. The memory storage device may be any of a variety of known or future devices, including a compact disk drive, a tape drive, or a diskette drive. Such types of memory storage devices typically read from, and/or write to, a program storage medium (not shown) such as a compact disc. Any of these program storage media, or others now in use or that may later be developed, may be considered a computer program product. As will be appreciated, these program storage media typically store a computer software program and/or data. Computer software programs, also called computer control logic, typically are stored in system memory and/or the program storage device used in conjunction with the memory storage device.

In some embodiments, a computer program product is described comprising a computer usable medium having control logic (computer software program, including program code) stored therein. The control logic, when executed by the processor the computer, causes the processor to perform functions described herein. In other embodiments, some functions are implemented primarily in hardware using, for example, a hardware state machine. Implementation of the hardware state machine so as to perform the functions described herein will be apparent to those skilled in the relevant arts.

Memory may be any suitable device in which the processor can store and retrieve data, such as magnetic, optical, or solid-state storage devices (including magnetic or optical disks or tape or RAM, or any other suitable device, either fixed or portable). The processor may include a general-purpose digital microprocessor suitably programmed from a computer readable medium carrying necessary program code. Programming can be provided remotely to processor through a communication channel, or previously saved in a computer program product such as memory or some other portable or fixed computer readable storage medium using any of those devices in connection with memory. For example, a magnetic or optical disk may carry the programming, and can be read by a disk writer/reader. Systems of the disclosure also include programming, e.g., in the form of computer program products, algorithms for use in practicing the methods as described above. Programming according to the present disclosure can be recorded on computer readable media, e.g., any medium that can be read and accessed directly by a computer. Such media include, but are not limited to: magnetic storage media, such as floppy discs, hard disc storage medium, and magnetic tape; optical storage media such as CD-ROM; electrical storage media such as RAM and ROM; portable flash drive; and hybrids of these categories such as magnetic/optical storage media.

The processor may also have access to a communication channel to communicate with a user at a remote location. By remote location is meant the user is not directly in contact with the system and relays input information to an input manager from an external device, such as a computer connected to a Wide Area Network ("WAN"), telephone network, satellite network, or any other suitable communication channel, including a mobile telephone (i.e., smartphone).

In some embodiments, systems according to the present disclosure may be configured to include a communication interface. In some embodiments, the communication interface includes a receiver and/or transmitter for communicating with a network and/or another device. The communication interface can be configured for wired or wireless communication, including, but not limited to, radio frequency (RF) communication (e.g., Radio-Frequency Identification (RFID), Zigbee communication protocols, Wi-Fi, infrared, wireless Universal Serial Bus (USB), Ultra Wide Band (UWB), Bluetooth® communication protocols, and cellular communication, such as code division multiple access (CDMA) or Global System for Mobile communications (GSM).

In one embodiment, the communication interface is configured to include one or more communication ports, e.g., physical ports or interfaces such as a USB port, a USB-C port, an RS-232 port, or any other suitable electrical connection port to allow data communication between the subject systems and other external devices such as a computer terminal (for example, at a physician's office or in hospital environment) that is configured for similar complementary data communication.

In one embodiment, the communication interface is configured for infrared communication, Bluetooth® communication, or any other suitable wireless communication protocol to enable the subject systems to communicate with other devices such as computer terminals and/or networks, communication enabled mobile telephones, personal digital assistants, or any other communication devices which the user may use in conjunction.

In one embodiment, the communication interface is configured to provide a connection for data transfer utilizing Internet Protocol (IP) through a cell phone network, Short Message Service (SMS), wireless connection to a personal computer (PC) on a Local Area Network (LAN) which is connected to the internet, or Wi-Fi connection to the internet at a Wi-Fi hotspot.

In one embodiment, the subject systems are configured to wirelessly communicate with a server device via the communication interface, e.g., using a common standard such as 802.11 or Bluetooth® RF protocol, or an IrDA infrared protocol. The server device may be another portable device, such as a smart phone, Personal Digital Assistant (PDA) or notebook computer; or a larger device such as a desktop computer, appliance, etc. In some embodiments, the server device has a display, such as a liquid crystal display (LCD), as well as an input device, such as buttons, a keyboard, mouse or touch-screen.

In some embodiments, the communication interface is configured to automatically or semi-automatically communicate data stored in the subject systems, e.g., in an optional data storage unit, with a network or server device using one or more of the communication protocols and/or mechanisms described above.

Output controllers may include controllers for any of a variety of known display devices for presenting information to a user, whether a human or a machine, whether local or remote. If one of the display devices provides visual information, this information typically may be logically and/or physically organized as an array of picture elements. A graphical user interface (GUI) controller may include any of a variety of known or future software programs for providing graphical input and output interfaces between the system and a user, and for processing user inputs. The functional elements of the computer may communicate with each other via a system bus. Some of these communications may be accomplished in alternative embodiments using network or other types of remote communications. The output manager may also provide information generated by the processing module to a user at a remote location, e.g., over the Internet, phone or satellite network, in accordance with known techniques. The presentation of data by the output manager may be implemented in accordance with a variety of known techniques. As some examples, data may include SQL, HTML or XML documents, email or other files, or data in other forms. The data may include Internet URL addresses so that a user may retrieve additional SQL, HTML, XML, or other documents or data from remote sources. The one or more platforms present in the subject systems may be any type of known computer platform or a type to be developed in the future, although they typically will be of a class of computer commonly referred to as servers. However, they may also be a main-frame computer, a workstation, or other computer type. They may be connected via any known or future type of cabling or other communication system including wireless systems, either networked or otherwise. They may be co-located or they may be physically separated. Various operating systems may be employed on any of the computer platforms, possibly depending on the type and/or make of computer platform chosen. Appropriate operating systems include Windows® NT®, Windows®XP, Windows®7, Windows®8, Windows®10, iOS®, macOS®, Linux®, Ubuntu®, Fedora®, OS/400®, i5/OS®, IBM i®, Android™, SGI IRIX®, Oracle Solaris® and others.

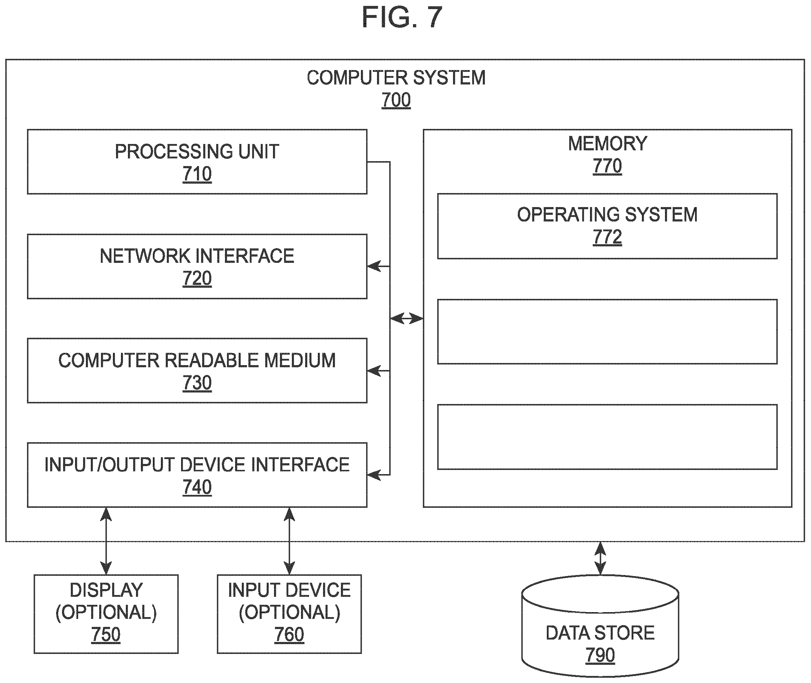

**FIG. 7** depicts a general architecture of an example computing device 700 according to certain embodiments. The general architecture of the computing device 700 depicted in **FIG. 7** includes an arrangement of computer hardware and software components. It is not necessary, however, that all of these generally conventional elements be shown in order to provide an enabling disclosure. As illustrated, the computing device 700 includes a processing unit 710, a network interface 720, a computer readable medium drive 730, an input/output device interface 740, a display 750, and an input device 760, all of which may communicate with one another by way of a communication bus. The network interface 720 may provide connectivity to one or more networks or computing systems. The processing unit 710 may thus receive information and instructions from other computing systems or services via a network. The processing unit 710 may also communicate to and from memory 770 and further provide output information for an optional display 750 via the input/output device interface 740. For example, an analysis software (e.g., data analysis software or program such as FlowJo®) stored as executable instructions in the non-transitory memory of the analysis system can display the flow cytometry event data to a user. The input/output device interface 740 may also accept input from the optional input device 760, such as a keyboard, mouse, digital pen, microphone, touch screen, gesture recognition system, voice recognition system, gamepad, accelerometer, gyroscope, or other input device.

The memory 770 may contain computer program instructions (grouped as modules or components in some embodiments) that the processing unit 710 executes in order to implement one or more embodiments. The memory 770 generally includes RAM, ROM and/or other persistent, auxiliary or non-transitory computer-readable media. The memory 770 may store an operating system 772 that provides computer program instructions for use by the processing unit 710 in the general administration and operation of the computing device 700. Data may be stored in data storage device 790. The memory 770 may further include computer program instructions and other information for implementing aspects of the present disclosure.

## KITS

Aspects of the invention further include kits, where kits include one or more of the droplet deflectors as described herein. In some embodiments, kits include deflection plates configured for high-angular deflection of a droplet flow stream of the subject droplet deflectors, e.g., deflection plates comprising a shape that corresponds to a path of the deflected droplet flow stream, deflection plates configured to apply a deflection force to a flow stream at a plurality of different angles, twisted deflection plates, deflection plates of a droplet deflector configured to apply a constant deflection force to the deflected droplet flow stream from a plurality of different lateral positions, or segmented deflection plates, along with instructions for assembling the droplet deflection and/or the deflection plates thereof. In certain instances, kits can include one or more assay components (e.g., labeled reagents, buffers, etc., such as described above). In some instances, the kits may further include a sample collection device, e.g., a lance or needle configured to prick skin to obtain a whole blood sample, a pipette, etc., as desired.

The various assay components of the kits may be present in separate containers, or some or all of them may be pre-combined. For example, in some instances, one or more components of the kit, e.g., each deflection plate of a pair of deflection plates of a droplet deflector, are present in a sealed pouch, e.g., a sterile foil pouch or envelope.

In addition to the above components, the subject kits may further include (in some embodiments) instructions. These instructions may be present in the subject kits in a variety of forms, one or more of which may be present in the kit. One form in which these instructions may be present is as printed information on a suitable medium or substrate, e.g., a piece or pieces of paper on which the information is printed, in the packaging of the kit, in a package insert, and the like. Yet another form of these instructions is a computer readable medium, e.g., diskette, compact disk (CD), portable flash drive, and the like, on which the information has been recorded. Yet another form of these instructions that may be present is a website address which may be used via the internet to access the information at a removed site.

## UTILITY

The subject droplet deflectors, particle sorting modules, particle sorting systems, methods and computer systems find use in a variety of applications where it is desirable to analyze and sort particle components in a sample in a fluid medium, such as a biological sample. Embodiments of the invention find use where it is desirable to provide a flow cytometer with improved cell sorting accuracy, enhanced particle collection, particle charging efficiency, more accurate particle charging and enhanced particle deflection during cell sorting.

Embodiments of the disclosure find use in applications where cells prepared from a biological sample may be desired for research, laboratory testing or for use in therapy. In some embodiments, the subject methods and devices may facilitate obtaining and/ or analyzing individual cells prepared from a target fluidic or tissue biological sample. For example, the subject methods and systems facilitate obtaining cells from fluidic or tissue samples to be used as a research or diagnostic specimen for diseases such as cancer. Likewise, the subject methods and systems may facilitate obtaining cells from fluidic or tissue samples to be used in therapy.

The following is presented by way of example and not by way of limitation:

## EXPERIMENTAL

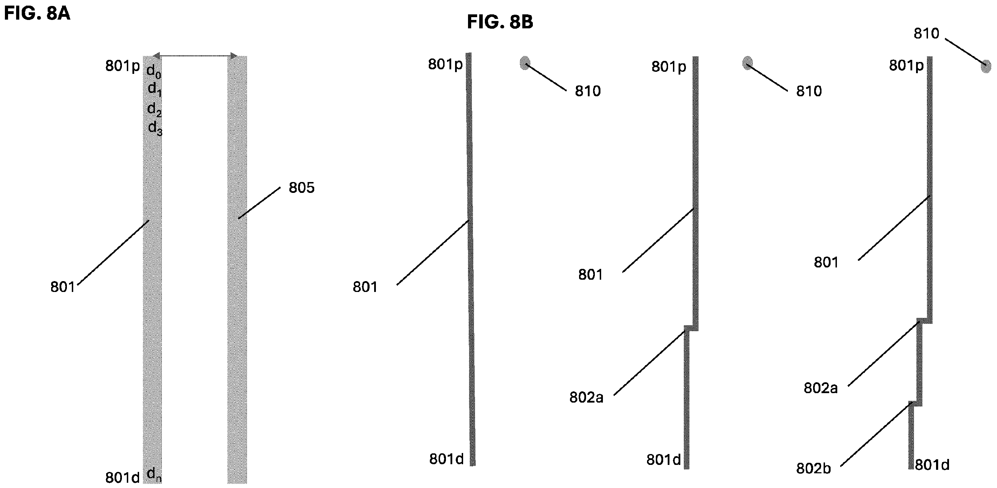

Embodiments of droplet deflectors comprising deflection plates configured for high-angular deflection of a droplet flow stream may comprise deflection plate shapes that are the result of iterative numerical computations. Such a process of iteratively arriving at a shape of a deflector plate is illustrated in **FIGS. 8A-B.** The process starts by assuming, as an initial state, a flat deflector plate 801 (with proximal end 801p and distal end 801d downstream along the longitudinal axis of flow stream from proximal end 801p) of parallel deflector plates, 801, 805.

The length of each deflector plate is constrained at a constant length, with an initial separation between deflector plates that is constant over the length of the deflector plates 801, 805. For modeling purposes, the distance from a droplet present in the middle of the deflector plates to electrode 801 is broken into an array with approximately n = 1000 points, $[d_0, d_1 \ldots d_i \ldots d_n]$. Initial values are selected, in this case with all the $d_i$ = 3 mm. At each of these points, the electric field, acceleration, velocity, and position of the droplet (assumed to emanate from 100 micron nozzle) are calculated. At each position x of a deflected droplet, the distance between the droplet and electrode 801 is compared. Based on such comparison, if $(d_i - x) < \varepsilon$, where $\varepsilon$ is design constraint that is a selected buffer distance between a deflected droplet and deflector plate 801, then $d_i \ldots d_n$ is increased, for example, $d_i \ldots d_n$ is set to $d_i$ plus an arbitrarily small number. The process is then repeated using the new distances between deflector plates until the numerical simulations indicate the droplet falls beyond the length of deflector plate 801, i.e., out of the droplet deflector.

The iterative computation process is illustrated in **FIG. 8B,** which depicts a relative zoomed in section of deflector plate 801. The initial shape of deflector plate 801 is shown on the left and comprises an initial shape as in **FIG. 8A** that is a flat parallel plate (i.e., parallel to deflector plate 805 as well as parallel to the longitudinal axis of the droplet flow stream), i.e., in which each $d_i$ of $d_0 \ldots d_n$ is equal to 3 mm.

After the first iteration of the numerical computation process, the shape of deflector plate 801 is modified as shown in the middle of **FIG. 8B** to include step 802a (i.e., corresponding to a position, at $d_a$, where deflected droplet falls within a distance less than $\varepsilon$ away from deflector plate 801). The shape of deflector plate 801 is modified such that $d_0 \ldots d_{(a-1)}$ are 3 mm and $d_a \ldots d_n$ are 3 mm plus an arbitrary incremental amount, i.e., a step, i.e., a step away from the longitudinal axis of the droplet flow stream.

After the second iteration of the numerical computation process, the shape of deflector plate 801 is further modified as shown on the righthand side of the figure to include step 802b (i.e., corresponding to a second position, at $d_b$, where a deflected droplet falls within a distance less than $\varepsilon$ away from deflector plate 801). The shape of deflector plate 801 is modified such that $d_0 \ldots d_{(a-1)}$ are 3 mm; $d_a \ldots d_{(b-1)}$ are 3 mm plus an arbitrary incremental step; and $d_b \ldots d_n$ are 3 mm plus two arbitrary incremental steps.

As **FIG. 8B** shows a relatively zoomed in section of deflector plate 801, the iterative process would be continued, until the shape of deflector plate 801 is configured such that deflected droplet 810 can be deflected over the entire length of deflector plate 801 without intersecting or colliding with deflector plate 801, at which point the iterative process ends. The final shape of corresponding droplet deflector 805 is taken to be a mirror image of the final shape of droplet deflector 801 (e.g.,

including steps corresponding to steps 802a, 802b).

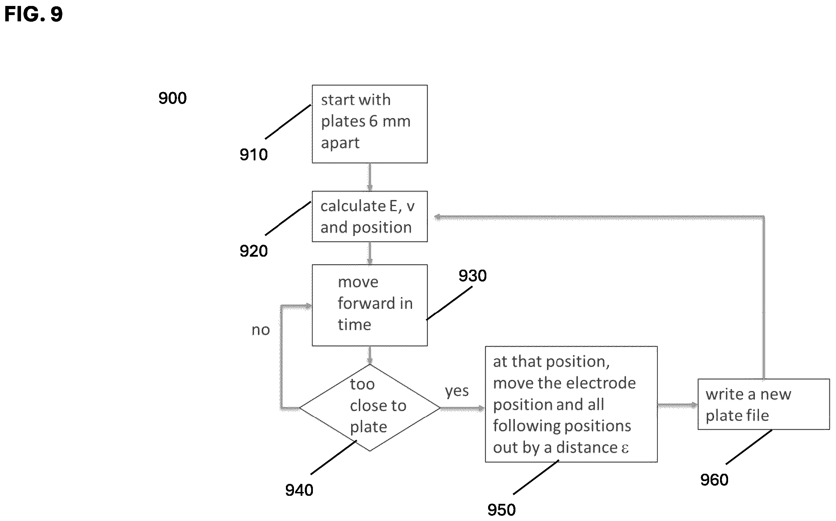

An embodiment of a numerical solution technique for determining a shape of deflection plates configured for high-angular deflection of a droplet flow stream is shown in flow diagram 900 of **FIG. 9.** Flow diagram 900 starts at step 910, in which initial conditions of deflector plates are specified, in this case with flat, parallel deflector plates spaced 6 mm apart from each other as an initial shape that will be adjusted by proceeding through flow diagram 900. After completing step 910, flow diagram 900 moves to step 920.

At step 920, various characteristics of a simulated deflected droplet are calculated at a longitudinal position along the longitudinal axis of the droplet flow stream (corresponding to points in time as a deflected droplet falls). In this case, the electric field between the deflector plates is calculated based on the distance between the deflector plates, the velocity and lateral position of the deflected droplet are calculated. The initial longitudinal position for which such characteristics are calculated corresponds to a longitudinal position of the droplet when it first enters the droplet deflector and corresponds to an initial time (i.e., t = 0). After completing step 920, flow diagram 900 moves to step 930.

At step 930, the simulation moves forward in time such that the deflected droplet advances to a further distal position along the longitudinal axis of the droplet flow stream. After completing step 930, flow diagram 900 moves to step 940.

At step 940, the distance between the droplet and the deflector plate is compared at (i) the time and (ii) corresponding longitudinal position of the deflected droplet, in each case as determined at step 930. In the event the distance between the deflected droplet and the deflection plate is not less than threshold then flow diagram 900 returns to step 930, where time is advanced such that the deflected droplet moves to a further distal longitudinal position along the longitudinal axis of the deflected droplet flow stream. In the event the distance between the deflected droplet and the deflection plate is less than a threshold then flow diagram 900 moves instead to step to step 950.

At step 950, the shape of the deflection plate (i.e., the electrode) is modified such that deflected droplet never travels within the specified threshold distance from the deflection plate. In particular, a step is introduced into the deflection plate such that the distance between the deflected droplet and deflection plate at the longitudinal position assigned at step 930 and all subsequent longitudinal positions along deflection plate is increased by a specified distance. After completing step 950, flow diagram 900 moves to step 960.

At step 960, the updated shape of the deflection plate is recorded by writing, i.e., storing, a new file representing the shape of the deflection plate, e.g., into a computer memory. After completing step 960, flow diagram 900 returns to step 920.

Flow diagram 900 finishes when the deflected droplet has advanced in time and has moved to a longitudinal position such that the deflected droplet exits the droplet deflector. That is, flow diagram 900 ends when the deflected droplet falls a distance along the longitudinal axis that is greater than the longitudinal length of the deflector plate. Upon completing the steps of flow diagram 900, the final shape of the droplet deflector is the shape recorded in the last plate file written the last time flow diagram 900 performed step 960.

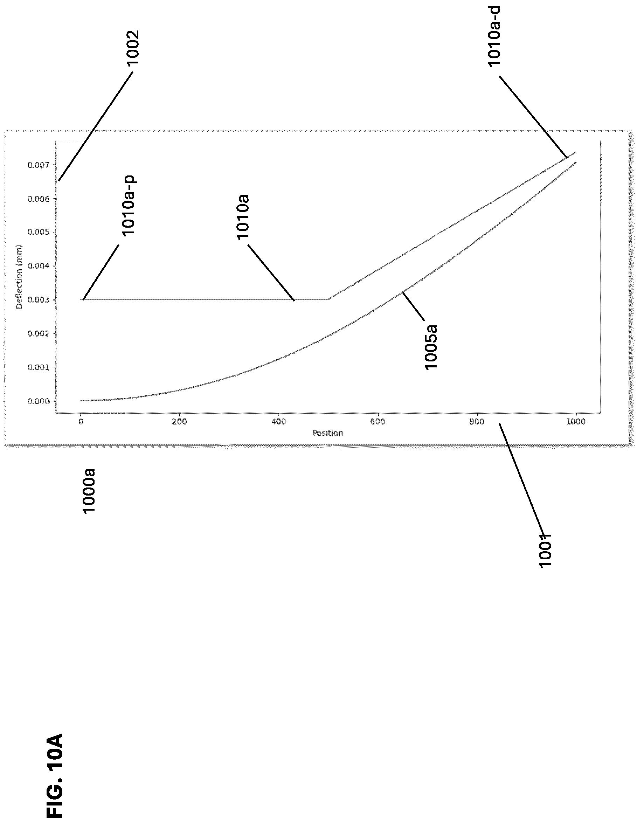

**FIG. 10A** shows results of simulating the path of a deflected droplet under the influence of a deflection plate configured in a traditional shape, i.e., an angled shape. Plot 1000a shows x- and y-axes corresponding to x- and y-positions of droplets of deflected droplet flow stream. In plot 1000a, y-axis 1001 corresponds to position along the longitudinal axis of the droplet flow stream. In plot 1000a, x-axis 1002 corresponds to lateral positions, i.e., deflected positions of the droplet flow stream. Path 1005a of the deflected droplet flow stream is shown falling along the y-axis and also being deflected along the x-axis. The position and shape of deflection plate 1010a is shown on plot 1000a. Deflected droplet flow stream path 1005a is deflected under the influence of deflection plate 1010a. Deflection plate 1010a has proximal end 1010a-p and distal end 1010a-d downstream along the longitudinal axis of flow stream from proximal end 1010a-p. Deflection path 1005a never collides with deflector plate 1010a; however, the shape of deflector plate 1010a is also further away from deflected droplet flow stream path 1005a than it needs to be to prevent a collision (and therefore droplet deflector 1010a is further away from is opposite deflector such that the deflection force applied to droplets is reduced).

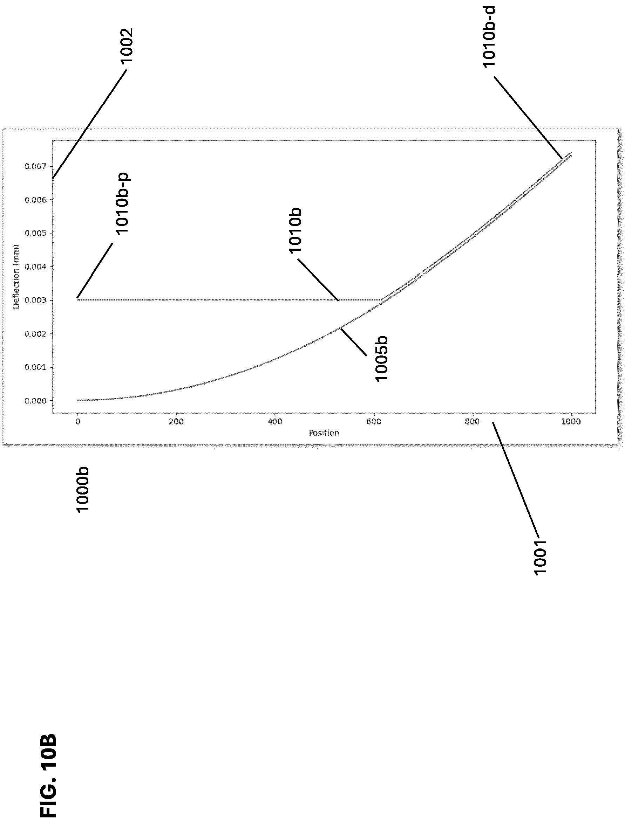

**FIG. 10B** shows results 1000b of numerical simulation to determine a shape of deflector plate 1010b for high-angular deflection, according to embodiments, computed using an embodiment of a method as described in connection with **FIGS. 8A-B and 9,** as well as the path of a deflected droplet 1005b under the influence of deflector plate 1010b. Deflector plate 1010b has proximal end 1010b-p and distal end 1010b-d downstream along the longitudinal axis of flow stream from proximal end 1010b-p. Deflector plate 1010b is shaped to avoid a collision between deflected droplet flow path 1005b and deflector plate 1010b. However, in contrast to deflector plate 1010a, deflector plate 1010b closely mimics the path of deflected droplet flow stream 1005b. In particular, deflector plate 1010b is configured to minimize the distance to deflected droplet flow path 1005b over a length along the longitudinal axis, such that a distance between deflector plate 1010b and its opposing deflection plate (not shown) is also minimized, thereby maximizing the deflection force available to be applied to droplet flow stream 1005b.

In **FIG. 10B,** deflection plate 1010b is shown relative to the deflected droplet flow stream 1005b, which is the path of a 3-nl charged droplet. Deflection plate 1010b (and its corresponding plate (not shown)) are initially (i.e., in a proximal region) straight and parallel, as moving them closer together would cause a dielectric breakdown. Once a droplet of deflected droplet flow stream 1005b gets within 0.1-mm of deflection plate 1010b, the shape of deflection plate 1010b is modified (i.e., revised) such that deflection plate 1010b and its corresponding plate (not show) are moved 0.0175-mm farther apart from each other, and the simulation of the deflected droplet is repeated. After many iterations, the simulation is able to reach the bottom (i.e., distal end 1010b-d) of deflector plate 1010b without violating the 0.1-mm boundary condition around deflector plate 1010b. As required, deflection plate 1010b and its opposite (not shown) now produce an electric field that causes the deflected droplet flow stream to be deflected in a shape that closely mimics the shape of deflection plate 1010b, i.e., such that deflection plate 1010b is configured for high-angular deflection of a droplet flow stream according to an embodiment of the present invention. Such optimization of the shape for high-angular deflection of the droplet flow stream result is approximately 10% more deflection than the traditional electrodes, such as electrode 1010a.

As described herein, one dimensional deflection plates can have the limitation that deflected droplets eventually collide or intersect or hit the surface of the deflection plates. Adjusting the shape of deflection plates by moving the surface of the deflection plate away from the deflected droplets prevents the droplets from hitting the surface, but can also decrease the electric field (and thus deflection force) and the acceleration of the deflected droplet. To address this issue, some embodiments use relatively short, straight plates, in which, at the point at which droplets would intersect the plates, the short, straight plates are ended and, instead, the particle is accelerated in the orthogonal direction by orthogonally oriented deflection plates. In such embodiments, the droplets are deflected in a line, and, for equal electrodes, the line will be 45 degrees with respect to the plates. Other embodiments address this issue by employing helical or twisted deflection plates, as described herein.

The embodiments of numerical methods described in connection with **FIGS. 8-9** and the results presented in **FIG. 10B** relate to optimization of deflection plate shape in one-dimension. Such methods can be extended to optimization of deflection plate shape in two dimensions, such as, for example, deflection plates with a helical configuration, such as deflection plates 121a, 121b of droplet deflector 120. To arrive at an optimized deflection plate shape in two-dimensions, the numerical optimization occurs in an analogous fashion to that of the one-dimensional optimization, e.g., as depicted in **FIGS. 8-9.** To extend such techniques to two-dimensions, however, the two-dimensional techniques further requires keeping track of the angle of the deflection plate (i.e., corresponding to a twist angle or angle around longitudinal axis of the droplet flow stream) in order to calculate the acceleration, velocity, and position in both x- and y- directions (i.e., extending the calculations of step 920 of flow diagram 900 to two-dimensions, in both x- and y-directions). In the event a deflected droplet position is determined to be within a threshold distance, e.g., 0.1 mm, from the deflection plate, the shape of the distal portions of the deflection plate are moved, i.e., spaced out, by a nominal amount (i.e., analogous to steps 940 and 950 of flow diagram 900) and the simulation is restarted. The numerical calculation process repeats until a final shape is achieved when a deflected droplet exits the droplet deflector (i.e., the simulation arrives at a shape for which deflected droplet travels the longitudinal length of the deflection plate without colliding with the deflection plate).

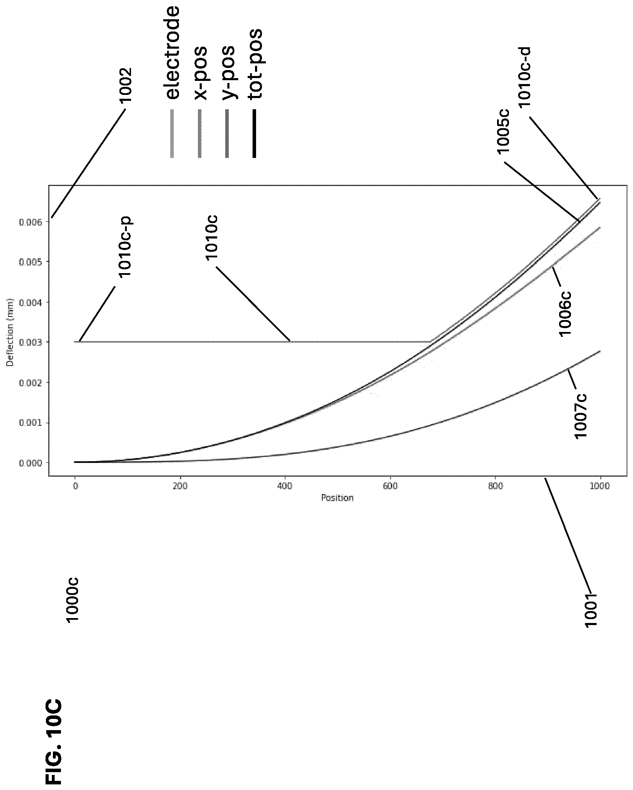

**FIG. 10C** depicts the results of applying an embodiment of a numerical calculation technique to arrive at a two-dimensional shape of a deflection plate 1010c. Deflector plate 1010c has proximal end 1010c-p and distal end 1010c-d downstream along the longitudinal axis of flow stream from proximal end 1010c-p. Displacement in both the x- and y-directions are shown in the same plot 1000c. A one-dimensional representation of the final electrode shape 1010c is shown relative to x-axis deflected droplet displacement 1006c (i.e., droplet deflection along an x-axis that is orthogonal to the droplet flow stream) and to y-axis deflected droplet displacement 1007c (i.e., droplet deflection along a y-axis that is orthogonal to the droplet flow stream and also orthogonal to the x-axis). Total droplet displacement 1005c is also shown on plot 1000c and represents a total distance of the deflected droplet flow stream from the longitudinal axis of the droplet flow stream. Results presented on plot 1000c show that a net effect of twisting the deflection plates in two-dimensions according to embodiments is that the deflection plates remain straight for longer (i.e., the top (proximal region), straight portion of deflection plate shape 1010c is longer than the top (i.e., proximal region), straight portion of 1010b), resulting in a higher exit velocity and displacement position of particles deflected by deflector 1010c relative to those deflected by deflection plates 1010a or 1010b. The net effect is an increase in the deflection of the deflected droplet flow stream 1005c. Additionally, the velocity of deflected droplets in both the x- and y-directions are equal, so the deflection is at a 45-degree angle from the initial orientation of the electrode. These simulated results are confirmed experimentally using prototype deflection plates, as described herein.

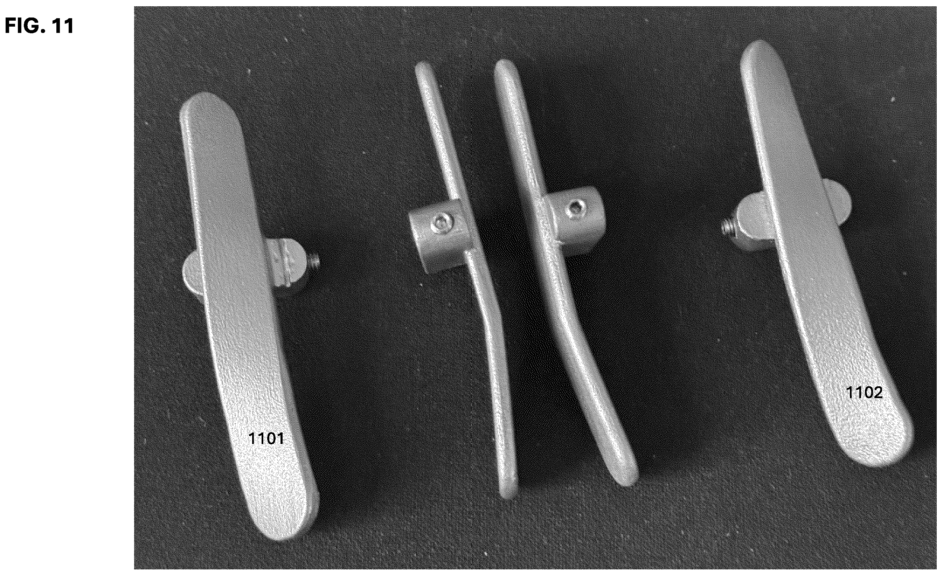

**FIG. 11** shows an embodiment of twisted deflection plates 1101, 1102 according to embodiments of the present invention. Deflection plates 1101, 1102 are twisted deflection plates for high-angular droplet deflection. The shape of deflection plates 1101, 1102 was arrived at using numerical computations for two-dimensional deflection plates, such as that described in connection with **FIG. 10C.** That is, the amount and degree of "twist" of deflection plates 1101, 1102, and the distance between deflection plates 1101, 1102, is computed as distances that the deflection plates should be spaced apart to avoid a deflected droplet colliding with the deflection plate. The shape of a single deflection plate 1101 can be simulated using the techniques described herein, e.g., in connection with **FIG. 10C,** and the shape of opposite deflection plate 1102 is determined to be a mirror image of the calculated shape of deflection plate 1101.

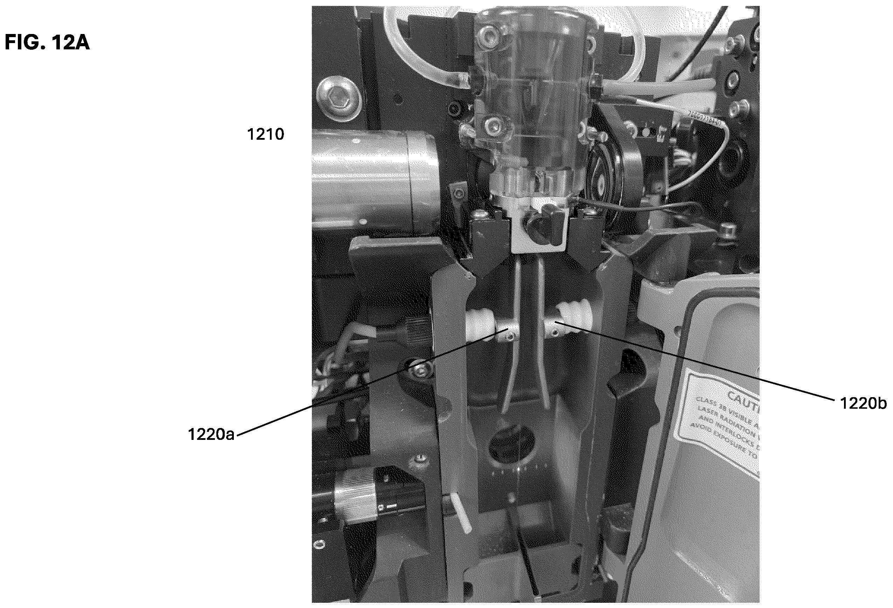

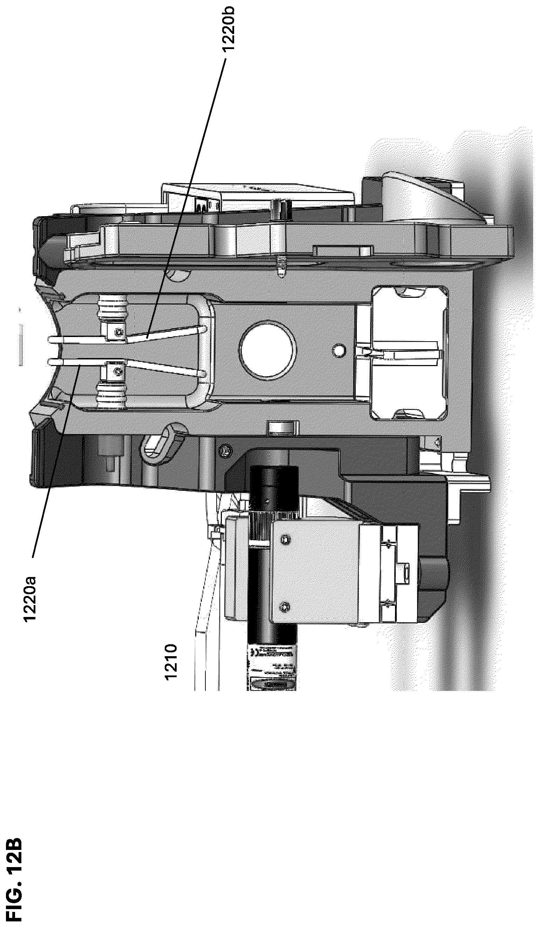

**FIG. 12A** shows an experimental set up for evaluating deflection plates of droplet deflectors that are embodiments of the present invention against traditional angled deflector plates. Experimental setup 1210 includes aspects of a flow cytometric particle sorter with deflection plates 1220a, 1220b. Experimental setup 1210 allows deflection plates that are traditional, angled deflection plates, such as deflection plate 105, to be replaced with deflection plates that are embodiments of the present invention configured for high-angular droplet deflection. Experimental setup 1210 was used to baseline 2-, 4-, and 6-way deflections with a 100-micron nozzle at three different deflection plate voltages (i.e., three different voltages applied to deflection plates 1220a, 1220b). Due to constraints of experimental setup 1210 (e.g., that deflected droplets of embodiments of the present invention may overshoot available receiving wells), the drop charge on deflected droplets was used as a proxy for total deflection distance. Experimental setup 1210 was used in such manner to compare performance of traditional deflection plates against deflection plates that are embodiments of the present invention optimized in one-dimension and against embodiments of the present invention that are optimized in two-dimensions. **FIG. 12B** shows another view of experimental setup 1210 with traditional, angled deflection plates 1220a, 1220b, installed.

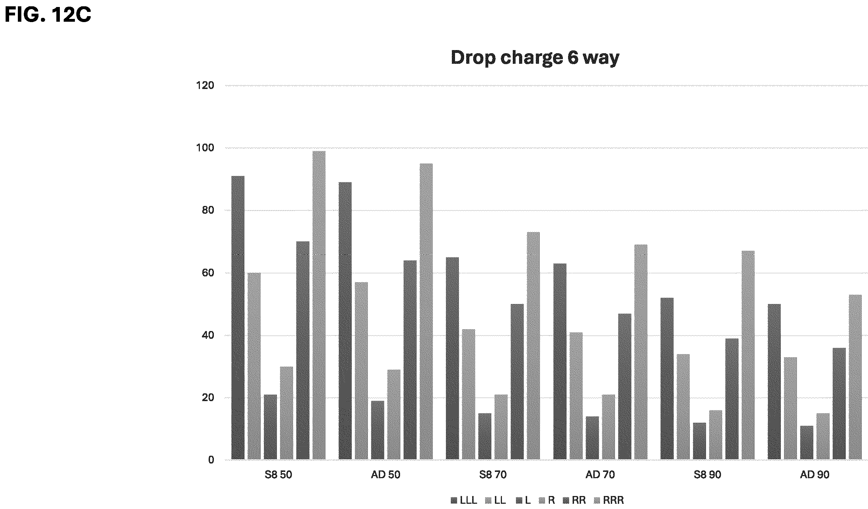

**FIG. 12C** shows experimental results of droplet deflection comparing traditional, angled deflection plates (e.g., deflection plates 111a, 111b) ("S8") versus one-dimensional high-angular deflection plates (e.g., deflection plates 1005b) ("AD") according to an embodiment of the present invention. As seen in the results, across all deflection positions (LLL, LL, L, R, RR, RRR), and for each of the three voltages applied to deflection plates ("S8 50" and "AD 50"; "S8 70" and "AD 70"; "S8 90" and "AD 90") there is a decrease in the drop charge required to hit the different displacement positions (i.e., for a droplet to be displaced into tubes or wells of a multi-well plate). The effect is a reduction in droplet charge of approximately 5-10%. Such results indicate improved performance of the prototype embodiments of the present invention optimized in one-dimension against traditional, angled deflection plates.

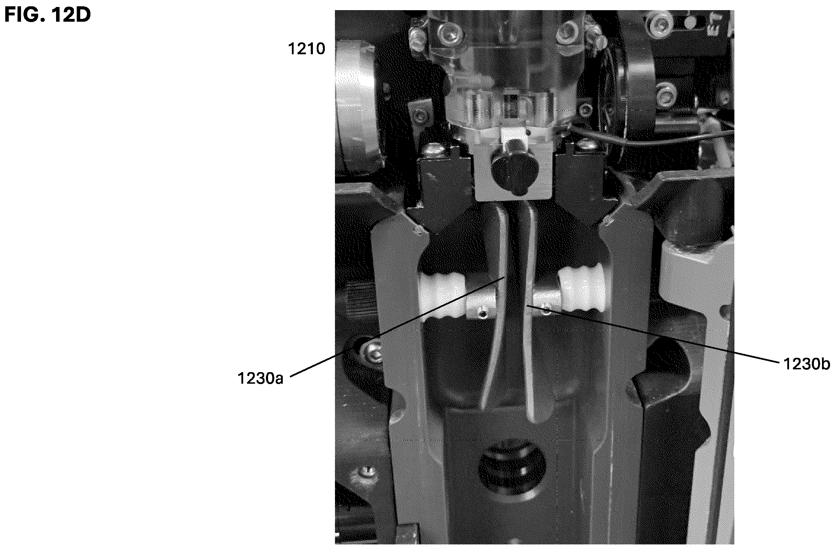

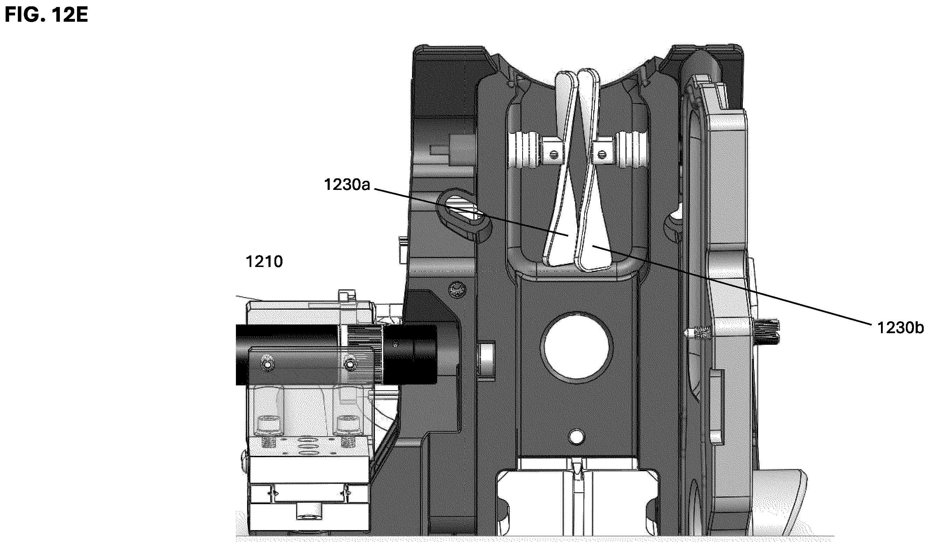

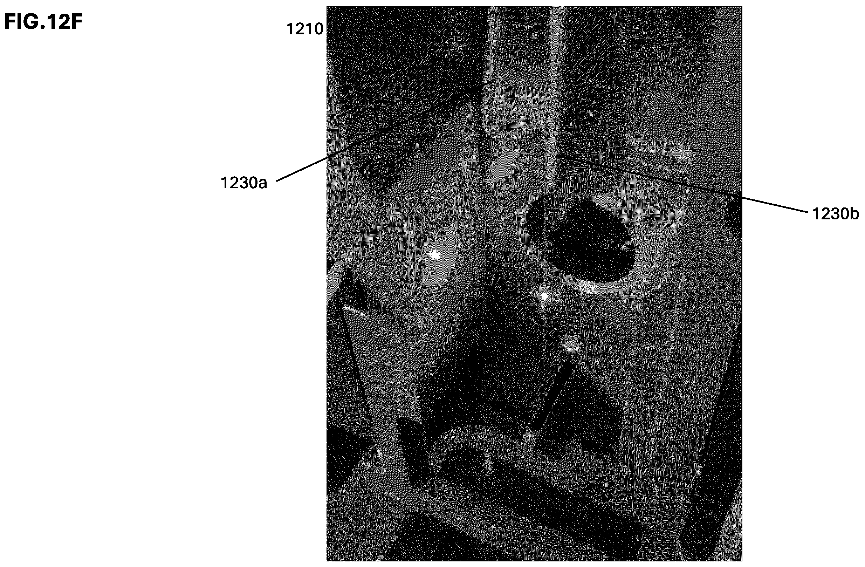

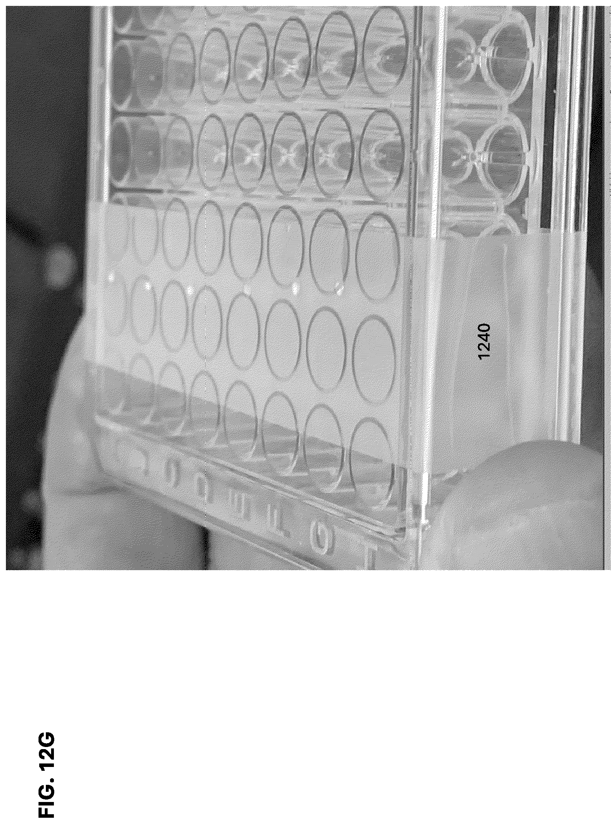

**FIG. 12D** shows another view of experimental set up 1210 in this case with deflection plates 1230a, 1230b that are embodiments of the present invention with a twisted shape optimized in two dimensions. **FIG. 12E** shows another view of experimental set up 1210 with deflection plates 1230a, 1230b that are embodiments of the present invention with a twisted shape optimized in two dimensions. **FIG. 12F** shows another view of experimental set up 1210 with deflection plates 1230a, 1230b that are embodiments of the present invention with a twisted shape optimized in two dimensions. **FIG. 12G** shows an exemplary multi-well plate 1240 used in connection with experimental set up 1210 for receiving deflected droplets at different positions.

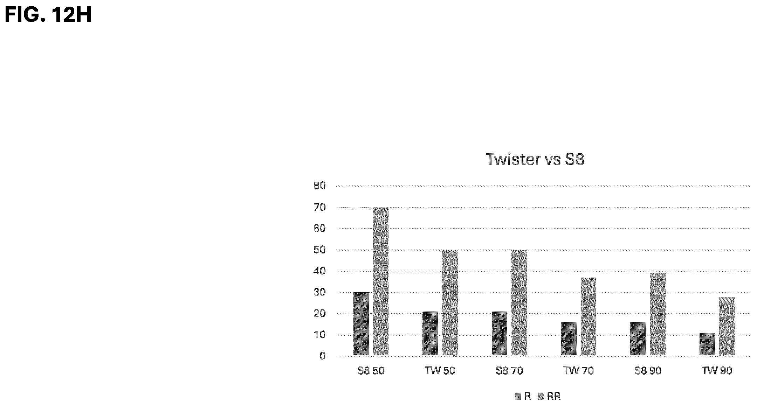

**FIG. 12H** shows experimental results of droplet deflection comparing traditional, angled deflection plates (e.g., deflection plates 111a, 111b) ("S8") versus two-dimensional high-angular deflection plates that are twisted (e.g., deflection plates 1005c) ("Twister" or "TW") according to embodiments of the present invention. As seen in the results, across deflection positions (R, RR), and for each of the three voltages applied to deflection plates ("S8 50" and "TW 50"; "S8 70" and "TW 70"; "S8 90" and "TW 90") there is a decrease in the drop charge required to hit the different displacement positions (i.e., for a droplet to be displaced into tubes or wells of a multi-well plate). Such results indicate still improved performance of the prototype embodiments of twisted, high-angular deflection plates according to embodiments of the present invention optimized in two-dimensions as compared with traditional, angled deflection plates.

Notwithstanding the appended claims, the invention may also be defined by the following clauses:

1. A droplet deflector comprising deflection plates configured for high-angular deflection of a droplet flow stream.

2. The droplet deflector of clause 1, wherein the deflection plates comprise a shape that corresponds to a path of the deflected droplet flow stream.

3. The droplet deflector of any of the previous clauses, wherein the deflection plates comprise a shape that minimizes a distance between the deflected droplet flow stream and a deflection plate of the droplet deflector over a length of the deflection plate.

4. The droplet deflector of any of the previous clauses, wherein the deflection plates comprise a shape that maintains a constant buffer between the deflected droplet flow stream and a deflection plate of the droplet deflector over a length of the deflection plate.

5. The droplet deflector of any of the previous clauses, wherein the deflection plates are configured to maximize a deflection force applied to the droplet flow stream at a plurality of different downstream positions.

6. The droplet deflector of any of the previous clauses, wherein the deflection plates comprise a shape configured to prevent a deflected droplet stream from colliding with the deflection plates.

7. The droplet deflector of any of the previous clauses, wherein the droplet deflector is configured such that the distance between the deflection plates minimally-increases at each of a plurality of downstream positions.

8. The droplet deflector of any of the previous clauses, wherein the deflection plates comprise nonlinear surfaces.

9. The droplet deflector of any of the previous clauses, wherein the shape of the deflection plates comprises a spline.

10. The droplet deflector of any of the previous clauses, wherein the deflection plates are configured to apply a deflection force to a flow stream at a plurality of different angles.

11. The droplet deflector of clause 10, wherein the deflection plates are twisted.

12. The droplet deflector according to clause 11, wherein the twist angle is 5 degrees or more.

13. The droplet deflector according to clause 11, wherein the twist angle is 30 degrees or more.

14. The droplet deflector according to clause 11, wherein the twist angle is 60 degrees or more.

15. The droplet deflector according to any of the previous clauses, wherein the droplet deflector is configured to apply a constant deflection force to the deflected droplet flow stream from a plurality of different lateral positions.

16. The droplet deflector of clause 15, wherein different lateral positions comprise different distances from a center line of the deflection plates.

17. The droplet deflector of any of any of clauses 15 to 16, wherein the distance between the deflector plates increases at different downstream positions.

18. The droplet deflector of any of clauses 15 to 17, wherein the droplet deflector is configured such that different voltage potentials are applied to the deflector plates at different downstream positions.

19. The droplet deflector of any of clauses 15 to 18, wherein each deflector plate comprises two or more segments.

20. The droplet deflector of clause 19, wherein the segmented deflector plates comprise aligned, corresponding segments.

21. The droplet deflector of any of clauses 19 to 20, wherein each segment is electrically isolated from other segments.

22. The droplet deflector of any of clauses 19 to 21, wherein the droplet deflector is configured such that each segment of the segmented deflector plates is configured to receive a different electric potential.

23. The droplet deflector of any of clauses 19 to 22, wherein each segment is separated from other segments by an electrical insulator.

24. The droplet deflector of any of clauses 19 to 23, wherein the droplet deflector further comprises:a plurality of resistors connected in series.

25. The droplet deflector of clause 24, wherein each resistor of the plurality of resistors is electrically connected to a segment of a segmented deflector plate.

26. The droplet deflector of any of clauses 19 to 25, wherein each segment is separated from other segments by a resistive dielectric.

27. The droplet deflector of any of clauses 19 to 26, wherein each segment of the segmented deflector plates is configured to receive an electric potential at a distinct magnitude based on distances between corresponding segments of the electrodes.

28. The droplet deflector of any of clauses 19 to 27, further comprising:a voltage source operably connected to a deflector plate.

29. The droplet deflector of clause 28, further comprising:a voltage divider comprising a plurality of resistors connected in series.

30. The droplet deflector of clause 29, wherein each resistor of the plurality of resistors is electrically connected to a segment of a segmented deflector plate

31. The droplet deflector of any of the previous clauses, wherein the droplet deflector is configured to apply a deflection force sufficient to deflect a particle by 5 mm or more.

32. The droplet deflector of any of the previous clauses, wherein the droplet deflector is configured to apply a deflection force sufficient to deflect a particle by 15 mm or more.

33. The droplet deflector of any of the previous clauses, wherein the droplet deflector is configured to apply a deflection force sufficient to deflect a particle by 30 mm or more.

34. The droplet deflector of any of the previous clauses, wherein the droplet deflector is configured to apply a deflection force sufficient to deflect a particle from 5 mm to 100 mm.

35. The droplet deflector of any of the previous clauses, wherein the droplet deflector is configured to apply a deflection force sufficient to deflect a particle by 30 degrees or more.

36. The droplet deflector of any of the previous clauses, wherein the droplet deflector is configured to deposit droplets of the deflected droplet flow stream into each well within a row of a 96-well plate.

37. The droplet deflector according to any of the previous clauses, wherein the deflector plates comprise metallic plates.

38. The droplet deflector according to any of the previous clauses, wherein the deflector plates have a width from 0.5 mm to 10 mm.

39. The droplet deflector according to any of the previous clauses, wherein the deflector plates have a length from 1 mm to 25 mm.

40. The droplet deflector according to any of the previous clauses, wherein the deflector plates are spaced apart by 1 mm or more.

41. The droplet deflector according to any of the previous clauses, wherein the deflector plates are spaced apart by 3 mm or more.

42. The droplet deflector according to any of the previous clauses, wherein the electrodes are spaced apart by a distance of from 1 mm to 10 mm.

43. The droplet deflector according to any of the previous clauses, wherein the deflector plates are rectangular.

44. A particle sorting module comprising:_a flow cell nozzle comprising a nozzle orifice configured to flow a flow stream through the flow cell nozzle; and a droplet deflector comprising deflection plates configured for high-angular deflection of flow stream droplets according to any of clauses 1 to 43.

45. The particle sorting module according to clause 44, further comprising a sample interrogation region in fluid communication with the flow cell nozzle orifice.

46. The particle sorting module according to clause 45, further comprising a cuvette positioned in the sample interrogation region.

47. The particle sorting module according to any of clauses 44 to 46, further comprising a sample inlet in fluid communication with the flow cell nozzle.

48. The particle sorting module according to any of clauses 44 to 47, further comprising a sheath fluid inlet in fluid communication with the flow cell nozzle.

49. The particle sorting module according to any of clauses 44 to 48, further comprising two or more sample collection containers.

50. A system comprising:

a light source;
a flow cell nozzle comprising a nozzle orifice configured to flow a flow stream through the flow cell nozzle;
a detector for measuring one or more wavelengths of light; and
a droplet deflector comprising deflection plates configured for high-angular deflection of flow stream droplets according to any of clauses 1 to 43.

51. The system according to clause 50, further comprising: a sample interrogation region in fluid communication with flow cell nozzle orifice.

52. The system according to any of clauses 50 to 51, further comprising: a cuvette positioned in the sample interrogation region.

53. The system according to any of clauses 50 to 52, further comprising: a sample inlet in fluid communication with the flow cell nozzle.

54. The system according to any of clauses 50 to 53, further comprising: a sheath fluid inlet in fluid communication with the flow cell nozzle.

55. The system according to any of clauses 50 to 54, further comprising: two or more sample collection containers.

56. The system according to any of clauses 50 to 55, wherein the light source is a laser.

57. A method comprising:

irradiating with a light source a sample comprising particles in a flow stream;

detecting one or more wavelengths of light; and

sorting the particles in the sample into two or more sample collection containers with a droplet deflector comprising deflection plates configured for high-angular deflection of flow stream droplets according to any of clauses 1 to 43.

58. The method according to clause 57, wherein the deflection plates comprise segmented deflection plates.

59. The method according to clause 58, further comprising applying distinct voltage potentials to different segments of the segmented deflection plates.

60. The method according to any of clauses 57 to 59, wherein the flow stream is irradiated by a laser.

Although the foregoing disclosure has been described in some detail by way of illustration and example for purposes of clarity of understanding, it is readily apparent to those of ordinary skill in the art in light of the teachings of this disclosure that some changes and modifications may be made thereto without departing from the spirit or scope of the appended claims.

Accordingly, the preceding merely illustrates the principles of the disclosure. It will be appreciated that those skilled in the art will be able to devise various arrangements which, although not explicitly described or shown herein, embody the principles of the disclosure and are included within its spirit and scope. Furthermore, all examples and conditional language recited herein are principally intended to aid the reader in understanding the principles of the disclosure and the concepts contributed by the inventors to furthering the art, and are to be construed as being without limitation to such specifically recited examples and conditions. Moreover, all statements herein reciting principles, aspects, and embodiments of the disclosure as well as specific examples thereof, are intended to encompass both structural and functional equivalents thereof. Additionally, it is intended that such equivalents include both currently known equivalents and equivalents developed in the future, i.e., any elements developed that perform the same function, regardless of structure. Moreover, nothing disclosed herein is intended to be dedicated to the public regardless of whether such disclosure is explicitly recited in the claims.

The scope of the present disclosure, therefore, is not intended to be limited to the exemplary embodiments shown and described herein. Rather, the scope and spirit of present disclosure is embodied by the appended claims. In the claims, 35 U.S.C. §112(f) or 35 U.S.C. §112(6) is expressly defined as being invoked for a limitation in the claim only when the exact phrase "means for" or the exact phrase "step for" is recited at the beginning of such limitation in the claim; if such exact phrase is not used in a limitation in the claim, then 35 U.S.C. § 112 (f) or 35 U.S.C. §112(6) is not invoked.

**Claims**

1. A droplet deflector comprising deflection plates configured for high-angular deflection of a droplet flow stream.

2. The droplet deflector of claim 1, wherein the deflection plates comprise a shape that corresponds to a path of the deflected droplet flow stream.

3. The droplet deflector of any of the previous claims, wherein the deflection plates comprise a shape that minimizes a distance between the deflected droplet flow stream and a deflection plate of the droplet deflector over a length of the deflection plate.

4. The droplet deflector of any of the previous claims, wherein the deflection plates comprise a shape that maintains a constant buffer between the deflected droplet flow stream and a deflection plate of the droplet deflector over a length of the deflection plate.

5. The droplet deflector of any of the previous claims, wherein the deflection plates are configured to maximize a deflection force applied to the droplet flow stream at a plurality of different downstream positions.

6. The droplet deflector of any of the previous claims, wherein the deflection plates comprise a shape configured to prevent a deflected droplet stream from colliding with the deflection plates.

7. The droplet deflector of any of the previous claims, wherein the droplet deflector is configured such that the distance between the deflection plates minimally-increases at each of a plurality of downstream positions.

8. The droplet deflector of any of the previous claims, wherein the deflection plates comprise nonlinear surfaces.

9. The droplet deflector of any of the previous claims, wherein the shape of the deflection plates comprises a spline.

10. The droplet deflector of any of the previous claims, wherein the deflection plates are configured to apply a deflection force to a flow stream at a plurality of different angles.

11. The droplet deflector according to any of the previous claims, wherein the droplet deflector is configured to apply a constant deflection force to the deflected droplet flow stream from a plurality of different lateral positions.

**12.** The droplet deflector of claim 11, wherein different lateral positions comprise different distances from a center line of the deflection plates.

**13.** The droplet deflector of any of claims 11 to 12, wherein each deflector plate comprises two or more segments.

**14.** A system comprising:

a light source;
a flow cell nozzle comprising a nozzle orifice configured to flow a flow stream through the flow cell nozzle;
a detector for measuring one or more wavelengths of light; and
a droplet deflector comprising deflection plates configured for high-angular deflection of flow stream droplets according to any of claims 1 to 13.

**15.** A method comprising:

irradiating with a light source a sample comprising particles in a flow stream;
detecting one or more wavelengths of light; and
sorting the particles in the sample into two or more sample collection containers with a droplet deflector comprising deflection plates configured for high-angular deflection of flow stream droplets according to any of claims 1 to 13.

EP 4 664 092 A1

**FIG. 1A**

PRIOR ART

FIG. 1B

PRIOR ART

105

**FIG. 1C**

EP 4 664 092 A1

**FIG. 1E**

199

120

121b-p

121a-p

121a

121b

198

121a-d

121b-d

FIG. 1F

FIG. 1G

FIG. 2

# FIG. 3

# FIG. 3 (Cont.)

# FIG. 4

401

FLUIDICS SYSTEM
**402**

CONTROL SYSTEM
**406**

**405**

**403**

**407**

DETECTION
STATION
**408**

DETECTION SYSTEM
**404**

**409**

FIG. 5

# FIG. 6A

FIG. 6B

604

606

609

608

609

601

603

600

652

654

610

662

668

660

664

674

676

672

678

# FIG. 7

COMPUTER SYSTEM
700

PROCESSING UNIT
710

NETWORK INTERFACE
720

COMPUTER READABLE MEDIUM
730

INPUT/OUTPUT DEVICE INTERFACE
740

MEMORY
770

OPERATING SYSTEM
772

DISPLAY
(OPTIONAL)
750

INPUT DEVICE
(OPTIONAL)
760

DATA STORE
790

EP 4 664 092 A1

**FIG. 8A**

801p $d_0$
$d_1$
$d_2$
$d_3$

805

801

801d $d_n$

**FIG. 8B**

801p

810

801

801d

801p

810

801

802a

801d

810

801p

801

802a

802b

801d

EP 4 664 092 A1

**FIG. 9**

900

910 → start with plates 6 mm apart

920 → calculate E, v and position

930 → move forward in time

no

940 → too close to plate

yes

950 → at that position, move the electrode position and all following positions out by a distance ε

960 → write a new plate file

**FIG. 10A**

EP 4 664 092 A1

**FIG. 10B**

EP 4 664 092 A1

**FIG. 10C**

**FIG. 11**

FIG. 12A

1210

1220b

1220a

FIG. 12B

1220a

1210

1220b

EP 4 664 092 A1

FIG. 12C

**Drop charge 6 way**

EP 4 664 092 A1

FIG. 12D

FIG. 12E

1230a

1210

1230b

FIG.12F

FIG. 12G

1240

**FIG. 12H**

Twister vs S8

Europäisches
Patentamt
European
Patent Office
Office européen
des brevets

# EUROPEAN SEARCH REPORT

**Application Number**

EP 25 18 0961

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/326138 A1 (HOWELL WESLEY [US]) 13 October 2022 (2022-10-13) * paragraph [0060] * * paragraph [0099] - paragraph [0102] * * paragraph [0119] - paragraph [0123] * * figures 5, 7A, 7B * | 1-15 | INV. G01N15/1404 G01N15/1492 |
| X | US 2015/285726 A1 (TANASE HIRONOBU [JP] ET AL) 8 October 2015 (2015-10-08) * paragraph [0041] * * paragraph [0084] - paragraph [0086] * * figures 1, 5A * | 1-15 | |
| X | US 2021/325290 A1 (KANDA MASAHIKO [JP]) 21 October 2021 (2021-10-21) * paragraph [0070] - paragraph [0077] * * figures 1, 9 * | 1-15 | |
| X | US 2020/132590 A1 (DEMBSKI KYLE [US] ET AL) 30 April 2020 (2020-04-30) * paragraph [0031] - paragraph [0033] * * paragraph [0049] - paragraph [0050] * * paragraph [0089] - paragraph [0090] * * figure 1 * | 1-15 | **TECHNICAL FIELDS SEARCHED (IPC)** G01N B01L |
| X | US 10 605 713 B2 (BECTON DICKINSON CO [US]) 31 March 2020 (2020-03-31) * column 9, line 35 - column 10, line 14 * * column 24, line 8 - line 34 * * figure 2 * | 1-15 | |

The present search report has been drawn up for all claims

| Place of search | Date of completion of the search | Examiner |
|---|---|---|
| The Hague | 9 October 2025 | Liefrink, Feike |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 18 0961

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-2025

| Patent document cited in search report | | Publication date | Patent family member(s) | | Publication date |
|---|---|---|---|---|---|
| US 2022326138 A1 | | 13-10-2022 | CN | 117015695 A | 07-11-2023 |
| | | | EP | 4314765 A1 | 07-02-2024 |
| | | | JP | 2024512528 A | 19-03-2024 |
| | | | US | 2022326138 A1 | 13-10-2022 |
| | | | WO | 2022203792 A1 | 29-09-2022 |
| US 2015285726 A1 | | 08-10-2015 | CN | 104755906 A | 01-07-2015 |
| | | | EP | 2917718 A1 | 16-09-2015 |
| | | | JP | 6065527 B2 | 25-01-2017 |
| | | | JP | 2014095595 A | 22-05-2014 |
| | | | US | 2015285726 A1 | 08-10-2015 |
| | | | WO | 2014073156 A1 | 15-05-2014 |
| US 2021325290 A1 | | 21-10-2021 | JP | 7058448 B2 | 22-04-2022 |
| | | | JP | WO2020039540 A1 | 10-08-2021 |
| | | | US | 2021325290 A1 | 21-10-2021 |
| | | | WO | 2020039540 A1 | 27-02-2020 |
| US 2020132590 A1 | | 30-04-2020 | CN | 112805548 A | 14-05-2021 |
| | | | EP | 3874254 A1 | 08-09-2021 |
| | | | JP | 7495400 B2 | 04-06-2024 |
| | | | JP | 2022505446 A | 14-01-2022 |
| | | | JP | 2024079740 A | 11-06-2024 |
| | | | US | 2020132590 A1 | 30-04-2020 |
| | | | US | 2021262916 A1 | 26-08-2021 |
| | | | WO | 2020091866 A1 | 07-05-2020 |
| US 10605713 B2 | | 31-03-2020 | US | 2018095022 A1 | 05-04-2018 |
| | | | WO | 2018067209 A1 | 12-04-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 63658746
- US 9423353 B
- US 9784661 B
- US 9983132 B
- US 10006852 B
- US 10036699 B
- US 10078045 B
- US 10222316 B
- US 10288546 B
- US 10324019 B
- US 10408758 B
- US 10451538 B
- US 10620111 B
- US 10684211 B
- US 10845295 B
- US 10935482 B
- US 10935485 B
- US 11105728 B
- US 11280718 B
- US 11327016 B
- US 11366052 B
- US 11371937 B
- US 11692926 B
- US 11630053 B
- US 11774343 B
- US 11940369 B
- US 11946851 B
- US 20220341838
- US 10663476 B
- US 10613017 B
- US 10605713 B
- US 10585031 B
- US 10578542 B
- US 10578469 B
- US 10481074 B
- US 10302545 B
- US 10145793 B
- US 10113967 B
- US 9952076 B
- US 9933341 B
- US 9726527 B
- US 9453789 B
- US 9200334 B
- US 9097640 B
- US 9095494 B
- US 9092034 B
- US 8975595 B
- US 8753573 B
- US 8233146 B
- US 8140300 B
- US 7544326 B
- US 7201875 B
- US 7129505 B
- US 6821740 B
- US 6813017 B
- US 6809804 B
- US 6372506 B
- US 5700692 A
- US 5643796 A
- US 5627040 A
- US 5620842 A
- US 5602039 A
- US 4987086 A
- US 4498766 A
- US 537103
- US 18657618 B
- US 18657623 B
- US 18657633 B
- US 20170299493 A
- US 20200256781 A
- US 20210404943 A
- US 7679039 B

### Non-patent literature cited in the description

- Flow Cytometry: A Practical Approach. Oxford Univ. Press, 1997
- Flow Cytometry Protocols. Methods in Molecular Biology No. 91. Humana Press, 1997
- Practical Flow Cytometry. Wiley-Liss, 1995
- **VIRGO et al.** *Ann Clin Biochem.*, January 2012, vol. 49, 17-28
- **LINDEN**. *Semin Throm Hemost.*, October 2004, vol. 30 (5), 502-11
- **ALISON et al.** *J Pathol*, December 2010, vol. 222 (4), 335-344
- **HERBIG et al.** *Crit Rev Ther Drug Carrier Syst.*, 2007, vol. 24 (3), 203-255
- **DIEBOLD et al.** *Nature Photonics*, 2013, vol. 7 (10), 806-810
- **SCHRAIVOGEL et al.** High-speed fluorescence image-enabled cell sorting. *Science*, 2022, vol. 375 (6578), 315-320